# EUROPEAN PATENT APPLICATION

(11) **EP 4 304 270 A1**
(43) Date of publication of application: **10.01.2024**
(21) Application number: 22774184.0
(22) Date of filing: 21.03.2022
(51) Int. Cl.: H04W 72/04

(54) **COMMUNICATION METHOD AND APPARATUS**

(30) Priority: 23.03.2021 CN 202110310453; 11.05.2021 CN 202110512598
(71) Applicant: Huawei Technologies Co., Ltd., Longgang Shenzhen, Guangdong 518129 (CN)
(72) Inventor: WANG, Feng, Shenzhen, Guangdong 518129 (CN); GUO, Zhiheng, Shenzhen, Guangdong 518129 (CN); QU, Bingyu, Shenzhen, Guangdong 518129 (CN); ZHANG, Xu, Shenzhen, Guangdong 518129 (CN); LONG, Yi, Shenzhen, Guangdong 518129 (CN)
(74) Representative: Pfenning, Meinig & Partner mbB
(86) International application number: PCT/CN2022/081985
(87) International publication number: WO 2022/199525

(57) **Abstract**

A communication method and apparatus are provided. LTE may obtain first information, where the first information is used for scheduling the UE for performing first transmission on a first uplink carrier, the first transmission is N-port transmission, and N is a positive integer. The UE may further perform the first transmission on the first uplink carrier, where when the first transmission is performed, a quantity of ports supported by the UE for uplink transmission on the first uplink carrier is M, and M is determined based on second information of at least one uplink carrier of the UE. This helps a base station and the UE have a consistent understanding of a state after the UE performs radio frequency chain switching each time, and can improve uplink transmission performance.

## Description

### CROSS-REFERENCE TO RELATED APPLICATIONS

This application claims priority to Chinese Patent Application No. 202110310453.4, filed with the China National Intellectual Property Administration on March 23, 2021 and entitled "COMMUNICATION METHOD AND APPARATUS", and claims priority to Chinese Patent Application No. 202110512598.2, filed with the China National Intellectual Property Administration on May 11, 2021 and entitled "COMMUNICATION METHOD AND APPARATUS", which are incorporated herein by reference in their entireties.

### TECHNICAL FIELD

This application relates to the field of communication technologies, and in particular, to a communication method and apparatus.

### BACKGROUND

At present, with continuous increase of intelligent terminal users, a user service volume and a data throughput increase continuously. This imposes a higher requirement on a communication rate. To satisfy a requirement for larger downlink and uplink peak rates, a larger transmission bandwidth needs to be provided. Because a continuous spectrum with a large bandwidth is scarce, a carrier aggregation solution is provided in LTE. Carrier aggregation (carrier aggregation, CA) is to aggregate two or more component carriers (component carrier, CC) to support a larger transmission bandwidth.

If a terminal has two radio frequency chains on one carrier, a quantity of ports that are allowed by the terminal for uplink transmission on the carrier may be 2 or 1, or a maximum quantity of ports that are supported by the terminal for uplink transmission on the carrier is 2. In a CA scenario, if a terminal supports an aggregation mode of two uplink carriers, there are a total of two radio frequency chains, and the terminal supports dynamic uplink radio frequency chain switching on the two uplink carriers, the terminal may dynamically allocate the radio frequency chains on the two carriers. For example, the terminal performs sending on a carrier X by using one radio frequency chain, and performs sending on a carrier Y by using the other radio frequency chain; or the terminal does not perform sending on a carrier X, and performs sending on a carrier Y by using the two radio frequency chains. In addition, if a quantity of radio frequency chains of the terminal on a carrier is x, a quantity of ports allowed by the terminal for performing uplink transmission on the carrier is a positive integer less than or equal to x.

For a terminal that supports dynamic uplink radio frequency chain switching, when a quantity of radio frequency chains of the terminal on a carrier is less than a quantity of ports for uplink transmission that is scheduled by a base station and that is to be performed by the terminal on the carrier, the terminal needs to switch a radio frequency chain on another carrier to the carrier, to support the uplink transmission scheduled by the base station. Currently, the terminal determines a specific quantity of radio frequency chains to be switched to the carrier, and the base station side is unaware of the quantity of radio frequency chains switched by the terminal. This causes inconsistency of uplink transmission configurations on the base station side and the terminal side, and consequently uplink transmission performance is degraded.

### SUMMARY

Embodiments of this application provide a communication method and apparatus, to improve uplink communication performance.

According to a first aspect, a communication method is provided. The method may be performed by a terminal apparatus. The method includes: The terminal apparatus may obtain first information, where the first information is used for scheduling the terminal apparatus for performing first transmission on a first uplink carrier, the first transmission is N-port transmission, and N is a positive integer. The terminal apparatus may further perform the first transmission on the first uplink carrier, where when the first transmission is performed, a quantity of ports supported by the terminal apparatus for uplink transmission on the first uplink carrier is M, M is determined based on second information of at least one uplink carrier of the terminal apparatus, the at least one uplink carrier includes the first uplink carrier, and M≥N, where the second information includes at least one of priority indication information, a bandwidth, a frequency, a path loss, a slot length, an identifier of a cell corresponding to the uplink carrier, a number, information indicating whether the cell corresponding to the uplink carrier is a special cell, information indicating that the cell corresponding to the uplink carrier is a physical uplink control channel secondary cell, information indicating that the cell corresponding to the uplink carrier is a secondary cell other than the physical uplink control channel secondary cell, information indicating whether the cell corresponding to the uplink carrier is a secondary cell, or information indicating whether a position of uplink radio frequency switching time is configured on the uplink carri er.

According to the method, a base station and the terminal apparatus may determine, based on the second information of the at least one uplink carrier of the terminal apparatus, a quantity of radio frequency chains of the terminal apparatus on the first uplink carrier in the first transmission on the first uplink carrier, so that the base station and the terminal apparatus have a consistent understanding of a state after the terminal apparatus performs radio frequency chain switching each time, and uplink transmission performance can be improved.

According to a second aspect, a communication method is provided. The method may be performed by a base station. The method includes: The base station may send first information, where the first information is used for scheduling a terminal apparatus for performing first transmission on a first uplink carrier, the first transmission is N-port transmission, and N is a positive integer. The base station may further determine M based on second information of at least one uplink carrier of the terminal apparatus, where M is a quantity of ports that are supported by the terminal apparatus for uplink transmission on the first uplink carrier when the first transmission is performed, and M≥N, where the second information includes at least one of priority indication information, a bandwidth, a frequency, a path loss, a slot length, an identifier of a cell corresponding to the uplink carrier, a number, information indicating whether the cell corresponding to the uplink carrier is a special cell, information indicating that the cell corresponding to the uplink carrier is a physical uplink control channel secondary cell, information indicating that the cell corresponding to the uplink carrier is a secondary cell other than the physical uplink control channel secondary cell, or information indicating whether the cell corresponding to the uplink carrier is a secondary cell.

For beneficial effects of the second aspect, refer to the beneficial effects shown in the first aspect.

According to a third aspect, a communication method is provided. The method may be performed by a terminal apparatus. The method includes: The terminal apparatus may obtain first information, where the first information is used for scheduling the terminal apparatus for performing first transmission on a first uplink carrier, the first transmission is N-port transmission, and N is a positive integer. The terminal apparatus may further perform the first transmission on the first uplink carrier, where when the first transmission is performed, a quantity of ports that are supported by the terminal apparatus for uplink transmission on the first uplink carrier is N, and the terminal apparatus does not support N-port transmission on the first uplink carrier before a start moment of first duration, where the first duration is an uplink switching gap, the start moment of the first duration is between a moment at which the terminal apparatus obtains the first information and a moment at which the first transmission is started, and is after a first moment, the first moment is an end moment of the last uplink transmission before the first transmission is performed, and an end moment of the first duration is before the moment at which the first transmission is started.

According to the method, a base station and the terminal apparatus may determine a quantity of radio frequency chains of the terminal apparatus on the first uplink carrier in the first transmission on the first uplink carrier, so that the base station and the terminal apparatus have a consistent understanding of a state after the terminal apparatus performs radio frequency chain switching each time, and uplink transmission performance can be improved.

According to a fourth aspect, a communication method is provided. The method may be performed by a base station. The method includes: The base station may send first information, where the first information is used for scheduling a terminal apparatus for performing first transmission on a first uplink carrier, the first transmission is N-port transmission, and N is a positive integer. The base station may further determine, when the first transmission is performed, that a quantity of ports that are supported by the terminal apparatus for uplink transmission on the first uplink carrier is N, and the terminal apparatus does not support N-port transmission on the first uplink carrier before a start moment of first duration, where the first duration is an uplink switching gap, the start moment of the first duration is between a moment at which the terminal apparatus obtains the first information and a moment at which the first transmission is started, and is after a first moment, the first moment is an end moment of the last uplink transmission before the first transmission is performed, and an end moment of the first duration is before the moment at which the first transmission is started. A carrier on which the last uplink transmission and the first transmission are located may be a same uplink carrier, or may belong to a same first uplink carrier set.

For beneficial effects of the fourth aspect, refer to the beneficial effects shown in the third aspect.

With reference to the first aspect and the third aspect:

In a possible design, a quantity of uplink carriers that are of the terminal apparatus and that support uplink radio frequency chain switching is greater than 2, and the terminal apparatus may further determine a third uplink carrier of the terminal apparatus based on the second information, where a quantity of radio frequency chains that are allowed to be switched on the third uplink carrier is not zero. The terminal apparatus may further skip performing uplink sending on the first uplink carrier and the third uplink carrier in the first duration, where the first duration is the uplink switching gap.

In this design, the terminal apparatus may determine an uplink carrier whose radio frequency chain is to be switched to the first uplink carrier. This helps the base station and the terminal apparatus have a consistent understanding of a state after the terminal apparatus performs radio frequency chain switching each time, and can further improve the uplink transmission performance.

In a possible design, uplink carriers that are of the terminal apparatus and that support uplink radio frequency chain switching further include a fourth uplink carrier; and when K+L<P is satisfied, the terminal apparatus may further skip performing uplink sending on the fourth uplink carrier in the first duration. P is a minimum quantity of radio frequency chains required by the terminal apparatus for performing first transmission, K≥M, L is the quantity of radio frequency chains that are allowed to be switched on the third uplink carrier, K is a quantity of ports supported by the terminal apparatus for uplink transmission on the first uplink carrier at a second moment, and the second moment includes any moment between the first moment and the start moment of the first duration.

In a possible design, when a first condition is satisfied, and the first transmission is performed, the quantity of ports supported by the terminal apparatus for uplink transmission on the first uplink carrier is M. The first condition includes: M1+N>Z, where M1 is a total quantity of radio frequency chains of uplink carriers of the terminal apparatus in a first uplink carrier set other than the first uplink carrier at the second moment, Z is a total quantity of radio frequency chains of the terminal apparatus, and the first uplink carrier set is a set of carriers supporting the uplink radio frequency chain switching.

In a possible design, when a first condition is satisfied, and the first transmission is performed, the quantity of ports supported by the terminal apparatus for uplink transmission on the first uplink carrier is M. The first condition includes: M2<N, where M2 is a quantity of ports supported by the terminal apparatus for uplink transmission on the first uplink carrier at the second moment, and M2 is a positive integer.

With reference to any one of the first aspect to the fourth aspect and the possible designs thereof:

In a possible design, M may be further determined based on a quantity of ports through which the terminal apparatus performs second transmission, and the second transmission is transmission performed by the terminal apparatus on at least one uplink carrier other than the first uplink carrier. According to this design, an operation state of the terminal apparatus can be further properly determined, and the uplink transmission performance can be improved.

In a possible design, the second information may include the number; and when a number of the first uplink carrier is 1 and a number of a second uplink carrier of the terminal apparatus is greater than 1, M is a maximum quantity of ports supported by the terminal apparatus for uplink transmission on the first uplink carrier;
the second information may include the information indicating whether the cell corresponding to the uplink carrier is the special cell and the information indicating whether the cell corresponding to the uplink carrier is the secondary cell; and when a cell corresponding to the first uplink carrier is a special cell, and a cell corresponding to a second uplink carrier of the terminal apparatus is a secondary cell, M is a maximum quantity of ports supported by the terminal apparatus for uplink transmission on the first uplink carrier;
the second information may include the information indicating that the cell corresponding to the uplink carrier is the physical uplink control channel secondary cell and the information indicating that the cell corresponding to the uplink carrier is the secondary cell other than the physical uplink control channel secondary cell; and when a cell corresponding to the first uplink carrier is a physical uplink control channel secondary cell, and a cell corresponding to a second uplink carrier of the terminal apparatus is a secondary cell other than the physical uplink control channel secondary cell, M is a maximum quantity of ports supported by the terminal apparatus for uplink transmission on the first uplink carrier;
the second information may include the priority indication information; and when a priority indicated by priority indication information of the first uplink carrier is higher than a priority indicated by priority indication information of a second uplink carrier, M is a maximum quantity of ports supported by the terminal apparatus for uplink transmission on the first uplink carrier; or
the second information includes the information indicating whether the position of the uplink radio frequency switching time is configured on the uplink carrier; and when the first uplink carrier is a carrier for which no position of uplink radio frequency switching time is configured, M is a maximum quantity of ports supported by the terminal apparatus for uplink transmission on the first uplink carrier, where
uplink carriers that are of the terminal apparatus and that support uplink radio frequency chain switching are the first uplink carrier and the second uplink carrier, the terminal apparatus does not perform transmission on the first uplink carrier and the second uplink carrier simultaneously, and the maximum quantity of ports supported by the terminal apparatus for uplink transmission on the first uplink carrier is the same as a maximum quantity of ports supported by the terminal apparatus for uplink transmission on the second uplink carrier.

In this design, an operation state of the terminal apparatus can be further properly determined, so that more radio frequency chains are switched to a higher-priority uplink carrier, and the uplink transmission performance is improved.

In a possible design, the second information may include the number; and when a number of the first uplink carrier is 1 and a number of a second uplink carrier of the terminal apparatus is greater than 1, M is further determined based on the quantity of ports for the second transmission;
the second information may include the information indicating whether the cell corresponding to the uplink carrier is the special cell and the information indicating whether the cell corresponding to the uplink carrier is the secondary cell; and when a cell corresponding to the first uplink carrier is a special cell, and a cell corresponding to a second uplink carrier of the terminal apparatus is a secondary cell, M is further determined based on the quantity of ports for the second transmission;
the second information may include the information indicating that the cell corresponding to the uplink carrier is the physical uplink control channel secondary cell and the information indicating that the cell corresponding to the uplink carrier is the secondary cell other than the physical uplink control channel secondary cell; and when a cell corresponding to the first uplink carrier is a physical uplink control channel secondary cell, and a cell corresponding to a second uplink carrier of the terminal apparatus is a secondary cell other than the physical uplink control channel secondary cell, M is a maximum quantity of ports supported by the terminal apparatus for uplink transmission on the first uplink carrier;
the second information includes the priority indication information; and when a priority indicated by priority indication information of the first uplink carrier is higher than a priority indicated by priority indication information of a second uplink carrier, M is further determined based on the quantity of ports for the second transmission; or
the second information includes the information indicating whether the position of the uplink radio frequency switching time is configured on the uplink carrier; and when the first uplink carrier is a carrier for which no position of uplink radio frequency switching time is configured, M is further determined based on the quantity of ports for the second transmission, where
uplink carriers that are of the terminal apparatus and that support uplink radio frequency chain switching are the first uplink carrier and the second uplink carrier, the second transmission is transmission performed by the terminal apparatus on the second uplink carrier, a time domain resource for the second transmission overlaps a time domain resource for the first transmission, and a maximum quantity of ports supported by the terminal apparatus for uplink transmission on the first uplink carrier is the same as a maximum quantity of ports supported by the terminal apparatus for uplink transmission on the second uplink carrier.

In this design, the operation state of the terminal apparatus can be further properly determined, so that more radio frequency chains are switched to a higher-priority uplink carrier, and the uplink transmission performance is improved.

In a possible design, the second information may include the number; and when a number of a second uplink carrier of the terminal apparatus is 1 and a number of the first uplink carrier is greater than 1, M is equal to N;
the second information may include the information indicating whether the cell corresponding to the uplink carrier is the special cell and the information indicating whether the cell corresponding to the uplink carrier is the secondary cell; and when a cell corresponding to the first uplink carrier is a secondary cell, and a cell corresponding to a second uplink carrier of the terminal apparatus is a special cell, M is equal to N;
the second information may include the information indicating that the cell corresponding to the uplink carrier is the physical uplink control channel secondary cell and the information indicating that the cell corresponding to the uplink carrier is the secondary cell other than the physical uplink control channel secondary cell; and when a cell corresponding to the first uplink carrier is a secondary cell other than a physical uplink control channel secondary cell, and a cell corresponding to a second uplink carrier of the terminal apparatus is the physical uplink control channel secondary cell, M is equal to N;
the second information includes the priority indication information; and when a priority indicated by priority indication information of the first uplink carrier is not higher than a priority indicated by priority indication information of a second uplink carrier, M is equal to N; or
the second information includes the information indicating whether the position of the uplink radio frequency switching time is configured on the uplink carrier; and when the first uplink carrier is a carrier for which a position of uplink radio frequency switching time is configured, M is equal to N, where
uplink carriers that are of the terminal apparatus and that support uplink radio frequency chain switching are the first uplink carrier and the second uplink carrier, and a maximum quantity of ports supported by the terminal apparatus for uplink transmission on the first uplink carrier is the same as a maximum quantity of ports supported by the terminal apparatus for uplink transmission on the second uplink carrier.

In a possible design, the first transmission is 1-port transmission, and the first uplink carrier is a carrier without a position of uplink radio frequency switching time. In this case, during the 1-port transmission, an operation state of the LTE is that the LTE supports 2-port transmission on the first uplink carrier, that is, M is equal to the maximum quantity of ports (2 ports) supported for uplink transmission on the first uplink carrier. In addition, during the first transmission, the second transmission is not performed on another uplink carrier. Optionally, transmission before the first transmission is 2-port transmission on another uplink carrier; or is 1-port transmission on another uplink carrier, and the UE supports 2-port transmission on the another uplink carrier.

In a possible design, the first transmission is 1-port transmission, and the first uplink carrier is a carrier on which a position of uplink radio frequency switching time is located. In this case, during the 1-port transmission, an operation state of the LTE is that the UE supports 1-port transmission on the first uplink carrier (in other words, the LTE does not support 2-port transmission on the first uplink carrier), that is, M is equal to a quantity 1 of ports for the first transmission (that is, M=N). In addition, during the first transmission, the second transmission is not performed on another uplink carrier. Optionally, transmission before the first transmission is 2-port transmission on another uplink carrier, or 1-port transmission on another uplink carrier and the LTE supports 2-port transmission on the another uplink carrier.

According to a fifth aspect, an embodiment of this application provides a communication apparatus, to implement the method implemented by the terminal apparatus in any one of the first aspect or the possible designs of the first aspect, or implement the method implemented by the terminal apparatus in any one of the third aspect or the possible designs of the third aspect. The apparatus includes a corresponding unit or component configured to perform the foregoing method. The unit included in the apparatus may be implemented by software and/or hardware. The apparatus may be, for example, a network device; or a chip, a chip system, a module, or a processor that can support a network device in implementing the foregoing method.

For example, the communication apparatus may include modular components such as a transceiver module and a processing module. The modules may perform corresponding functions of the terminal apparatus in any one of the first aspect or the possible designs of the first aspect, or perform corresponding functions of the network device in any one of the third aspect or the possible designs of the third aspect. The transceiver unit may include a receiving module or a receiving unit configured to perform a receiving function, and a sending module or a sending unit configured to perform a sending function. When the communication apparatus is a terminal, the transceiver unit may be a sending unit when performing a sending step, and the transceiver unit may be a receiving unit when performing a receiving step. The transceiver unit may be replaced by a transceiver, the sending unit may be replaced by a transmitter, and the receiving unit may be replaced by a receiver. The transceiver unit may include an antenna, a radio frequency circuit, and the like. The processing unit may be a processor, for example, a baseband chip. When the communication apparatus is a component that has the functions of the terminal apparatus, the transceiver unit may be a radio frequency unit, and the processing unit may be a processor. When the communication apparatus is a chip system, the transceiver unit may be an input/output interface of the chip system, and the processing unit may be a processor of the chip system, for example, a central processing unit (central processing unit, CPU).

The transceiver unit may be configured to perform a receiving action and/or a sending action performed by the terminal apparatus in any one of the first aspect or the possible designs of the first aspect, or perform a corresponding function of the network device in any one of the third aspect or the possible designs of the third aspect. The processing unit may be configured to perform a control action other than receiving and sending performed by the terminal apparatus in any one of the first aspect or the possible designs of the first aspect, for example, processing information to be sent by the transceiver unit and/or processing information received by the transceiver unit, or perform a corresponding function of the network device in any one of the third aspect or the possible designs of the third aspect.

When performing the action performed by the terminal apparatus in the first aspect, the transceiver unit may obtain first information, where the first information is used for scheduling the terminal apparatus for performing first transmission on a first uplink carrier, the first transmission is N-port transmission, and N is a positive integer. The transceiver unit may further perform the first transmission on the first uplink carrier, where when the first transmission is performed, a quantity of ports supported by the terminal apparatus for uplink transmission on the first uplink carrier is M, M is determined based on second information of at least one uplink carrier of the terminal apparatus, the at least one uplink carrier includes the first uplink carrier, and M≥N, where the second information includes at least one of priority indication information, a bandwidth, a frequency, a path loss, a slot length, an identifier of a cell corresponding to the uplink carrier, a number, information indicating whether the cell corresponding to the uplink carrier is a special cell, information indicating that the cell corresponding to the uplink carrier is a physical uplink control channel secondary cell, information indicating that the cell corresponding to the uplink carrier is a secondary cell other than the physical uplink control channel secondary cell, information indicating whether the cell corresponding to the uplink carrier is a secondary cell, or information indicating whether a position of uplink radio frequency switching time is configured on the uplink carrier.

When performing the action performed by the terminal apparatus in the third aspect, the transceiver unit may obtain first information, where the first information is used for scheduling the terminal apparatus for performing first transmission on a first uplink carrier, the first transmission is N-port transmission, and N is a positive integer. The transceiver unit may further perform the first transmission on the first uplink carrier, where when the first transmission is performed, a quantity of ports that are supported by the terminal apparatus for uplink transmission on the first uplink carrier is N, and the terminal apparatus does not support N-port transmission on the first uplink carrier before a start moment of first duration, where the first duration is an uplink switching gap, the start moment of the first duration is between a moment at which the terminal apparatus obtains the first information and a moment at which the first transmission is started, and is after a first moment, the first moment is an end moment of the last uplink transmission before the first transmission is performed, and an end moment of the first duration is before the moment at which the first transmission is started.

With reference to the first aspect and the third aspect:

In a possible design, a quantity of uplink carriers that are of the communication apparatus and that support uplink radio frequency chain switching is greater than 2, and the processing unit may further determine a third uplink carrier of the terminal apparatus based on the second information, where a quantity of radio frequency chains that are allowed to be switched on the third uplink carrier is not zero. The processing unit may further skip performing uplink sending on the first uplink carrier and the third uplink carrier in the first duration, where the first duration is the uplink switching gap.

In a possible design, uplink carriers that are of the terminal apparatus and that support uplink radio frequency chain switching further include a fourth uplink carrier; and when K+L<P is satisfied, the processing unit may further control the terminal apparatus to skip performing uplink sending on the fourth uplink carrier in the first duration. P is a minimum quantity of radio frequency chains required by the terminal apparatus for performing first transmission, K≥M, L is the quantity of radio frequency chains that are allowed to be switched on the third uplink carrier, K is a quantity of ports supported by the terminal apparatus for uplink transmission on the first uplink carrier at a second moment, and the second moment includes any moment between the first moment and the start moment of the first duration.

In a possible design, when a first condition is satisfied, and the first transmission is performed, the quantity of ports supported by the terminal apparatus for uplink transmission on the first uplink carrier is M. The first condition includes: M1+N>Z, where M1 is a total quantity of radio frequency chains of uplink carriers of the terminal apparatus in a first uplink carrier set other than the first uplink carrier at the second moment, Z is a total quantity of radio frequency chains of the terminal apparatus, and the first uplink carrier set is a set of carriers supporting the uplink radio frequency chain switching.

In a possible design, when a first condition is satisfied, and the first transmission is performed, the quantity of ports supported by the terminal apparatus for uplink transmission on the first uplink carrier is M. The first condition includes: M2<N, where M2 is a quantity of ports supported by the terminal apparatus for uplink transmission on the first uplink carrier at the second moment, and M2 is a positive integer.

Optionally, the communication apparatus may further include a memory, configured to store computer program instructions. When invoking and executing the computer program instructions, the processing unit or the processing module may perform, by using the transceiver unit or the transceiver module, the method performed by the terminal apparatus in any one of the first aspect or the possible designs of the first aspect, or perform a corresponding function of the network device in any one of the third aspect or the possible designs of the third aspect.

According to a sixth aspect, an embodiment of this application provides a communication apparatus, to implement the method implemented by the base station in any one of the second aspect or the possible designs of the second aspect, or implement the method implemented by the base station in any one of the fourth aspect or the possible designs of the fourth aspect. The apparatus includes a corresponding unit or component configured to perform the foregoing method. The unit included in the apparatus may be implemented by software and/or hardware. The apparatus may be, for example, a base station; or a chip, a chip system, a module, or a processor that can support a base station in implementing the foregoing method.

For example, the communication apparatus may include modular components such as a transceiver module (or a communication module) and a processing module. The modules may perform corresponding functions of the base station in any one of the second aspect or the possible designs of the second aspect, or perform corresponding functions of the base station in any one of the fourth aspect or the possible designs of the fourth aspect. The transceiver unit may include a receiving module or a receiving unit configured to perform a receiving function, and a sending module or a sending unit configured to perform a sending function. When the communication apparatus is a base station, the transceiver unit may be a sending unit when performing a sending step, and the transceiver unit may be a receiving unit when performing a receiving step. The transceiver unit may be replaced by a transceiver, the sending unit may be replaced by a transmitter, and the receiving unit may be replaced by a receiver. The transceiver unit may include an antenna, a radio frequency circuit, and the like. The processing unit may be a processor, for example, a baseband chip. When the communication apparatus is a component that has the functions of the base station, the transceiver unit may be a radio frequency unit, and the processing unit may be a processor. When the communication apparatus is a chip system, the transceiver unit may be an input/output interface of the chip system, and the processing unit may be a processor of the chip system, for example, a CPU.

The transceiver unit may be configured to perform a receiving action and/or a sending action performed by the base station in any one of the second aspect or the possible designs of the second aspect, or perform a corresponding function of the base station in any one of the fourth aspect or the possible designs of the fourth aspect. The processing unit may be configured to perform a control action other than receiving and sending performed by the base station in any one of the second aspect or the possible designs of the second aspect, for example, processing information to be sent by the transceiver unit and/or processing information received by the transceiver unit, or perform a corresponding function of the base station in any one of the fourth aspect or the possible designs of the fourth aspect.

When performing the action performed by the base station in the second aspect, the transceiver unit may send first information, where the first information is used for scheduling a terminal apparatus for performing first transmission on a first uplink carrier, the first transmission is N-port transmission, and N is a positive integer. The processing unit may determine M based on second information of at least one uplink carrier of the terminal apparatus, where M is a quantity of ports that are supported by the terminal apparatus for uplink transmission on the first uplink carrier when the first transmission is performed, and M≥N, where the second information includes at least one of priority indication information, a bandwidth, a frequency, a path loss, a slot length, an identifier of a cell corresponding to the uplink carrier, a number, information indicating whether the cell corresponding to the uplink carrier is a special cell, information indicating that the cell corresponding to the uplink carrier is a physical uplink control channel secondary cell, information indicating that the cell corresponding to the uplink carrier is a secondary cell other than the physical uplink control channel secondary cell, or information indicating whether the cell corresponding to the uplink carrier is a secondary cell.

When performing the action performed by the base station in the fourth aspect, the transceiver unit may send first information, where the first information is used for scheduling a terminal apparatus for performing first transmission on a first uplink carrier, the first transmission is N-port transmission, and N is a positive integer. The processing unit may further determine, when the first transmission is performed, that a quantity of ports that are supported by the terminal apparatus for uplink transmission on the first uplink carrier is N, and the terminal apparatus does not support N-port transmission on the first uplink carrier before a start moment of first duration, where the first duration is an uplink switching gap, the start moment of the first duration is between a moment at which the terminal apparatus obtains the first information and a moment at which the first transmission is started, and is after a first moment, the first moment is an end moment of the last uplink transmission before the first transmission is performed, and an end moment of the first duration is before the moment at which the first transmission is started. A carrier on which the last uplink transmission and the first transmission are located may be a same uplink carrier, or may belong to a same first uplink carrier set.

Optionally, the communication apparatus may further include a memory, configured to store computer program instructions. When invoking and executing the computer program instructions, the processing unit or the processing module may perform, by using the transceiver unit or the transceiver module, the method performed by the base station in any one of the second aspect or the possible designs of the second aspect, or perform a corresponding function of the base station in any one of the fourth aspect or the possible designs of the fourth aspect.

It should be understood that when the communication apparatus in the third aspect or the fourth aspect implements the action performed by the UE or the base station in any one of the first aspect to the fourth aspect and the possible designs of the first aspect to the fourth aspect, the method further includes:

In a possible design, M may be further determined based on a quantity of ports through which the terminal apparatus performs second transmission, and the second transmission is transmission performed by the terminal apparatus on at least one uplink carrier other than the first uplink carrier.

In a possible design, the second information may include the number; and when a number of the first uplink carrier is 1 and a number of a second uplink carrier of the terminal apparatus is greater than 1, M is a maximum quantity of ports supported by the terminal apparatus for uplink transmission on the first uplink carrier;
the second information may include the information indicating whether the cell corresponding to the uplink carrier is the special cell and the information indicating whether the cell corresponding to the uplink carrier is the secondary cell; and when a cell corresponding to the first uplink carrier is a special cell, and a cell corresponding to a second uplink carrier of the terminal apparatus is a secondary cell, M is a maximum quantity of ports supported by the terminal apparatus for uplink transmission on the first uplink carrier;
the second information may include the information indicating that the cell corresponding to the uplink carrier is the physical uplink control channel secondary cell and the information indicating that the cell corresponding to the uplink carrier is the secondary cell other than the physical uplink control channel secondary cell; and when a cell corresponding to the first uplink carrier is a physical uplink control channel secondary cell, and a cell corresponding to a second uplink carrier of the terminal apparatus is a secondary cell other than the physical uplink control channel secondary cell, M is a maximum quantity of ports supported by the terminal apparatus for uplink transmission on the first uplink carrier; or
the second information may include the priority indication information; and when a priority indicated by priority indication information of the first uplink carrier is higher than a priority indicated by priority indication information of a second uplink carrier, M is a maximum quantity of ports supported by the terminal apparatus for uplink transmission on the first uplink carrier, where
uplink carriers that are of the terminal apparatus and that support uplink radio frequency chain switching are the first uplink carrier and the second uplink carrier, the terminal apparatus does not perform transmission on the first uplink carrier and the second uplink carrier simultaneously, and the maximum quantity of ports supported by the terminal apparatus for uplink transmission on the first uplink carrier is the same as a maximum quantity of ports supported by the terminal apparatus for uplink transmission on the second uplink carrier.

In a possible design, the second information may include the number; and when a number of the first uplink carrier is 1 and a number of a second uplink carrier of the terminal apparatus is greater than 1, M is further determined based on the quantity of ports for the second transmission;
the second information may include the information indicating whether the cell corresponding to the uplink carrier is the special cell and the information indicating whether the cell corresponding to the uplink carrier is the secondary cell; and when a cell corresponding to the first uplink carrier is a special cell, and a cell corresponding to a second uplink carrier of the terminal apparatus is a secondary cell, M is further determined based on the quantity of ports for the second transmission;
the second information may include the information indicating that the cell corresponding to the uplink carrier is the physical uplink control channel secondary cell and the information indicating that the cell corresponding to the uplink carrier is the secondary cell other than the physical uplink control channel secondary cell; and when a cell corresponding to the first uplink carrier is a physical uplink control channel secondary cell, and a cell corresponding to a second uplink carrier of the terminal apparatus is a secondary cell other than the physical uplink control channel secondary cell, M is a maximum quantity of ports supported by the terminal apparatus for uplink transmission on the first uplink carrier; or
the second information includes the priority indication information; and when a priority indicated by priority indication information of the first uplink carrier is higher than a priority indicated by priority indication information of a second uplink carrier, M is further determined based on the quantity of ports for the second transmission, where
uplink carriers that are of the terminal apparatus and that support uplink radio frequency chain switching are the first uplink carrier and the second uplink carrier, the second transmission is transmission performed by the terminal apparatus on the second uplink carrier, a time domain resource for the second transmission overlaps a time domain resource for the first transmission, and a maximum quantity of ports supported by the terminal apparatus for uplink transmission on the first uplink carrier is the same as a maximum quantity of ports supported by the terminal apparatus for uplink transmission on the second uplink carrier.

In a possible design, the second information may include the number; and when a number of a second uplink carrier of the terminal apparatus is 1 and a number of the first uplink carrier is greater than 1, M is equal to N;
the second information may include the information indicating whether the cell corresponding to the uplink carrier is the special cell and the information indicating whether the cell corresponding to the uplink carrier is the secondary cell; and when a cell corresponding to the first uplink carrier is a secondary cell, and a cell corresponding to a second uplink carrier of the terminal apparatus is a special cell, M is equal to N;
the second information may include the information indicating that the cell corresponding to the uplink carrier is the physical uplink control channel secondary cell and the information indicating that the cell corresponding to the uplink carrier is the secondary cell other than the physical uplink control channel secondary cell; and when a cell corresponding to the first uplink carrier is a secondary cell other than a physical uplink control channel secondary cell, and a cell corresponding to a second uplink carrier of the terminal apparatus is the physical uplink control channel secondary cell, M is equal to N; or
the second information includes the priority indication information; and when a priority indicated by priority indication information of the first uplink carrier is not higher than a priority indicated by priority indication information of a second uplink carrier, M is equal to N, where
uplink carriers that are of the terminal apparatus and that support uplink radio frequency chain switching are the first uplink carrier and the second uplink carrier, and a maximum quantity of ports supported by the terminal apparatus for uplink transmission on the first uplink carrier is the same as a maximum quantity of ports supported by the terminal apparatus for uplink transmission on the second uplink carrier.

According to a seventh aspect, a communication system is provided. The communication system includes the communication apparatuses shown in the fifth aspect and the sixth aspect, that is, includes a network device configured to perform the method mentioned in the first aspect and a terminal apparatus configured to perform the method mentioned in the second aspect, or includes a network device configured to perform the method mentioned in the third aspect and a terminal apparatus configured to perform the method mentioned in the fourth aspect. Certainly, another apparatus or device may be further included. This is not specifically limited herein in this application.

According to an eighth aspect, a computer-readable storage medium is provided. The computer-readable storage medium is configured to store computer instructions or a program. When the computer instructions are run or the program is run on a computer, the computer is enabled to perform the method in any one of the first aspect to the fourth aspect or the possible implementations of the first aspect to the fourth aspect.

According to a ninth aspect, a computer program product is provided. When the computer program product is run on a computer, the computer is enabled to perform the method in any one of the first aspect to the fourth aspect or the possible implementations of the first aspect to the fourth aspect.

According to a tenth aspect, a circuit is provided. The circuit is coupled to a memory, and the circuit is configured to read a program or instructions in the memory, to perform the method in any one of the first aspect to the fourth aspect or the possible implementations of the first aspect to the fourth aspect. The circuit may include a chip circuit, a chip, a chip system, or the like.

For beneficial effects of the fifth aspect to the tenth aspect and the possible designs of the fifth aspect to the tenth aspect, refer to the beneficial effects of the first aspect to the fourth aspect and the possible designs of the first aspect to the fourth aspect. Details are not described herein again.

### BRIEF DESCRIPTION OF DRAWINGS

FIG. 1 is a schematic diagram of an architecture of a communication system according to an embodiment of this application;
FIG. 2 is a schematic diagram of radio frequency chain switching according to an embodiment of this application;
FIG. 3 is a schematic diagram of other radio frequency chain switching according to an embodiment of this application;
FIG. 4 is a schematic diagram of other radio frequency chain switching according to an embodiment of this application;
FIG. 5 is a schematic diagram of a structure of a communication apparatus according to an embodiment of this application;
FIG. 6 is a schematic diagram of a structure of another communication apparatus according to an embodiment of this application;
FIG. 7 is a schematic flowchart of a communication method according to an embodiment of this application;
FIG. 8 is a schematic diagram of an uplink switching gap according to an embodiment of this application;
FIG. 9 is a schematic diagram of radio frequency chain switching according to an embodiment of this application; and
FIG. 10 is a schematic diagram of radio frequency chain switching according to an embodiment of this application.

### DESCRIPTION OF EMBODIMENTS

To make the objectives, technical solutions, and advantages of this application clearer, the following further describes this application in detail with reference to the accompanying drawings.

To facilitate understanding of the technical solutions in this application, the following first briefly describes technical terms in this application.
1. Terminal apparatus: The terminal apparatus is, for example, a terminal device, or a module, for example, a chip system, configured to implement a function of the terminal device, where the chip system may be disposed in the terminal device. The terminal device includes a device that provides a voice and/or data connectivity for a user, and specifically, includes a device that provides a voice for the user, or includes a device that provides data connectivity for the user, or includes a device that provides a voice and data connectivity for the user. For example, the terminal device may include a handheld device having a wireless connection function, or a processing device connected to a wireless modem. The terminal device may communicate with a core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device (device-to-device, D2D) terminal device, a V2X terminal device, a machine-to-machine/machine type communication (machine-to-machine/machine type communication, M2M/MTC) terminal device, and an internet of things (internet of things, IoT) terminal device. Most typically, the terminal apparatus may be a vehicle or a terminal-type road side unit; or a communication module or a chip built in a vehicle or a road side unit.

By way of example and not limitation, in embodiments of this application, the terminal device may alternatively be a wearable device. The wearable device may also be referred to as a wearable intelligent device, an intelligent wearable device, or the like, and is a generic term for wearable devices, such as glasses, gloves, watches, clothes, and shoes, that are developed by applying wearable technologies to intelligently designs of daily wear. The wearable device is a portable device that is directly worn or integrated into clothes or an accessory of a user. The wearable device is not merely a hardware device, but is configured to implement a powerful function through software support, data exchange, and cloud interaction. Generalized wearable intelligent devices include full-featured and large-size devices, such as smart watches or smart glasses, that can implement complete or partial functions without depending on smartphones; and devices, such as various smart bands, smart helmets, or smart jewelry for monitoring physical signs, that focus on only one type of application functions and need to work with other devices such as smartphones.

If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on board units (on-board units, OBUs).

In embodiments of this application, the terminal device may further include a relay (relay). Alternatively, it may be understood that all devices that can perform data communication with a base station may be considered as terminal devices.

In embodiments of this application, the terminal apparatus supports communication with a network device such as a base station through an air interface. The terminal apparatus supports receiving through a plurality of receive (receive, RX) ports.

In the following descriptions, LTE is used as an execution body of a communication method provided in embodiments of this application. Unless otherwise specified, the UE in the following descriptions may be replaced with a body such as a terminal apparatus or a terminal device.

2. Network device: The network device includes, for example, an access network (access network, AN) device such as a base station (for example, an access point), and may be a device that communicates with a terminal over an air interface through one or more cells in an access network. Alternatively, for example, a network device in a V2X technology is a road side unit (road side unit, RSU). The RSU may be a fixed infrastructure entity supporting a V2X application, and may exchange a message with another entity supporting the V2X application. The network device may include a next generation NodeB (next generation NodeB, gNB) in a 5th generation (5th generation, 5G) new radio (new radio, NR) system (also referred to as an NR system for short), for example, a base station including at least one remote radio unit (remote radio unit, RRU) and at least one baseband unit (baseband unit, BBU), or may include a central unit

(central unit, CU) and a distributed unit (distributed unit, DU) in a cloud access network (cloud radio access network, cloud RAN) system. This is not limited in embodiments of this application.

Because embodiments of this application mainly relate to an access network device, a network device described below is an access network device unless otherwise specified. In the following descriptions, a base station may represent a network device and/or an access network device.

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

In the following descriptions, a base station is used as an execution body of the communication method provided in embodiments of this application. Unless otherwise specified, the base station in the following descriptions may be replaced with a body such as an access network device or a network device.

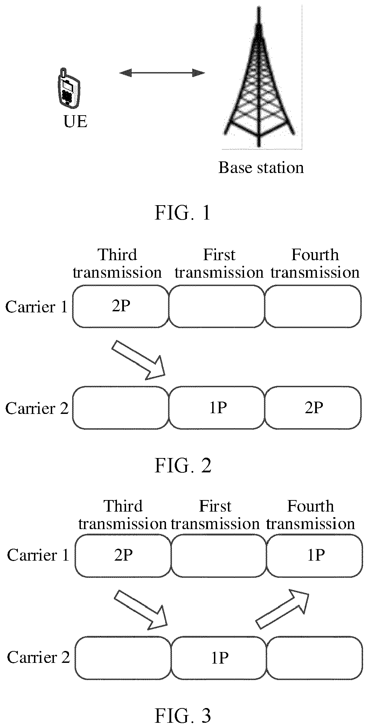

As shown in FIG. 1, UE supports wireless communication with a base station.

3. Primary cell (primary cell, PCell): The PCell is a cell in which UE performs initial connection establishment, a cell in which the UE performs radio resource control (radio resource control, RRC) connection re-establishment, or a primary cell specified in a handover (handover) process. The PCell is responsible for RRC communication with a terminal. A component carrier corresponding to the PCell is a primary component carrier (primary component carrier, PCC) unit. A downlink (DL) carrier of the PCell is a downlink DL PCC, and an uplink (UL) carrier of the PCell is a UL PCC.

4. Secondary cell (secondary cell, SCell): The SCell is added during RRC reconfiguration, and is used for providing additional radio resources. A component carrier corresponding to the SCell is referred to as a secondary component carrier (secondary component carrier, SCC). A downlink carrier of the SCell is referred to as a DL SCC, and an uplink carrier of the SCell is referred to as a LTL SCC.

The PCell is determined during connection establishment, and the SCell is added/modified/released by using an RRC connection reconfiguration message after initial access is complete.

5. Single carrier: UE accesses a cell, and the cell includes an uplink carrier and a downlink carrier. Both the uplink carrier and the downlink carrier are in an active state.

6. Carrier aggregation: A plurality of cells are configured for UE, and each cell includes one downlink carrier and zero to two uplink carriers. The UE may activate some cells in the plurality of cells, but some LTEs have limited uplink capabilities, and a maximum of two uplink carriers can be configured and activated. It should be understood that, for ease of description, a carrier subsequently appearing in this application is an uplink carrier, unless there is an additional description or limitation on the carrier.

In this application, one carrier corresponds to one cell. This means that the carrier is a carrier of the cell.

7. Supplementary uplink (supplementary uplink, SLTL): One cell is configured for LTE, and the cell includes an uplink carrier, a secondary uplink carrier, and a downlink carrier. If the cell is activated, all uplink and downlink carriers in the cell are activated. However, an UL and an SLTL in a cell cannot simultaneously send uplink data transmission.

8. Uplink carrier aggregation in a time division transmission mode: A carrier aggregation mode with two uplink carriers may be configured for UE. The UE performs time division transmission on the two carriers.

9. Multi-antenna uplink carrier time division transmission: A carrier aggregation mode with two uplink carriers may be configured for LTE, the LTE performs time division transmission on the two carriers, and the LTE has a total of two radio frequency chains that can be used for simultaneous sending. In this case, the two radio frequency chains may be dynamically allocated on the two carriers. For example, one radio frequency chain is used for sending on a carrier X, and the other radio frequency chain is used for sending on a carrier Y; or no sending is performed on a carrier X, and two radio frequency chains are used for sending on a carrier Y

10. Radio frequency chain: The radio frequency chain is also referred to as an uplink radio frequency chain. UE can perform uplink sending only when there is a radio frequency chain on a carrier. The radio frequency chain may be represented as Tx. The radio frequency chain can also be replaced with an antenna, radio frequency, a transmit channel, or a transmit port. In this application, a quantity of radio frequency chains of UE on a carrier is equal to a maximum value of a quantity of ports allowed (or available) for uplink transmission (or referred to as uplink sending, sending, or transmission) of the UE on the carrier.

It should be understood that, in this application, that the quantity of radio frequency chains of the LTE on the uplink carrier is x may also be replaced with: The UE supports x-port uplink transmission on the uplink carrier, a quantity of ports supported by the LTE for uplink transmission on the uplink carrier is x, a quantity of ports for uplink transmission supported by the UE on the uplink carrier is x, or the UE does not support (x+q)-port uplink transmission on the uplink carrier, where q is a positive integer. In addition, it should be understood that, in this application, if the UE supports x-port uplink transmission on the uplink carrier, or the quantity of ports supported by the UE for uplink transmission on the uplink carrier is x, it means that the UE is allowed to perform x0-port uplink transmission on the uplink carrier, 1≤x0≤x, and the UE does not support (x+q)-port uplink transmission on the uplink carrier.

For example, if LTE has two radio frequency chains on one carrier, the UE supports performing 2-port uplink transmission on the carrier, to be specific, may perform 1-port uplink transmission or perform 2-port uplink transmission, or may not perform uplink transmission. In other words, the LTE does not support performing uplink transmission using three or more ports on the carrier. In a CA scenario, UE needs to allocate and switch radio frequency chains between a plurality of carriers. For example, the UE allocates two radio frequency chains to two carriers respectively, and a quantity of radio frequency chains of each carrier is 1. If the LTE needs to perform 2-port uplink transmission on one carrier, the radio frequency chain on the other carrier needs to be switched to the carrier.

In addition, a base station may configure a fixed quantity of radio frequency chains for an uplink carrier of the UE; in other words, a quantity of radio frequency chains of each of some uplink carrier is fixed, and switching cannot be performed. For ease of describing a radio frequency chain switching process, an uplink carrier in this application may be considered as an uplink carrier that supports radio frequency chain switching (or referred to as a switchable uplink radio frequency chain), unless otherwise specified.

In a CA scenario, an operation state (or referred to as a radio frequency chain state, which may also be referred to as a state in this application) of the LTE may indicate a quantity of radio frequency chains of the UE on a carrier or each carrier. The operation state of the UE is that the UE supports X-port transmission on one uplink carrier. This is equivalent to that one uplink carrier of the LTE supports X-port transmission, and is equivalent to that a quantity of radio frequency chains of the UE on one carrier is X. For example, uplink carriers of the UE are a carrier 1 and a carrier 2. If the UE allocates two radio frequency chains to the two carriers respectively, the operation state of the UE may be that the UE supports 1-port uplink transmission on the carrier 1 and supports 1-port uplink transmission on the carrier 2; or the operation state of the UE is that the UE supports 1-port uplink transmission on the carrier 1. Certainly, the operation state of the UE may alternatively be that the UE supports 2-port uplink transmission on the carrier 1 and does not support uplink transmission on the carrier 2; or the operation state of the UE is that the UE supports 2-port uplink transmission on the carrier 1.

In addition, a maximum quantity of radio frequency chains supported by the LTE on each uplink carrier is determined. For example, a maximum of X radio frequency chains may be configured for UE on an uplink carrier. This may be referred to as that the maximum quantity of radio frequency chains supported by the LTE on the uplink carrier (or the maximum quantity of radio frequency chains of the UE on the uplink carrier) is X, or the LTE supports the maximum of X radio frequency chains on the uplink carrier. This means that the UE supports uplink transmission using a maximum of X ports on the uplink carrier, or the maximum quantity of ports supported by the UE for uplink transmission on the uplink carrier is X, or the LTE does not support (X+q)-port uplink transmission on the uplink carrier, where q is a positive integer. In this application, the maximum quantity of ports supported by the UE for uplink transmission on the uplink carrier may be replaced with descriptions, for example, the maximum quantity of radio frequency chains supported by the UE on the uplink carrier, or the quantity of ports supported by the UE for uplink transmission on the uplink carrier when the quantity of radio frequency chains on the uplink carrier is the maximum quantity of radio frequency chains supported on the carrier.

In addition, a set of possible values of the quantity of radio frequency chains of the UE on the carrier may be configured by a base station, predefined in a protocol, or determined in a pre-configuration manner. In this application, the set may be referred to as a set of quantities of radio frequency chains of the carrier. Different quantities of radio frequency chains may support uplink transmission using a same quantity of ports or different quantities of ports. If LTE has four uplink radio frequency chains, a set of quantities of radio frequency chains of the UE on one carrier may be {0, 1, 2, 4}, {0, 1, 2}, or {0, 1}. If UE has three uplink radio frequency chains, a set of quantities of radio frequency chains of the LTE on one carrier may be {0, 1, 2} or {0, 1}. If a quantity of radio frequency chains of UE on one carrier is zero, it may be understood that the UE does not support uplink transmission on the carrier. When the quantity of radio frequency chains is 4, 1-port, 2-port, or 4-port uplink transmission may be supported. A prerequisite for LTE to support X-port uplink transmission on one carrier is that a quantity Y of radio frequency chains of the LTE on the carrier is greater than or equal to X, and the quantity Y of radio frequency chains of the UE on the carrier belongs to a set of quantities of radio frequency chains of the carrier.

It should be understood that, a minimum quantity of radio frequency chains required by UE for performing uplink transmission on a carrier is a minimum value that is in a set of quantities of radio frequency chains of the LTE on the carrier and that is not less than a quantity of ports for uplink transmission that is scheduled by a base station and that is performed by the UE on the carrier. For example, a set of quantities of radio frequency chains of UE on a carrier is {0, 1, 2, 4}. If a base station schedules the UE for performing 2-port uplink transmission on the carrier, a minimum quantity of radio frequency chains required by the UE for performing uplink transmission on the carrier is 2; or if a base station schedules the LTE for performing 3-port or 4-port uplink transmission on the carrier, a minimum quantity of radio frequency chains required by the UE for performing uplink transmission on the carrier is 4.

A quantity of radio frequency chains that are allowed to be switched (or switchable) of a carrier is defined as follows: If no uplink transmission is to be performed on the carrier and a quantity of radio frequency chains of the carrier is not 0, the carrier has a switchable uplink radio frequency chain. A quantity of switchable uplink radio frequency chains of the carrier is a quantity of all radio frequency chains on the carrier currently. For a carrier on which uplink transmission is to be performed, if a minimum quantity of radio frequency chains required for the uplink transmission to be performed on the carrier is less than a quantity of all radio frequency chains on the carrier currently, a quantity of switchable radio frequency chains of the carrier is the quantity of all radio frequency chains on the carrier currently minus the minimum quantity of radio frequency chains required for the uplink transmission to be performed on the carrier; otherwise, the quantity of switchable radio frequency chains on the carrier is zero, or the carrier has no switchable radio frequency chain. UE is to send uplink transmission on at least one carrier. If a quantity of radio frequency chains on at least one of the at least one carrier does not support uplink transmission on the carrier (or a quantity of ports supported for uplink transmission on the at least one carrier is less than a quantity of ports for the uplink transmission to be sent on the carrier), a set of the at least one carrier that does not support uplink transmission is defined as a fourth uplink carrier set. In a possible manner, a first uplink carrier is a lowest-priority carrier in the fourth uplink carrier set (if there is only one carrier in the fourth uplink carrier set, the carrier is the first uplink carrier). According to the method in this application, radio frequency chain switching may be first performed to enable the LTE, on the first uplink carrier, to support transmission to be performed on the first uplink carrier, and then radio frequency chain switching is performed to enable the UE, on a lowest-priority carrier in the fourth uplink carrier set other than the first uplink carrier, to support uplink transmission to be performed on the carrier. The rest can be deduced by analogy in ascending order of priorities, until the LTE, on all the carriers in the fourth uplink carrier set, support uplink transmission on the respective carriers. During the first transmission or after first duration, a quantity of radio frequency chains on all the carriers of the UE is a quantity of radio frequency chains obtained through radio frequency chain switching on all the carriers in the fourth uplink carrier set according to the method in this application.

It should be understood that in this application, expressions such as "performing x-port transmission on an uplink carrier (or x-port uplink transmission)", "transmission on an uplink carrier is through x ports", "x-port sending on an uplink carrier", or "sending x-port transmission on an uplink carrier" may be interchanged, and all indicate that transmission performed by LTE on the uplink carrier is x-port transmission.

11. Band (band) combination (combination): UE reports one or more band combinations that can be used for simultaneous uplink sending. The combination indicates that the UE supports simultaneous uplink sending on carriers in bands in the combination. One band combination may include one or more bands, and one band may include one or more consecutive or non-consecutive carriers.

12. Transmit channel (transmitter, TX): is a physical concept, may also be referred to as a radio frequency (radio frequency, RF) transmit channel, and is referred to as a transmit channel for short in this application. In this application, the transmit channel may work in the following manner, but is not limited to the following manner: The transmit channel may receive a baseband signal from a baseband chip, perform radio frequency processing (such as up-conversion, amplification, and filtering) on the baseband signal to obtain a radio frequency signal, and finally radiate the radio frequency signal into space through an antenna. Specifically, the transmit channel may include electronic components such as an antenna switch, an antenna tuner, a low noise amplifier (low noise amplifier, LNA), a power amplifier (power amplifier, PA), a frequency mixer (mixer), a local oscillator (local oscillator, LO), and a filter (filter). The electronic components may be integrated into one or more chips based on a requirement. The antenna may also sometimes be considered as a part of the transmit channel.

13. Antenna port (port): is a logical concept. During actual signal sending, the antenna port is mapped to a corresponding transmit channel. Currently, when scheduling a terminal device to transmit data, a network device may explicitly indicate a port number of an antenna port used for data transmission. In this application, an antenna port may be referred to as a port for short.

With reference to Table 1 and Table 2, the following describes a working principle of performing uplink transmission by UE based on a quantity of radio frequency chains in a CA scenario.

For LTE that supports two radio frequency chains on two carriers and supports switching of the radio frequency chains on the two carriers (to be specific, in this case, a first uplink carrier set has two carriers, and a total quantity of radio frequency chains of the LTE is 2), sending behavior of the UE on the two carriers is defined in an existing protocol by using Table 1. A carrier 1 and a carrier 2 indicate the two carriers respectively. A case (case) 1 in Table 1 indicates that the UE has one radio frequency chain on the carrier 1, and has one radio frequency chain on the carrier 2, a maximum quantity of radio frequency chains supported by the UE on the carrier 1 is 1, and a maximum quantity of radio frequency chains supported by the UE on the carrier 2 is 2. A case 2 indicates that the UE has no radio frequency chain on the carrier 1 and has two radio frequency chains on the carrier 2. The UE may perform switching between the two cases, to be specific, may switch one radio frequency chain between the two carriers, and switching of the radio frequency chain between the two cases requires switching time. The switching time may be referred to as an uplink switching gap (uplink switching gap). For ease of description, the uplink switching gap may be referred to as first duration subsequently. The LTE does not expect to perform transmission on either of the two carriers in the first duration. In addition, it should be understood that "not expect" in this application may also be replaced with "is not expected".

**Table 1**

| | |
|---|---|
| Case 1 | There is one radio frequency chain on the carrier 1 and one radio frequency chain on the carrier 2. |
| Case 2 | There is no radio frequency chain on the carrier 1 and there are two radio frequency chains on the carrier 2. |

Currently, the UE may be indirectly indicated, by using a quantity of ports used by the UE for sending the uplink transmission on the carrier, to perform radio frequency chain switching, to determine whether radio frequency chain switching needs to be performed for the current uplink transmission, that is, whether the switching time exists. This indication is based on a mapping relationship between the radio frequency chain and the uplink transmission port. Table 2 is a mapping relationship between a radio frequency chain and an uplink transmission port of LTE that supports dual UL (dual UL) uplink carrier aggregation.

**Table 2**

| | Quantity of radio frequency chains of a carrier (carrier 1+carrier 2) | Quantity of ports allowed for uplink transmission on a carrier (carrier 1+carrier 2) |
|---|---|---|
| Case 1 | 1T+1T | 1P+0P, 1P+1P, 0P+1P |
| Case 2 | 0T+2T | 0P+2P, 0P+1P |

It can be learned from Table 2 that, in the case 1 shown in Table 1, a state of the UE is that when there is one radio frequency chain on the carrier 1 and one radio frequency chain on the carrier 2 (represented as 1T+1T in Table 2), the UE may send 1-port uplink transmission on the carrier 1 and does not perform uplink transmission on the carrier 2 (represented as 1P+0P in Table 2); or send 1-port uplink transmission on the carrier 1, and send 1-port uplink transmission on the carrier 2 simultaneously (represented as 1P+1P in Table 2); or send 1-port uplink transmission on the carrier 2, and does not perform uplink transmission on the carrier 1 (represented as 0P+1P in Table 2). In the case 2 shown in Table 1, a state of the UE is that when there is no radio frequency chain on the carrier 1 and there are two radio frequency chains on the carrier 2 (represented as 0T+2T in Table 2), the LTE may send 2-port uplink transmission on the carrier 2, and does not perform uplink transmission on the carrier 1 (represented as 0P+2P in Table 2); or send 1-port uplink transmission on the carrier 2, and does not perform uplink transmission on the carrier 1 (represented as 0P+1P in Table 2). Currently, in some cases, the LTE needs to perform radio frequency chain switching, to satisfy a requirement on a quantity of ports for uplink transmission scheduled by a base station. When radio frequency chain switching needs to be performed, the UE switches, in the first duration, a radio frequency chain on another uplink carrier in the first uplink carrier set to an uplink carrier on which uplink transmission is to be performed, and before starting the uplink transmission, the UE does not expect to perform uplink transmission on all or some carriers in the first uplink carrier set (the all or some carriers in the first uplink carrier set include at least the uplink carrier on which the uplink transmission is to be performed and another carrier related to the radio frequency chain switching) in the first duration. It should be understood that, unless otherwise specified, the another uplink carrier in this application is an uplink carrier that belongs to the same first uplink carrier set as a first uplink carrier (or the carrier on which the uplink transmission is to be performed).

It should be understood that the first uplink carrier set in this application is a set of carriers that are configured by the base station for the UE and that support uplink radio frequency chain switching. The UE may perform dynamic uplink radio frequency chain switching between the carriers in the first uplink carrier set. The carriers that support radio frequency chain switching include the carriers in the first uplink carrier set. When there is a carrier, in the carriers, whose quantity of radio frequency chains is not zero, the radio frequency chain of the carrier may be switched to another carrier.

For example, 2-port uplink transmission is to be sent on one carrier, and uplink transmission previously performed on the carrier is 1-port uplink transmission, and an operation state of the UE at a second moment is that 2-port uplink transmission is not supported on the carrier (for example, 0P+1P in the case 1 is switched to 0P+2P in the case 2). In this case, the UE needs to perform radio frequency chain switching, and does not expect to perform transmission on either of the two carriers in the first duration.

For another example, 1-port transmission is to be sent on one carrier, uplink transmission previously performed on the other carrier is 1-port uplink transmission, and an operation state of the LTE at a second moment is that the LTE supports 2-port uplink transmission on the carrier (for example, 0P+1P in the case 2 is switched to 1P+XP in the case 1). In this case, the UE needs to perform radio frequency chain switching, and does not expect to perform transmission on either of the two carriers in the first duration.

For still another example, 2-port uplink transmission is to be sent on one carrier, and uplink transmission previously performed on the other carrier is 1-port uplink transmission (for example, 1P+0P or 1P+1P in the case 1 is switched to 0P+2P in the case 2). In this case, the UE needs to perform radio frequency chain switching, and does not expect to perform transmission on either of the two carriers in the first duration.

For still another example, 1-port uplink transmission is to be sent on one carrier, and uplink transmission previously performed on the other carrier is 2-port uplink transmission (for example, 0P+2P in the case 2 is switched to 1P+0P or 1P+1P in the case 1). In this case, the UE needs to perform radio frequency chain switching, and does not expect to perform transmission on either of the two carriers in the first duration.

It can be learned from Table 2 that both the case 1 and the case 2 have the 0P+1P state, and both support sending in the 0P+1P state. Therefore, if the LTE needs to send no transmission on the carrier 1 and send 1-port transmission on the carrier 2, the state of the LTE is a state of previous uplink transmission. That is, the state of the LTE does not change, that is, the LTE does not need switching time.

In addition, if the UE does not perform uplink transmission, the state of the UE is a state of previous uplink transmission. In other words, the state of the LTE does not change, radio frequency chain switching does not need to be performed, and no switching time is required.

Radio frequency chain switching is not required between uplink transmission using different ports in the same case. Therefore, switching time is not required.

In addition, a prerequisite for the case 1 and the case 2 shown in Table 2 may be that a maximum quantity of radio frequency chains supported on the carrier 1 is different from that supported on the carrier 2. To be specific, the carrier 1 supports a maximum of one radio frequency chain, and the carrier 2 may support two radio frequency chains. Therefore, based on Table 2, when configuring a carrier for the UE, the base station needs to specify whether the configured carrier is the carrier 1 or the carrier 2, so as to distinguish between the carrier 1 and the carrier 2.

When the quantity of radio frequency chains of the LTE is still 2, if the carrier 1 also supports two radio frequency chains, the correspondence shown in Table 2 may be extended to Table 3, that is, a case 3 is added, indicating a UE state in which a quantity of radio frequency chains of the UE on the carrier 1 is 2 and a quantity of radio frequency chains of the UE on the carrier 2 is 0. In this case, the state of the UE may be switched between UE states respectively represented by the case 1, the case 2, and the case 3.

**Table 3**

| | Quantity of radio frequency chains of a carrier (carrier 1+carrier 2) | Quantity of ports allowed for uplink transmission on a carrier (carrier 1+carrier 2) |
|---|---|---|
| Case 1 | 1T+1T | 1P+0P, 1P+1P, 0P+1P |
| Case 2 | 0T+2T | 0P+2P, 0P+1P |
| Case 3 | 2T+0T | 1P+0P, 2P+0P |

Based on Table 3, in some cases, the base station cannot accurately determine whether the UE needs to perform radio frequency chain switching, that is, cannot accurately determine whether the first duration needs to be retained.

For example, as shown in FIG. 2, when third transmission of the LTE is 2-port uplink transmission on the carrier 1, and no uplink transmission is performed on the carrier 2, if the first transmission scheduled by the base station is 1-port uplink transmission on the carrier 2, the UE needs to switch at least one radio frequency chain on the carrier 1 to the carrier 2, and the base station may learn that the first duration needs to be retained for the first transmission, where the first transmission and the third transmission are two adjacent times of uplink transmission of the UE, and the third transmission is performed before the first transmission. In other words, the third transmission is the last uplink transmission (or referred to as previous uplink transmission) of the UE before the first transmission. In this application, the third transmission may indicate the last uplink transmission before the first transmission. A carrier on which the third transmission and the first transmission are located may be a same carrier or belong to the same first uplink carrier set. A problem is that the base station does not determine a quantity of radio frequency chains switched by the UE to the carrier 2. This is because the UE can perform 1-port uplink transmission on the carrier 2 in both the case 1 and the case 2; however, in the case 1, the UE switches one radio frequency chain originally on the carrier 1 to the carrier 2, and in the case 2, the UE switches the two radio frequency chains originally on the carrier 1 to the carrier 2. As a result, when scheduling fourth transmission, the base station does not determine whether the first duration needs to be retained. The first transmission and the fourth transmission are two times of adjacent uplink transmission of the LTE, and the first transmission is performed before the fourth transmission. For example, the fourth transmission scheduled by the base station is 2-port transmission to be performed by the LTE on the carrier 2. If the UE switches to the case 1 before performing first transmission, the UE still needs to switch one radio frequency chain on the carrier 1 to the carrier 2 when performing fourth transmission, that is, the base station needs to retain the first duration. However, if the UE switches to the case 2 before performing first transmission, the UE does not need to perform radio frequency chain switching when performing the fourth transmission, that is, the base station does not need to retain the first duration. It should be understood that, in this application, the operation state of the UE at the second moment may also be replaced with an operation state of the LTE when the UE performs third transmission.

For another example, as shown in FIG. 3, when the third transmission of the UE is 2-port uplink transmission on the carrier 1, and no uplink transmission is performed on the carrier 2, if the first transmission scheduled by the base station is 1-port uplink transmission to be performed by the UE on the carrier 2, the UE may switch from the case 3 to the case 1 or the case 2. Afterwards, the fourth transmission scheduled by the base station is 1-port transmission to be performed by the UE on the carrier 1. If the UE switches to the case 1 before performing first transmission, the UE does not need to perform radio frequency chain switching when performing fourth transmission, that is, the base station does not need to retain the first duration. However, if the UE switches to the case 2 before performing first transmission, the UE needs to switch at least one radio frequency chain on the carrier 2 to the carrier 1 when performing fourth transmission, that is, the base station needs to retain the first duration.

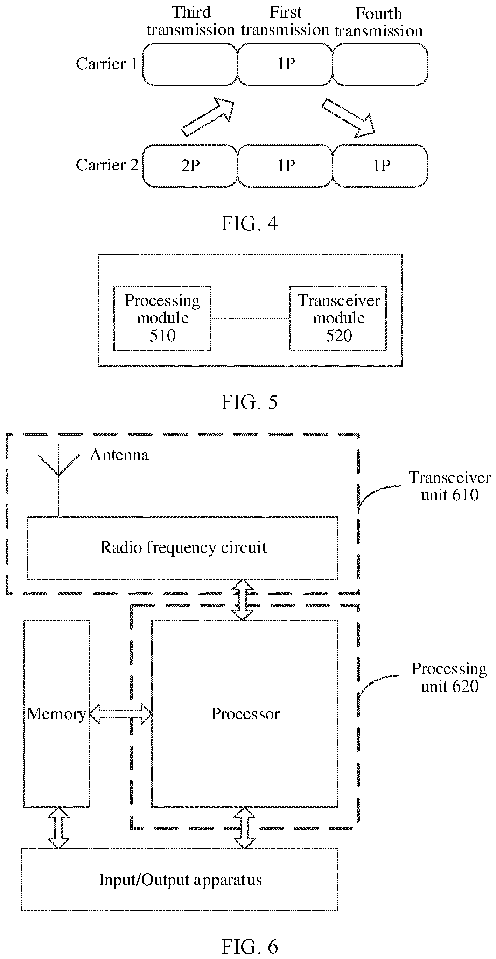

For another example, as shown in FIG. 4, when the third transmission of the UE is 2-port uplink transmission on the carrier 2, and no uplink transmission is performed on the carrier 1, if the first transmission that is of the LTE and that is scheduled by the base station is 1-port uplink transmission to be performed by the UE on the carrier 1, the UE may switch from the case 2 to the case 1 or the case 3. Afterwards, the fourth transmission scheduled by the base station is 1-port transmission to be performed by the UE on the carrier 2. If the UE switches to the case 1 before performing first transmission, the UE does not need to perform radio frequency chain switching when performing fourth transmission, that is, the base station does not need to retain the first duration. However, if the UE switches to the case 3 before performing first transmission, the UE needs to switch at least one radio frequency chain on the carrier 1 to the carrier 2 when performing fourth transmission, that is, the base station needs to retain the first duration.

Similarly, if the total quantity of radio frequency chains of the LTE, the quantity of carriers in the first uplink carrier set, and/or the maximum quantity of radio frequency chains supported on each carrier are further increased based on Table 3, there is a higher probability that the base station cannot predict the UE state. Therefore, there is a higher probability that the base station does not know whether the first duration needs to be retained for the LTE. In this application, the total quantity of radio frequency chains of the UE is a sum of quantities of radio frequency chains of all the carriers of the UE in the first uplink carrier set.

In conclusion, in an uplink transmission mechanism in the current CA scenario, the base station may not determine whether the UE performs radio frequency chain switching, so that the base station does not determine whether to retain the first duration for uplink transmission. As a result, uplink transmission performance is deteriorated. Specifically, if the base station determines that the first duration needs to be retained for specific uplink transmission, but actually the UE does not need to perform radio frequency chain switching, the UE delays sending. As a result, an uplink transmission delay is increased. If the base station determines that the first duration does not need to be retained for specific uplink transmission, but the UE actually needs to perform radio frequency chain switching before performing uplink sending, a time domain position of the UE on an uplink transmission resource configured by the base station may still be in the first duration. Therefore, the UE may not perform current uplink transmission. As a result, a waste of uplink resources is caused.

Embodiments of this application provide a communication method, to improve uplink transmission performance.

The communication method may be implemented by UE and a base station. The UE and/or the base station may include a structure shown in FIG. 5 and/or FIG. 6.

For example, FIG. 5 is a schematic diagram of a structure of a possible communication apparatus. The structure may include a processing module (or a processing unit) 510 and a transceiver module (or a transceiver unit) 520. For example, the structure shown in FIG. 5 may be UE and/or a base station, or may be components having functions of the LTE and/or the base station shown in this application. When the structure is the UE and/or the base station, the transceiver module 520 may be a transceiver, and the transceiver may include an antenna, a radio frequency circuit, and the like; and the processing module 510 may be a processor, for example, a baseband processor, and the baseband processor may include one or more CPUs. When the structure is the components having the function of the UE or the base station shown in this application, the transceiver module 520 may be a radio frequency unit, and the processing module 510 may be a processor, for example, a baseband processor. When the structure is a chip system, the transceiver module 520 may be an input/output interface of the chip system (for example, a baseband chip), and the processing module 510 may be a processor of the chip system, and may include one or more central processing units. It should be understood that the processing module 510 in this embodiment of this application may be implemented by a processor or a processor-related circuit component, and the transceiver module 520 may be implemented by a transceiver or a transceiver-related circuit component.

For example, the processing module 510 may be configured to perform all operations, except sending and receiving operations, performed by the LTE and/or the base station in any embodiment of this application, for example, a processing operation, and/or support another process in embodiments described in this specification, for example, generating a message, information, and/or signaling sent by the transceiver module 520, and processing a message, information, and/or signaling received by the transceiver module 520. The transceiver module 520 may be configured to perform all receiving and sending operations performed by the LTE and/or the base station in any embodiment of this application, and/or support another process in embodiments described in this specification, for example, data sending and/or receiving.

In addition, the transceiver module 520 may be a functional module. The functional module can implement both a sending operation and a receiving operation. For example, the transceiver module 520 may be configured to perform all sending operations and receiving operations performed by the UE and/or the base station in the following descriptions. For example, when a sending operation is performed, it may be considered that the transceiver module 520 is a sending module; when a receiving operation is performed, it may be considered that the transceiver module 520 is a receiving module. Alternatively, the transceiver module 520 may be two functional modules, the transceiver module 520 may be a general term of the two functional modules, and the two functional modules are respectively a sending module and a receiving module. The sending module is configured to implement a sending operation. For example, the sending module may be configured to perform all sending operations performed by the UE and/or the base station in the following descriptions. The receiving module is configured to implement a receiving operation. The receiving module may be configured to perform all receiving operations performed by the UE and/or the base station.

FIG. 6 is a schematic diagram of a structure of another communication apparatus, configured to perform actions performed by the UE and/or the base station according to embodiments of this application. For ease of understanding and convenience of figure illustration, as shown in FIG. 6, the communication apparatus may include at least one of a processor, a memory, a radio frequency circuit, an antenna, or an input/output apparatus. The processor is mainly configured to: process a communication protocol and communication data, control the UE and/or the base station, execute a software program, process data of the software program, and the like. The memory is configured to store the software program and the data. The radio frequency circuit is mainly configured to: perform conversion between a baseband signal and a radio frequency signal, and process the radio frequency signal. The antenna is mainly configured to send and receive radio frequency signals in a form of an electromagnetic wave. The input/output apparatus, for example, a touchscreen, a display screen, a keyboard, or an interface is mainly configured to: receive data entered by a user, and output data to the user. It should be noted that some types of LTEs and/or base stations may have no input/output apparatus.

When data needs to be sent, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 6 shows only one memory and one processor. In an actual UE and/or base station product, there may be one or more processors and one or more memories. The memory may also be referred to as a storage medium, a storage device, or the like. The memory may be disposed independent of the processor, or may be integrated with the processor. This is not limited in this embodiment of this application.

It should be understood that, if the apparatus shown in FIG. 6 may be a base station, the apparatus may include at least one RRU and a BBU. The RRU is mainly configured to: receive and send a radio frequency signal, and perform conversion between the radio frequency signal and a baseband signal, for example, send indication information to UE. The BBU is mainly configured to perform baseband processing, control the base station, and so on. The RRU and the BBU may be physically disposed together, for example, share a same processor and/or memory of the communication apparatus. Alternatively, the RRU and the BBU may be physically separated, that is, a distributed base station, for example, use different processors and memories of the communication apparatus.

In this embodiment of this application, the antenna and the radio frequency circuit that have sending and receiving functions may be considered as a transceiver unit (where the transceiver unit may be a functional unit, and the functional unit can implement the sending and receiving functions; or the transceiver unit may include two functional units: a receiving unit that can implement the receiving function and a sending unit that can implement the sending function). The processor that has a processing function is considered as a processing unit. As shown in FIG. 6, the communication apparatus may include a transceiver unit 610 and a processing unit 620. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 610 and that is configured to implement a receiving function may be considered as a receiving unit, and a component that is in the transceiver unit 610 and that is configured to implement a sending function may be considered as a sending unit. That is, the transceiver unit 610 may include the receiving unit and the sending unit. The transceiver unit sometimes may also be referred to as a transceiver machine, a transceiver, a transceiver circuit, or the like. The receiving unit may sometimes be referred to as a receiver machine, a receiver, a receiver circuit, or the like. The sending unit may sometimes be referred to as a transmitter machine, a transmitter, a transmitter circuit, or the like.

It should be understood that the transceiver unit 610 may correspond to the transceiver module 520, or the transceiver module 520 may be implemented by the transceiver unit 610. The transceiver unit 610 is configured to perform a sending operation and a receiving operation of the UE and/or the base station in the embodiments shown below, and/or is configured to support another process of the technology described in this specification. The processing unit 620 may correspond to the processing module 510, or the processing module 510 may be implemented by the processing unit 620. The processing unit 620 is configured to perform operations of the UE and/or the base station in the embodiments shown below other than the receiving and sending operations, for example, configured to perform all operations performed by the UE and/or the base station in the embodiments shown below except receiving and sending, and/or configured to support another process of the technology described in this specification.

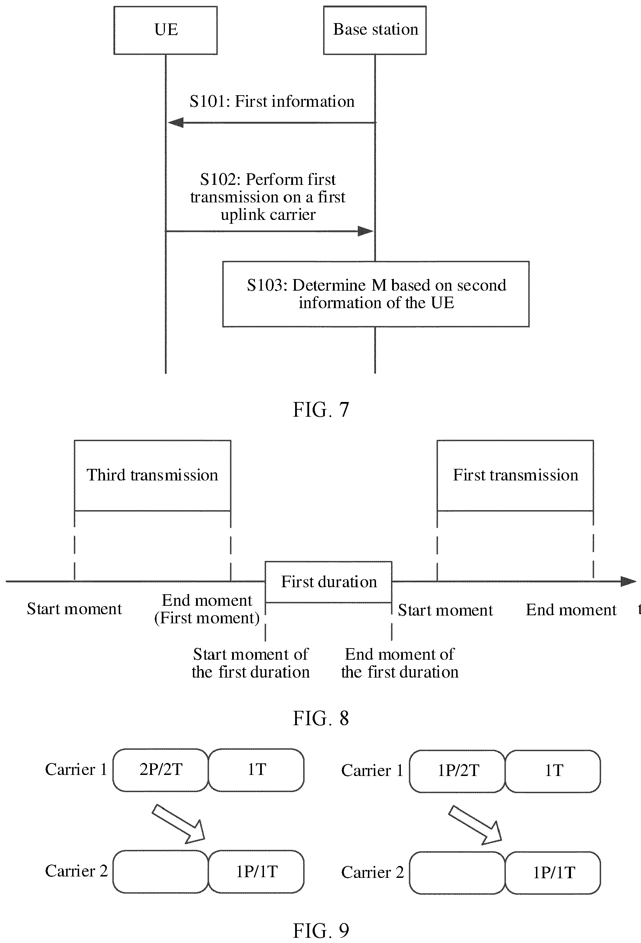

With reference to FIG. 7, the following describes the communication method according to embodiments of this application. It should be understood that in the following method embodiments, a receiving or sending action performed by UE or a base station may be performed by the transceiver module 520 shown in FIG. 5 and/or the transceiver unit 610 shown in FIG. 6, and a processing action performed by the UE or the base station may be performed by the processing module 510 shown in FIG. 5 and/or the processing unit 620 shown in FIG. 6.

As shown in FIG. 7, the communication method may include the following steps.

S101: The base station sends first information, where the first information is used for scheduling the LTE for performing first transmission on a first uplink carrier. The first transmission is N-port transmission, where N is a positive integer.

The first information may be carried in downlink control information (downlink control information, DCI) or higher layer signaling. Alternatively, the first information is DCI or higher layer signaling.

Optionally, the first uplink carrier is a carrier in a first uplink carrier set of the UE.

Correspondingly, the LTE obtains the first information.

S102: The UE performs first transmission on the first uplink carrier. When the UE performs first transmission, a quantity of ports supported by the UE for uplink transmission on the first uplink carrier is M, M is determined based on second information of at least one uplink carrier of the UE, and M≥N. The second information includes at least one of a bandwidth, a frequency, a path loss, a slot length, a number (or referred to as an identifier or an index), an identifier (identifier, ID) or an index (index) of a cell corresponding to the uplink carrier, information indicating whether the cell corresponding to the uplink carrier is a special cell (special cell, SpCell), information indicating whether the cell corresponding to the uplink carrier is a secondary cell, information indicating whether the cell corresponding to the uplink carrier is a physical uplink control channel (physical uplink control channel, PUCCH) secondary cell, information indicating that the cell corresponding to the uplink carrier is a secondary cell of a non-PUCCH secondary cell (or referred to as information indicating that the cell corresponding to the uplink carrier is a secondary cell other than the PUCCH secondary cell), third information, or priority indication information. The third information indicates whether a position of uplink radio frequency switching time is configured on the uplink carrier.

Correspondingly, the base station receives the first transmission.

It should be understood that the at least one uplink carrier is an uplink carrier (or referred to as an uplink carrier whose uplink radio frequency chain is switchable) that is of the UE and that supports uplink radio frequency chain switching.

Optionally, the at least one uplink carrier of the UE includes the first uplink carrier. Alternatively, the at least one uplink carrier of the UE includes an uplink carrier with a highest priority, a smallest number, or a largest number.

Optionally, the at least one uplink carrier of the LTE includes a carrier on which a position of uplink radio frequency switching time is located.

Optionally, the at least one uplink carrier of the LTE includes a carrier without a position of uplink radio frequency switching time.

Optionally, a carrier on which a position of uplink radio frequency switching time is located may be replaced with a carrier with a position of uplink radio frequency switching time. One carrier is a carrier on which a position of uplink radio frequency switching time is located, that is, the position of the uplink radio frequency switching time is configured on the carrier.

Optionally, a carrier without a position of uplink radio frequency switching time may be replaced with a carrier on which no position of uplink radio frequency switching time is located. One carrier is a carrier without a position of uplink radio frequency switching time, that is, no position of uplink radio frequency switching time is configured on the carrier.

Optionally, if a position of uplink switching time is on a carrier, it means that during uplink switching, a time-frequency resource of the carrier (or a cell in which the carrier is located) may not be used. In other words, a time-frequency resource of a carrier without the position of uplink switching time is more important. To ensure existence of a time-frequency resource of a carrier without the position of uplink switching time, a priority of the carrier without the position of uplink switching time is higher than a priority of the carrier on which the position of uplink switching time is located.

S103: The base station determines, based on the second information of the at least one uplink carrier of the LTE, the quantity M of ports supported by the LTE for uplink transmission on the first uplink carrier.

A possible value of M is used as an example herein. For example, M is equal to N or a minimum quantity of ports required by the UE for performing N-port uplink transmission on the first uplink carrier. Alternatively, M is determined based on a quantity of ports for second transmission performed by the LTE on another uplink carrier, or M is a maximum quantity of ports supported by the UE for uplink transmission on the first uplink carrier (that is, M is a maximum quantity of radio frequency chains supported by the UE on the first uplink carrier).

S103 may be before S102. For example, after determining the first information, the base station performs S102 before sending the first information.

According to the method, the base station and the UE may determine, based on the second information of the at least one uplink carrier of the UE, a quantity of radio frequency chains of the UE on the first uplink carrier in the first transmission on the first uplink carrier, so that the base station and the LTE have a consistent understanding of a state after the UE performs radio frequency chain switching each time, and uplink transmission performance can be improved.

Optionally, before S102, if the UE determines that the quantity of radio frequency chains on the first uplink carrier does not support the LTE in performing N-port uplink transmission on a first uplink resource, the UE needs to switch a radio frequency chain on another uplink carrier to the first uplink carrier in first duration. In other words, before starting the first transmission, the UE does not expect to perform uplink transmission on all or some carriers (including at least the first uplink carrier and another carrier related to the radio frequency chain switching) in the first uplink carrier set in the first duration.

As shown in FIG. 8, a start moment of the first duration is after the UE receives the first information and is after a first moment, and an end moment of the first duration is before the UE starts the first transmission. The first moment is an end moment of third transmission of the UE, and the third transmission includes uplink transmission performed on the first uplink carrier and/or uplink transmission performed on another uplink carrier in the first uplink carrier set. A length of the first duration may be preconfigured, predefined in a protocol, or indicated by the base station.

Specifically, after determining that a first condition is satisfied, the UE may switch a radio frequency chain on another uplink carrier in the first uplink carrier set to the first uplink carrier. In other words, when the first condition is satisfied, the LTE does not support N-port uplink transmission on the first uplink carrier.

The first condition includes M1+N>Z. M1 is a sum of quantities of radio frequency chains of the UE on an uplink carrier in the first uplink carrier set other than the first uplink carrier at a second moment, and Z is a total quantity of radio frequency chains of the UE.

The second moment includes any moment between the first moment and the start moment of the first duration. Alternatively, the second moment may be any moment between a moment at which the LTE starts the third transmission and the start moment of the first duration. FIG. 8 is used as an example. If the LTE is to perform first transmission, the second moment (or referred to as the second moment corresponding to the first transmission) may be any moment between the start moment of the third transmission and the start moment of the first duration.

Alternatively, the first condition includes M2<N. M2 is a quantity of ports supported by the UE for uplink transmission on the first uplink carrier at the second moment, and M2 is a positive integer.

The following describes the second information and a manner of determining M based on the second information.
(1) The second information may include the bandwidth. A larger bandwidth of the uplink carrier indicates better transmission performance of the uplink carrier.

The bandwidth of the uplink carrier may be configured by the base station by using higher layer signaling or DCI.

If the UE has a larger bandwidth on the first uplink carrier, a larger quantity of radio frequency chains may tend to be configured on the carrier. To preferentially ensure performance of the carrier, a larger quantity of radio frequency chains may be configured on the carrier. For example, M is the maximum quantity of ports supported by the UE for uplink transmission on the first uplink carrier, or M is determined based on the quantity of ports for the second transmission performed by the UE on the another uplink carrier. Therefore, M may be greater than N. If the UE has a smaller bandwidth on the first uplink carrier, a minimum quantity of radio frequency chains required for uplink transmission on the first uplink carrier is tend to be configured only for the first uplink carrier. In this application, that the minimum quantity of radio frequency chains required for uplink transmission on the first uplink carrier is configured only for the first uplink carrier may be understood as (or may be replaced with) that a quantity of radio frequency chains switched from the second uplink carrier to the first uplink carrier is determined based on a quantity of existing radio frequency chains of the first uplink carrier and the minimum quantity. Optionally, in this case, M is a minimum quantity of radio frequency chains required by the LTE for performing N-port uplink transmission on the first uplink carrier. For example, M is equal to N.

It should be understood that, the bandwidth of the first uplink carrier herein is larger/smaller than a bandwidth of an uplink carrier in the first uplink carrier set of the UE other than the first uplink carrier.

Optionally, in this application, a carrier on which the second transmission is located and the first uplink carrier may belong to the same first uplink carrier set.

(2) The second information may include the frequency. A lower frequency of the uplink carrier indicates better transmission performance of the uplink carrier.

The frequency of the uplink carrier may be configured by the base station by using higher layer signaling or DCI.

If the first uplink carrier of the LTE has a lower frequency, a larger quantity of radio frequency chains may tend to be configured on the carrier. To preferentially ensure performance of the carrier, a larger quantity of radio frequency chains may be configured on the carrier. For example, M is the maximum quantity of ports supported by the UE for uplink transmission on the first uplink carrier, or M is determined based on the quantity of ports for the second transmission performed by the UE on the another uplink carrier. Therefore, M may be greater than N. If the first uplink carrier of the UE has a higher frequency, a minimum quantity of radio frequency chains required for uplink transmission on the first uplink carrier is tend to be configured only for the first uplink carrier. That is, M is a minimum quantity of radio frequency chains required by the LTE for performing N-port uplink transmission on the first uplink carrier. For example, M is equal to N.

It should be understood that, the frequency of the first uplink carrier herein is higher/lower than a frequency of an uplink carrier in the first uplink carrier set of the UE other than the first uplink carrier.

(3) The second information may include the path loss. A lower path loss of the uplink carrier indicates better transmission performance of the uplink carrier.

The path loss of the uplink carrier may be configured by the base station for the UE by using higher layer signaling or DCI, or may be obtained by the UE by measuring a downlink carrier corresponding to the uplink carrier.

If the first uplink carrier of the LTE has a lower path loss, a larger quantity of radio frequency chains may tend to be configured on the carrier. To preferentially ensure performance of the carrier, a larger quantity of radio frequency chains may be configured on the carrier. For example, M is the maximum quantity of ports supported by the UE for uplink transmission on the first uplink carrier, or M is determined based on the quantity of ports for the second transmission performed by the UE on the another uplink carrier. Therefore, M may be greater than N. If the first uplink carrier of the UE has a higher path loss, a minimum quantity of radio frequency chains required for uplink transmission on the first uplink carrier is tend to be configured only for the first uplink carrier. That is, M is a minimum quantity of radio frequency chains required by the LTE for performing N-port uplink transmission on the first uplink carrier. For example, M is equal to N.

It should be understood that, the path loss of the first uplink carrier herein is higher/lower than a path loss of an uplink carrier in the first uplink carrier set of the UE other than the first uplink carrier.

(4) The second information may include the slot length. A shorter slot length of the uplink carrier indicates better transmission performance of the uplink carrier.

The slot length of the uplink carrier may be configured by the base station by using higher layer signaling or DCI.

If the first uplink carrier of the LTE has a shorter slot length, a larger quantity of radio frequency chains may tend to be configured on the carrier. To preferentially ensure performance of the carrier, a larger quantity of radio frequency chains may be configured on the carrier. For example, M is the maximum quantity of ports supported by the UE for uplink transmission on the first uplink carrier, or M is determined based on the quantity of ports for the second transmission performed by the UE on the another uplink carrier. Therefore, M may be greater than N. If the first uplink carrier of the UE has a longer slot length, a minimum quantity of radio frequency chains required for uplink transmission on the first uplink carrier is tend to be configured only for the first uplink carrier. That is, M is a minimum quantity of radio frequency chains required by the LTE for performing N-port uplink transmission on the first uplink carrier. For example, M is equal to N.

It should be understood that, the slot length of the first uplink carrier herein is longer/shorter than a slot length of an uplink carrier in the first uplink carrier set of the UE other than the first uplink carrier.

(5) The second information may include the information indicating whether the cell corresponding to the uplink carrier is the special cell, and the information indicating whether the cell corresponding to the uplink carrier is the secondary cell. The information indicating whether the cell corresponding to the uplink carrier is the special cell is, for example, special cell configuration information. The information indicating whether the cell corresponding to the uplink carrier is the secondary cell is, for example, secondary cell configuration information.

For a dual-connectivity operation, the special cell is a PCell of a master cell group (master cell group, MCG) or a primary secondary cell group cell (primary SCG cell, PSCell) of a secondary cell group (secondary cell group, SCG). Alternatively, in a non-dual connectivity scenario, the special cell is a PCell.

The information indicating whether the cell corresponding to the uplink carrier is the special cell and/or the information indicating whether the cell corresponding to the uplink carrier is the secondary cell may be carried in higher layer signaling or DCI.

In comparison with a secondary cell, uplink performance of an uplink carrier of a special cell may be preferentially ensured. Therefore, if a cell corresponding to the first uplink carrier of the LTE is a special cell, and a cell corresponding to another uplink carrier is a secondary cell, a larger quantity of radio frequency chains may tend to be configured on the carrier, that is, a larger quantity of radio frequency chains may be configured on the carrier. For example, M is the maximum quantity of ports supported by the UE for uplink transmission on the first uplink carrier, or M is determined based on the quantity of ports for the second transmission performed by the LTE on the another uplink carrier. Therefore, M may be greater than N. In this case, a radio frequency chain on an uplink carrier whose corresponding cell is a secondary cell may be preferentially switched to the first uplink carrier.

Otherwise, if the cell corresponding to the first uplink carrier of the UE is not a special cell, and/or a cell corresponding to another uplink carrier of the UE does not include a secondary cell, a minimum quantity of radio frequency chains required for uplink transmission on the first uplink carrier is tend to be configured only for the first uplink carrier. That is, M is a minimum quantity of radio frequency chains required by the LTE for performing N-port uplink transmission on the first uplink carrier. For example, M is equal to N.

For example, carriers in the first uplink carrier set of the UE are a carrier 1 and a carrier 2, and maximum quantities of radio frequency chains supported by the UE on both the carrier 1 and the carrier 2 are 2. The base station schedules the LTE for performing 1-port first transmission on the carrier 1, that is, the first uplink carrier is the carrier 1. If a cell corresponding to the carrier 1 is a special cell, and a cell corresponding to the carrier 2 is a secondary cell, M may be set to 2. If a cell corresponding to the carrier 1 is a secondary cell, or a cell corresponding to the carrier 2 is a special cell, M may be set to 1.

(6) The second information may include the information indicating that the cell corresponding to the uplink carrier is the PUCCH secondary cell, and the information indicating that the cell corresponding to the uplink carrier is the secondary cell (or referred to as a non-PUCCH secondary cell or another secondary cell) other than the PUCCH secondary cell. The PUCCH secondary cell is a secondary cell for which a PUCCH is configured.

The information indicating that the cell corresponding to the uplink carrier is the PUCCH secondary cell is, for example, secondary cell configuration information including PUCCH configuration information. The information indicating that the cell corresponding to the uplink carrier is the secondary cell of the non-PUCCH secondary cell is, for example, secondary cell configuration information that does not include PUCCH configuration information. The information indicating that the cell corresponding to the uplink carrier is the PUCCH secondary cell, and/or the information indicating that the cell corresponding to the uplink carrier is the secondary cell of the non-PUCCH secondary cell may be carried in higher layer signaling or DCI.

In addition, in comparison with another secondary cell, uplink performance of an uplink carrier of a PUCCH secondary cell can be preferentially ensured.

For example, the foregoing example is still used. If the cell corresponding to the first uplink carrier is a PUCCH secondary cell, a larger quantity of radio frequency chains may be configured on the carrier, that is, N is less than or equal to M, and M is less than or equal to the maximum quantity of ports supported by the UE for uplink transmission on the first uplink carrier. In this case, a radio frequency chain on an uplink carrier whose corresponding cell is a secondary cell may be preferentially switched to the first uplink carrier. For example, M is the maximum quantity of ports supported by the UE for uplink transmission on the first uplink carrier, or M is determined based on the quantity of ports used by the LTE for performing second transmission on the another uplink carrier. Therefore, M may be greater than N. If the cell corresponding to the first uplink carrier is not a PUCCH secondary cell, M may be configured as a minimum quantity of radio frequency chains required by the UE for performing N-port uplink transmission on the first uplink carrier. For example, M is equal to N.

(7) The second information may include the number. It may be specified that the number of the uplink carrier is related to a priority of the uplink carrier. If the priority is higher, uplink transmission performance of the uplink carrier needs to be preferentially ensured, that is, the UE may configure a larger quantity of radio frequency chains on the uplink carrier.

The number of the uplink carrier may be configured by the base station by using higher layer signaling or DCI.

For example, an uplink carrier whose default number is 1 (or may be a largest number, a smallest number, or another number being a specific value) is a highest-priority uplink carrier. If a number of the first uplink carrier of the UE is 1, a larger quantity of radio frequency chains may tend to be configured on the carrier. To preferentially ensure performance of the carrier, a larger quantity of radio frequency chains may be configured on the carrier. M is the maximum quantity of ports supported by the UE for uplink transmission on the first uplink carrier, or M is determined based on the quantity of ports for the second transmission performed by the UE on the another uplink carrier. Therefore, M may be greater than N. If a number of the first uplink carrier of the UE is not 1, only radio frequency chains required for the first uplink carrier are tend to be configured. For example, M is a minimum quantity of radio frequency chains required by the UE for performing N-port uplink transmission on the first uplink carrier. For example, M is equal to N. It should be understood that the number 1 herein is merely an example for description. Alternatively, an uplink carrier with another number may be set as a highest-priority or lowest-priority uplink carrier. For example, the number of the highest-priority uplink carrier may be indicated by using higher layer signaling or DCI. Alternatively, in a manner such as pre-configuration or protocol pre-definition, the UE and the base station consider a first number as a highest-priority number by default, and the first number is a positive integer.

Although the priority is mentioned in this example, the priority may not be mentioned. If an uplink carrier whose number is 1 (or may be a largest number, a smallest number, or another number being a specific value) is the first uplink carrier, it is directly considered by default that a larger quantity of radio frequency chains may tend to be configured on the first uplink carrier. To preferentially ensure performance of the carrier, a larger quantity of radio frequency chains may be configured on the carrier. That is, M is the maximum quantity of ports supported by the LTE for uplink transmission on the first uplink carrier, or M is determined based on the quantity of ports for the second transmission performed by the UE on the another uplink carrier. Therefore, M may be greater than N; or by default, a minimum quantity of radio frequency chains required for uplink transmission on the first uplink carrier is tend to be configured only for the first uplink carrier. That is, M is a minimum quantity of radio frequency chains required by the LTE for performing N-port uplink transmission on the first uplink carrier. For example, M is equal to N.

In the foregoing example, the number of the uplink carrier may be replaced with an identifier of a cell corresponding to the uplink carrier; or the number may be replaced with an identifier of a cell corresponding to the uplink carrier.

(8) The second information may include the information indicating whether the position of the uplink radio frequency switching time is configured on the uplink carrier, that is, the third information. A time-frequency resource of a carrier without a position of uplink switching time is more important.

When the first uplink carrier is a carrier for which no position of uplink radio frequency switching time is configured, M is the maximum quantity of ports supported by the terminal apparatus for uplink transmission on the first uplink carrier, or M is determined based on the quantity of ports for the second transmission performed by the UE on the another uplink carrier.

When the first uplink carrier is a carrier for which a position of uplink radio frequency switching time is configured, M is equal to N.

For example, the first transmission is 1-port transmission, and the first uplink carrier is a carrier without a position of uplink radio frequency switching time. In this case, during the 1-port transmission, an operation state of the UE is that the UE supports 2-port transmission on the first uplink carrier, that is, M is equal to the maximum quantity of ports (2 ports) supported for uplink transmission on the first uplink carrier. In addition, during the first transmission, the second transmission is not performed on another uplink carrier. Optionally, transmission before the first transmission is 2-port transmission on another uplink carrier; or is 1-port transmission on another uplink carrier, and the UE supports 2-port transmission on the another uplink carrier.

For another example, the first transmission is 1-port transmission, and the first uplink carrier is a carrier on which a position of uplink radio frequency switching time is located. In this case, during the 1-port transmission, an operation state of the LTE is that the LTE supports 1-port transmission on the first uplink carrier (in other words, the UE does not support 2-port transmission on the first uplink carrier), that is, M is equal to a quantity 1 of ports for the first transmission (that is, M=N). In addition, during the first transmission, the second transmission is not performed on another uplink carrier. Optionally, transmission before the first transmission is 2-port transmission on another uplink carrier; or is 1-port transmission on another uplink carrier, and the LTE supports 2-port transmission on the another uplink carrier.

If the first uplink carrier of the LTE is a carrier without a position of uplink switching time, a larger quantity of radio frequency chains may tend to be configured on the carrier. To preferentially ensure performance of the carrier, a larger quantity of radio frequency chains may be configured on the carrier. For example, M is the maximum quantity of ports supported by the LTE for uplink transmission on the first uplink carrier, or M is determined based on the quantity of ports for the second transmission performed by the UE on the another uplink carrier. Therefore, M may be greater than N. If the first uplink carrier of the LTE is a carrier on which a position of uplink radio frequency switching time is located, a minimum quantity of radio frequency chains required for uplink transmission on the first uplink carrier is tend to be configured only for the first uplink carrier. That is, M is a minimum quantity of radio frequency chains required by the LTE for performing N-port uplink transmission on the first uplink carrier. For example, M is equal to N.

Optionally, the third information of the uplink carrier indicates whether the position of the uplink radio frequency switching time is configured on the uplink carrier.

Optionally, the third information corresponding to the uplink carrier indicates whether the position of the uplink radio frequency switching time is configured on the uplink carrier. The following uses the scenario in Table 3 as an example for detailed description.

If a twelfth carrier is a carrier on which the position of the uplink radio frequency switching time is located (or an eleventh carrier is a carrier without the position of the uplink radio frequency switching time), and then if the UE is to send 1-port uplink transmission on the eleventh carrier, the UE does not perform uplink transmission on the twelfth carrier during the 1-port transmission, and previous uplink transmission is 2-port transmission on the twelfth carrier, an operation state of the UE during the 1-port transmission is that the LTE supports 2-port transmission on the eleventh carrier.

If a twelfth carrier is a carrier on which the position of the uplink radio frequency switching time is located (or an eleventh carrier is a carrier without the position of the uplink radio frequency switching time), and then if the UE is to send 1-port uplink transmission on the eleventh carrier, the UE does not perform uplink transmission on the twelfth carrier during the 1-port transmission, previous uplink transmission is 1-port transmission on the twelfth carrier, and an operation state of the UE is that the UE supports 2-port transmission on the twelfth carrier, the operation state of the UE during the 1-port transmission on the eleventh carrier is that the UE supports 2-port transmission on the eleventh carrier.

If a twelfth carrier is a carrier on which the position of the uplink radio frequency switching time is located (or an eleventh carrier is a carrier without the position of the uplink radio frequency switching time), and then if the UE is to send 1-port uplink transmission on the twelfth carrier, the UE does not perform uplink transmission on the eleventh carrier during the 1-port transmission, and previous uplink transmission is 2-port transmission on the eleventh carrier, an operation state of the LTE during the 1-port transmission is that the LTE does not support 2-port transmission on the twelfth carrier.

If a twelfth carrier is a carrier on which the position of the uplink radio frequency switching time is located (or an eleventh carrier is a carrier without the position of the uplink radio frequency switching time), and then if the UE is to send 1-port uplink transmission on the twelfth carrier, the UE does not perform uplink transmission on the eleventh carrier during the 1-port transmission, previous uplink transmission is 1-port transmission on the eleventh carrier, and an operation state of the UE is that the UE supports 2-port transmission on the eleventh carrier, the operation state of the UE during the 1-port transmission on the twelfth carrier is that the UE does not support 2-port transmission on the twelfth carrier.

Optionally, the twelfth carrier and a thirteenth carrier do not belong to a same band.

Optionally, the UE in this application is configured to be in a dual UL (dual UL) mode. Optionally, if the LTE is configured to be in the dual LTL mode, the LTE can be scheduled or configured with uplink transmission on two carriers simultaneously.

Optionally, if the position of the uplink radio frequency switching time is configured on the carrier 2, the position of the uplink radio frequency switching time is not configured on the carrier 1.

Optionally, if the position of the uplink radio frequency switching time is not configured on the carrier 2, the position of the uplink radio frequency switching time is configured on the carrier 1.

For example, if the position of the uplink radio frequency switching time is configured on the carrier 2, and then if the UE is to send 1-port transmission on the carrier 1, and the UE is in the case 2 in previous uplink transmission, the UE is to switch to the case 3 to perform 1-port transmission.

For example, if the position of the uplink radio frequency switching time is configured on the carrier 2, and then if the UE is to send 1-port transmission on the carrier 2, and the UE is in the case 3 in previous uplink transmission, the UE is to switch to the case 1 to perform 1-port transmission.

Optionally, that the UE is in the case 2 in previous uplink transmission may be replaced with that the previous uplink transmission is 2-port transmission on the carrier 2, or the previous uplink transmission is 1-port transmission on the carrier 2 and 2-port transmission is supported on the carrier 2.

Optionally, that the UE is in the case 3 in previous uplink transmission may be replaced with that the previous uplink transmission is 2-port transmission on the carrier 1, or the previous uplink transmission is 1-port transmission on the carrier 1 and 2-port transmission is supported on the carrier 1.

Optionally, that the UE is to switch to the case 1 to perform 1-port transmission may be replaced with that when the UE performs 1-port transmission, a quantity of ports supported by the UE for uplink transmission on a carrier on which the 1-port transmission is located is 1.

Optionally, that the UE is to switch to the case 2 to perform 1-port transmission may be replaced with that when the UE performs 1-port transmission, a quantity of ports supported by the UE for uplink transmission on a carrier on which the 1-port transmission is located is 2.

Optionally, that the UE is to switch to the case 3 to perform 1-port transmission may be replaced with that when the UE performs 1-port transmission, a quantity of ports supported by the UE for uplink transmission on a carrier on which the 1-port transmission is located is 2.

For example, if the position of the uplink radio frequency switching time is configured on the carrier 2, and then if the UE is to send 1-port transmission on the carrier 1, and does not perform uplink transmission on the carrier 2 during the 1-port transmission on the carrier 1 (or the UE is to perform 1P+0P transmission), and the UE is in the case 2 in previous uplink transmission, the UE is to switch to the case 3 to perform 1-port transmission.

For example, if the position of the uplink radio frequency switching time is configured on the carrier 2, and then if the UE is to send 1-port transmission on the carrier 2, and does not perform uplink transmission on the carrier 1 during the 1-port transmission on the carrier 2 (or the UE is to perform 0P+1P transmission), and the UE is in the case 3 in previous uplink transmission, the LTE is to switch to the case 1 to perform 1-port transmission.

Similarly, if the position of the uplink radio frequency switching time is configured on the carrier 1, refer to the method in the foregoing example for analogy.

For example, if the uplink radio frequency switching time is configured on the carrier 1, and then if the UE is to send 1-port transmission on the carrier 1, and the UE is in the case 2 in previous uplink transmission, the UE is to switch to the case 1 to perform 1-port transmission.

For example, if the uplink radio frequency switching time is configured on the carrier 1, and then if the UE is to send 1-port transmission on the carrier 2, and the UE is in the case 3 in previous uplink transmission, the UE is to switch to the case 2 to perform 1-port transmission.

The following describes the scenario of UE in Table 4. Table 4 shows switching between two bands, where a band A has one carrier (a carrier 1), and a band B has two carriers (a carrier 2 and a carrier 3). Optionally, the carrier 2 and the carrier 3 may be two consecutive carriers.

**Table 4**

| | Quantity of radio frequency chains in a band (band A+band B) | Quantity of ports allowed for uplink transmission (band A (carrier 1)+band B (carrier 2+carrier 3)) |
|---|---|---|
| Case 1 | 1T+1T | 1P+(0P+0P), 1P+(1P+0P), 1P+(0P+1P), 1P+(1P+1P), 0P+(1P+0P), 0P+(0P+1P), 0P+(1P+1P) |
| Case 2 | 0T+2T | 0P+(2P+0P), 0P+(0P+2P), 0P+(2P+2P), 0P+(1P+0P), 0P+(0P+1P), 0P+(1P+1P), 0P+(1P+2P), 0P+(2P+1P) |
| Case 3 | 2T+0T | 2P+(0P+0P), 1P+(0P+0P) |

It can be learned from Table 4 that, in the case 1, the state of the UE is that there is one radio frequency chain in the band A, and there is one radio frequency chain in the band B. One radio frequency chain in the band B can be shared by the two radio frequency chains in the band B. That is, in the case 1, one radio frequency chain is available on the two carriers in the band B simultaneously. In the case 2, two radio frequency chains are available on the two carriers in the band B simultaneously. That is, in the case 1, there is one radio frequency chain on the carrier 1, and there is one radio frequency chain on each of the carrier 2 and the carrier 3. In the case 2, there is no radio frequency chain on the carrier 1, and there are two radio frequency chains on each of the carrier 2 and the carrier 3. In the case 3, there are two radio frequency chains on the carrier 1, and there is no radio frequency chains on the carrier 2 and the carrier 3. Similar to Table 2 and Table 3, Table 4 also provides port states of uplink transmission on each carrier in different cases.

It is assumed that a thirteenth carrier is a carrier in the band A, and a fourteenth carrier is either of the two carriers in the band B.

Optionally, if the thirteenth carrier is a carrier on which a position of uplink radio frequency switching time is located, the two carriers in the band B are both carriers without the position of the uplink radio frequency switching time.

Optionally, if either of the two carriers in the band B is a carrier on which a position of uplink radio frequency switching time is located, the other one of the two carriers in the band B is also a carrier on which the position of the uplink radio frequency switching time is located, and the thirteenth carrier is a carrier without the position of the uplink radio frequency switching time.

If the fourteenth carrier is the carrier on which the position of the uplink radio frequency switching time is located (or the thirteenth carrier is the carrier without the position of the uplink radio frequency switching time), and then if the UE is to send 1-port uplink transmission on the thirteenth carrier, the UE does not perform uplink transmission on the fourteenth carrier during the 1-port transmission, and previous uplink transmission is 2-port transmission on the fourteenth carrier, an operation state of the UE during the 1-port transmission is that the UE supports 2-port transmission on the thirteenth carrier.

If the fourteenth carrier is the carrier on which the position of the uplink radio frequency switching time is located (or the thirteenth carrier is the carrier without the position of the uplink radio frequency switching time), and then if the UE is to send 1-port uplink transmission on the thirteenth carrier, the UE does not perform uplink transmission on the fourteenth carrier during the 1-port transmission, previous uplink transmission is 1-port transmission on the fourteenth carrier, and an operation state of the UE is that the UE supports 2-port transmission on the fourteenth carrier, the operation state of the UE during the 1-port transmission on the thirteenth carrier is that the UE supports 2-port transmission on the thirteenth carrier.

If the fourteenth carrier is the carrier on which the position of the uplink radio frequency switching time is located (or the thirteenth carrier is the carrier without the position of the uplink radio frequency switching time), and then if the UE is to send 1-port uplink transmission on the fourteenth carrier, the UE does not perform uplink transmission on the thirteenth carrier during the 1-port transmission, and previous uplink transmission is 2-port transmission on the thirteenth carrier, an operation state of the LTE during the 1-port transmission is that the LTE does not support 2-port transmission on the fourteenth carrier.

If the fourteenth carrier is the carrier on which the position of the uplink radio frequency switching time is located (or the thirteenth carrier is the carrier without the position of the uplink radio frequency switching time), and then if the UE is to send 1-port uplink transmission on the fourteenth carrier, the UE does not perform uplink transmission on the thirteenth carrier during the 1-port transmission, previous uplink transmission is 1-port transmission on the thirteenth carrier, and an operation state of the UE is that the UE supports 2-port transmission on the thirteenth carrier, the operation state of the UE during the 1-port transmission on the fourteenth carrier is that the UE does not support 2-port transmission on the fourteenth carrier.

Similarly, if the thirteenth carrier is the carrier on which the position of the uplink radio frequency switching time is located (or the fourteenth carrier is the carrier without the position of the uplink radio frequency switching time), behavior of the UE may be obtained by analogy with reference to the foregoing example.

For example, if the thirteenth carrier is the carrier on which the position of the uplink radio frequency switching time is located (or the fourteenth carrier is the carrier without the position of the uplink radio frequency switching time), and then if the LTE is to send 1-port uplink transmission on the thirteenth carrier, the UE does not perform uplink transmission on the fourteenth carrier during the 1-port transmission, previous uplink transmission is 2-port transmission on the fourteenth carrier (or previous uplink transmission is 1-port transmission on the fourteenth carrier and an operation state of the UE is that the LTE supports 2-port transmission on the fourteenth carrier), the operation state of the UE during the 1-port transmission on the thirteenth carrier is that the UE does not support 2-port transmission on the thirteenth carrier.

For example, if the thirteenth carrier is the carrier on which the position of the uplink radio frequency switching time is located (or the fourteenth carrier is the carrier without the position of the uplink radio frequency switching time), and then if the LTE is to send 1-port uplink transmission on the fourteenth carrier, the UE does not perform uplink transmission on the thirteenth carrier during the 1-port transmission, and previous uplink transmission is 2-port transmission on the thirteenth carrier (or previous uplink transmission is 1-port transmission on the thirteenth carrier and an operation state of the LTE is that the LTE supports 2-port transmission on the thirteenth carrier), the operation state of the UE during the 1-port transmission on the fourteenth carrier is that the UE supports 2-port transmission on the fourteenth carrier.

Optionally, "does not perform uplink transmission on the fourteenth carrier" may be replaced with "does not perform uplink transmission on either of the carriers in the band B".

(8) The second information includes the priority indication information of the uplink carri er.

The priority indication information may indicate a priority that is of the uplink carrier and that is determined by the base station. The base station may determine the priority of the uplink carrier based on at least one of the bandwidth, the frequency, the path loss, the slot length of the uplink carrier, the identifier of the cell corresponding to the uplink carrier, the number, the information indicating whether the cell corresponding to the uplink carrier is the special cell, the information indicating whether the cell corresponding to the uplink carrier is the PUCCH secondary cell or the secondary cell other than the PUCCH secondary cell, or the information indicating whether the cell corresponding to the uplink carrier is the secondary cell. For example, an uplink carrier with a larger bandwidth has a higher priority, an uplink carrier with a lower frequency has a higher priority, an uplink carrier with a lower path loss has a higher priority, an uplink carrier with a shorter slot length has a higher priority, an uplink carrier whose number (or an identifier corresponding to the uplink carrier) is 1 (or may be a maximum, minimum, or specific value) has a higher priority, a priority of an uplink carrier whose corresponding cell is a special cell is higher than a priority of an uplink carrier whose corresponding cell is a secondary cell, and/or a priority of an uplink carrier whose corresponding cell is a PUCCH secondary cell is higher than a priority of an uplink carrier whose corresponding cell is a secondary cell other than the PUCCH secondary cell.

Optionally, the priority of the carrier may be determined based on the third information. For example, a priority of an uplink carrier on which a position of uplink radio frequency switching time is located is lower than a priority of an uplink carrier without the position of the uplink radio frequency switching time. For example, third information of the carrier 2 indicates that a position of uplink radio frequency switching time is configured on the carrier 2, and third information of the carrier 1 indicates that the position of the uplink radio frequency switching time is not configured on the carrier 1. In this case, a priority of the carrier 1 is higher than a priority of the carrier 2.

Optionally, the priority indication information may indicate a priority for each uplink carrier of the LTE. Alternatively, the priority indication information may indicate a highest-priority uplink carrier and/or a lowest-priority uplink carrier of the UE, and optionally further indicate a priority of another uplink carrier.

As described above, if the priority is higher, uplink transmission performance of the uplink carrier needs to be preferentially ensured, that is, the LTE may configure a larger quantity of radio frequency chains on the uplink carrier. For example, if the first uplink carrier of the UE has a higher priority, a larger quantity of radio frequency chains may tend to be configured on the carrier. To preferentially ensure performance of the carrier, a larger quantity of radio frequency chains may be configured on the carrier. For example, M is the maximum quantity of ports supported by the UE for uplink transmission on the first uplink carrier, or M is determined based on the quantity of ports for the second transmission performed by the UE on the another uplink carrier. Therefore, M may be greater than N. If the first uplink carrier of the UE has a lower priority, a minimum quantity of radio frequency chains required for uplink transmission on the first uplink carrier is tend to be configured only for the first uplink carrier. That is, M may be a minimum quantity of radio frequency chains required by the LTE for performing N-port uplink transmission on the first uplink carrier. For example, M is equal to N.

It should be understood that, the priority of the first uplink carrier herein is higher/lower than a priority of an uplink carrier in the first uplink carrier set of the UE other than the first uplink carri er.

The priority indication information may be carried in higher layer signaling or DCI.

Herein, an example of determining, based on a priority of a carrier when a quantity of carriers in the first uplink carrier set is 2, a switching manner of switching a radio frequency chain to the first uplink carrier is described.

If the base station schedules the UE for performing N-port first transmission on the low-priority first uplink carrier, and the UE does not support sending N-port transmission on the low-priority carrier during the third transmission, the UE needs the first duration before the first transmission, that is, does not expect to perform transmission on either of the two carriers in the first duration. In this case, in the first transmission, the LTE does not support uplink transmission using N+1 (or another number greater than N+1) ports on a low-priority carrier. That is, in this example, M is equal to N. Correspondingly, the base station may determine M based on a priority of a carrier of the UE in a similar manner. Therefore, the base station and the UE agree on a value of M.

This has an advantage that the UE switches a quantity of radio frequency chains required for uplink transmission only from a low-priority carrier, and retains as many radio frequency chains as possible on a high-priority carrier, to ensure high-priority uplink performance. Because the base station schedules, as many times as possible, the LTE to perform uplink transmission on a high-priority carrier, the UE is still likely to switch a radio frequency chain on a low-priority carrier to a high-priority carrier subsequently, and the first duration is occupied again for the switching. However, during the current switching, as many radio frequency chains as possible are retained on the high-priority carrier, so that a quantity of switching times can be reduced, that is, the first duration is reduced, and a transmission delay is reduced.

In addition, if the base station schedules the LTE for performing N-port first transmission on the high-priority first uplink carrier, and the UE does not support N-port sending on the high-priority carrier in the third transmission, the UE needs the first duration before starting the first transmission, to switch a radio frequency chain on a low-priority carrier in the first uplink carrier set to the high-priority carrier, that is, the LTE does not expect to perform transmission on either of the high-priority carrier and the low-priority carrier in the first duration. If the UE does not perform uplink transmission on a carrier in the first uplink carrier set other than the first uplink carrier when performing first transmission, the UE supports K-port uplink transmission on a high-priority carrier when performing first transmission, that is, M is equal to K, where K is a maximum quantity of ports supported by the UE for uplink transmission on the high-priority carrier (that is, a maximum quantity of radio frequency chains supported by the UE on the carrier). If the UE also performs L-port second transmission on a low-priority carrier when performing first transmission, when (M-L) belongs to a set of quantities of radio frequency chains of the UE on the high-priority carrier, the UE supports (M-L)-port uplink transmission on the high-priority carrier when performing first transmission. When (M-L) does not belong to the set of quantities of radio frequency chains of the LTE on the high-priority carrier, during the first transmission, a quantity of radio frequency chains of the UE on the high-priority carrier is a maximum value not less than (M-L) in the set of quantities of radio frequency chains. A time-frequency resource for the first transmission overlaps a time-frequency resource for the second transmission. The overlapping herein is specifically overlapping in time domain. Correspondingly, the base station may determine M based on a priority of a carrier of the LTE in a similar manner. Therefore, the base station and the LTE agree on a value of M.

This has an advantage that the UE may switch as many radio frequency chains as possible to a high-priority carrier, or retain as few radio frequency chains as possible on a low-priority carrier, so that uplink performance of the high-priority can be preferentially ensured. Because the base station schedules, as many times as possible, the LTE to perform uplink transmission on a high-priority carrier, the UE is still likely to switch a radio frequency chain originally on a low-priority carrier to a high-priority carrier subsequently, and the first duration is occupied again for the switching. However, during the current switching, as many radio frequency chains as possible are switched to the high-priority carrier, so that a quantity of switching times can be reduced, that is, the first duration is reduced, and a transmission delay is reduced.

In addition, if priorities of the two uplink carriers (namely, the first uplink carrier and the second uplink carrier) in the first uplink carrier set of the LTE are equal, or the two uplink carriers do not involve priorities, and if the base station schedules the LTE for performing N-port first transmission on the first uplink carrier, and the LTE does not support sending N-port transmission on a low-priority carrier in the third transmission, the UE needs the first duration before the first transmission, that is, the LTE does not expect to perform transmission on either of the two carriers in the first duration. During radio frequency chain switching, the minimum quantity of radio frequency chains required for uplink transmission on the first uplink carrier is configured for only the first uplink carrier. Because it may be considered that the base station schedules the UE for performing uplink transmission on the first uplink carrier and the second uplink carrier at an equal probability, to reduce a quantity of subsequent switching times, a quantity of radio frequency chains on the first uplink carrier and a quantity of radio frequency chains on the second uplink carrier are kept as equal as possible. It should be understood that, in this application, the second uplink carrier is one of uplink carriers that are of the UE and whose uplink radio frequency chains are switchable.

In this application, that the UE does not support N-port sending on a carrier means that a quantity of radio frequency chains of the LTE on the carrier is less than N. For example, a total quantity of radio frequency chains of the UE is n, but during uplink transmission, k radio frequency chains of the n radio frequency chains are on a carrier in the first uplink carrier set other than the first uplink carrier; in other words, the UE supports k-port transmission on the carrier in the first uplink carrier set other than the first uplink carrier. In this case, a quantity of radio frequency chains on the first uplink carrier is (n-k), where (n-k) is less than N, and k is less than or equal to n.

It should be understood that the high-priority carrier in the foregoing example of determining the switching manner based on the priority of the carrier may also be replaced with: a carrier with a large bandwidth, a carrier with a low frequency, a carrier with a low path loss, a carrier with a short slot length, a carrier whose number (or an identifier of a cell corresponding to the uplink carrier) is 1 (or a maximum, minimum, or specific value), a carrier whose corresponding cell is a special cell, or a carrier whose corresponding cell is a PUCCH secondary cell. The low-priority carrier in the foregoing example of determining the switching manner based on the priority of the carrier may also be replaced with: a carrier with a small bandwidth, a carrier with a high frequency, a carrier with a high path loss, a carrier with a long slot length, a carrier whose number (or an identifier of a cell corresponding to the uplink carrier) is not 1 (or not a maximum, minimum, or specific value), a carrier whose corresponding cell is a non-special cell, or a carrier whose corresponding cell is a non-PUCCH secondary cell.

Optionally, the high-priority carrier in the foregoing example of determining the switching manner based on the priority of the carrier may alternatively be replaced with a carrier without a position of uplink radio frequency switching time. Optionally, the low-priority carrier in the foregoing example of determining the switching manner based on the priority of the carrier may alternatively be replaced with a carrier on which a position of uplink radio frequency switching time is located.

It should be understood that the value of M may be determined based on one or more pieces of second information in the foregoing examples. In an example in which the value of M is determined based on the plurality of pieces of second information, when bandwidths of a plurality of uplink carriers are the same, priorities of the uplink carriers are determined based on the priority indication information, and the value of M is determined based on the priorities.

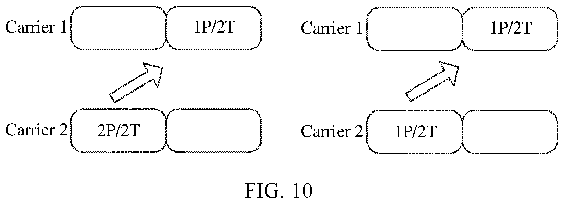

The following uses an example in which uplink carriers having switchable uplink radio frequency chains of the UE are a carrier 1 and a carrier 2 respectively (that is, carriers in the first uplink carrier set are a carrier 1 and a carrier 2) to specifically describe, with reference to FIG. 9 and FIG. 10, a case in which a total quantity of radio frequency chains of the UE is 2 and a maximum quantity of radio frequency chains supported on both the carrier 1 and the carrier 2 is 2, the base station determines a radio frequency chain switching manner of the UE based on different second information.

It should be understood that, when the first uplink carrier set of the LTE includes two carriers, and a maximum quantity of radio frequency chains supported on each carrier in the first uplink carrier set is 2, a state of the LTE and a quantity of ports supported for uplink transmission on the carrier are shown in Table 3.

### Example 1: A bandwidth of the carrier 1 is greater than a bandwidth of the carrier 2.

As shown in FIG. 9, if the UE needs to switch from 2P+0P or 1P+0P in the case 3 shown in Table 3 to 0P+1P, or if the LTE in the 2T+0T state needs to perform 1-port first transmission on the carrier 2, when the bandwidth of the carrier 1 is greater than the bandwidth of the carrier 2, the UE may switch to 0P+1P in the case 1, to be specific, switch one radio frequency chain to the carrier 2, and retain one radio frequency chain on the carrier 1, instead of switching to 0P+1P in the case 2. In other words, when radio frequency chain switching needs to be performed to the carrier 2 to support the 1-port transmission on the carrier 2, only one radio frequency chain is switched to the carrier 2. Therefore, the UE may further retain one radio frequency chain on the carrier 1 with the larger bandwidth to perform uplink sending, so as to ensure uplink performance of the carrier 1. Alternatively, the base station may determine, based on the bandwidth of the carrier 1 and the bandwidth of the carrier 2, that the UE is to switch from the case 3 to 0P+1P in the case 1.

As shown in FIG. 10, if the LTE switches from 0P+2P or 0P+1P in the case 2 shown in Table 3 to 1P+0P, or if the UE in the 0T+2T state needs to perform 1-port first transmission on the carrier 1, when the bandwidth of the carrier 1 is greater than the bandwidth of the carrier 2, the UE may switch to 1P+0P in the case 3, to be specific, switch the two radio frequency chains to the carrier 1, instead of switching to 1P+0P in the case 1. In other words, when the UE in the 0T+2T state performs radio frequency chain switching to the carrier 1, regardless of whether the base station schedules the LTE for sending 1-port or 2-port uplink transmission on the carrier 1, the two radio frequency chains are directly switched to the carrier 1. A reason is that the base station tends to schedule transmission using a large quantity of ports on a high-port uplink carrier. In this case, the LTE may switch the two radio frequency chains in the first duration, to prevent the base station from switching the radio frequency chain from the carrier 2 to the carrier 1 again when subsequently scheduling 2-port transmission on the carrier 1, so that a switching gap is reduced. Alternatively, the base station may determine, based on the bandwidth of the carrier 1 and the bandwidth of the carrier 2, that the UE is to switch from the case 2 to 1P+0P in the case 3. In addition, if the LTE performs 1-port transmission on the carrier 1, and the base station also schedules the UE for performing 1-port transmission on the carrier 2, the LTE can switch only to 1P+0P in the case 1.

Similarly, if the bandwidth of the carrier 2 is greater than the bandwidth of the carrier 1, the LTE and the base station may perform processing similar to that in FIG. 9 or FIG. 10.

For example, if the LTE switches from the case 3 to 0P+1P, the LTE may switch to 0P+1P in the case 2, instead of switching to 0P+1P in the case 1. In other words, when the carrier 2 is switched to, regardless of whether the 1-port or 2-port uplink transmission is sent, 2Tx are directly switched to the carrier 2. Therefore, the UE may switch the two radio frequency chains in one first duration, to reduce a switching gap. For another example, if the LTE switches from the case 2 to 1P+0P, the UE may switch to 1P+0P in the case 1, instead of switching to 1P+0P in the case 3. In other words, when the carrier 1 is switched to, if only 1-port uplink transmission is performed on the carrier 1, only one radio frequency chain is switched to the carrier 1, to ensure that 1-port uplink transmission can still be performed on the carrier 2 with the larger bandwidth.

Based on the same processing manners, if a frequency of the carrier 1 is lower than a frequency of the carrier 2, a path loss of the carrier 1 is lower than a path loss of the carrier 2, or a slot length of the carrier 1 is shorter than a slot length of the carrier 2, for processing manners of the UE and the base station, refer to the example shown in FIG. 9 or FIG. 10. For example, when the frequency of the carrier 1 is lower than the frequency of the carrier 2, the path loss of the carrier 1 is lower than the path loss of the carrier 2, or the slot length of the carrier 1 is shorter than the slot length of the carrier 2, if the LTE needs to switch from 2P+0P or 1P+0P in the case 3 to 0P+1P, or the UE in the 2T+0T state needs to perform 1-port first transmission on the carrier 2, the UE may switch from 2P+0P or 1P+0P in the case 3 to 0P+1P in the case 1, instead of 0P+1P in the case 2. For another example, when the frequency of the carrier 1 is lower than the frequency of the carrier 2, the path loss of the carrier 1 is lower than the path loss of the carrier 2, or the slot length of the carrier 1 is shorter than the slot length of the carrier 2, if the LTE switches from 0P+2P or 0P+1P in the case 2 to 1P+0P, or the LTE in the 0T+2T state needs to perform 1-port transmission on the carrier 1, the UE may switch from 0P+2P or 0P+1P in the case 2 to 1P+0P in the case 3, instead of 1P+0P in the case 1.

Based on same processing manners, if a position of uplink radio frequency switching time is configured on the carrier 2, for processing manners of the LTE and the base station, refer to the example shown in FIG. 9 or FIG. 10. For example, when the position of uplink radio frequency switching time is configured on the carrier 2, if the LTE needs to switch from 2P+0P or 1P+0P in the case 3 to 0P+1P, or the UE in the 2T+0T state needs to perform 1-port first transmission on the carrier 2, the UE may switch from 2P+0P or 1P+0P in the case 3 to 0P+1P in the case 1, instead of 0P+1P in the case 2. For another example, when the position of the uplink radio frequency switching time is configured on the carrier 2, if the UE switches from 0P+2P or 0P+1P in the case 2 to 1P+0P, or the UE in the 0T+2T state needs to perform 1-port transmission on the carrier 1, the UE may switch from 0P+2P or 0P+1P in the case 2 to 1P+0P in the case 3, instead of 1P+0P in the case 1.

### Example 2: A number of the carrier 1 is 1.

FIG. 9 is still used as an example. Assuming that the UE switches from 2P+0P or 1P+0P in the case 3 shown in Table 3 to 0P+1P, or if the LTE in the 2T+0T state needs to perform 1-port first transmission on the carrier 2, when the number of the carrier 1 is 1 and a number of the carrier 2 is not 1, if the carrier 1 is a highest-priority carrier, the UE may switch to 0P+1P in the case 1, in other words, switch one radio frequency chain to the carrier 2, instead of switching to 0P+1P in the case 2, that is, switch all the two radio frequency chains to the carrier 2. In other words, when the carrier 2 is switched to, if only 1-port uplink transmission is sent on the carrier 2, only one radio frequency chain is switched, to ensure that there is one radio frequency chain on the higher-priority carrier 1. Alternatively, the base station may determine, based on the numbers of the carrier 1 and the carrier 2, that the UE is to switch from the case 3 to 0P+1P in the case 1.

FIG. 10 is used as an example. Assuming that the UE switches from 0P+2P or 0P+1P in the case 2 shown in Table 3 to 1P+0P, or if the LTE in the 0T+2T state needs to perform 1-port first transmission on the carrier 1, when the number of the carrier 1 is 1 and a number of the carrier 2 is not 1, if the carrier 1 is a highest-priority carrier, the UE is to switch to 1P+0P in the case 3, instead of switching to 1P+0P in the case 1. In other words, when the carrier 1 is switched to, regardless of whether 1-port or 2-port uplink transmission is sent on the carrier 1, the two radio frequency chains are directly switched to the carrier 1, to ensure that the higher-priority carrier 1 has as many radio frequency chains as possible, so as to avoid subsequent radio frequency chain switching. Alternatively, the base station may determine, based on the numbers of the carrier 1 and the carrier 2, that the UE is to switch from the case 2 to 1P+0P in the case 3.

### Example 3: A cell corresponding to the carrier 1 is a special cell.

FIG. 9 is still used as an example. If the UE switches from 2P+0P or 1P+0P in the case 3 shown in Table 3 to 0P+1P, or if the LTE in the 2T+0T state needs to perform 1-port first transmission on the carrier 2, when the cell corresponding to the carrier 1 is the special cell, the UE may switch to 0P+1P in the case 1, in other words, switch one radio frequency chain to the carrier 2, instead of switching to 0P+1P in the case 2, that is, switch all the two radio frequency chains to the carrier 2. In other words, when the carrier 2 is switched to, if only 1-port uplink transmission is sent on the carrier 2, only one radio frequency chain is switched, to ensure that there is one radio frequency chain on the higher-priority carrier 1. Alternatively, when the cell corresponding to the carrier 1 is the special cell, the base station may determine that the LTE is to switch from the case 3 to 0P+1P in the case 1.

FIG. 10 is still used as an example. If the UE switches from 0P+2P or 0P+1P in the case 2 shown in Table 3 to 1P+0P, or if the LTE in the 0T+2T state needs to perform 1-port first transmission on the carrier 1, when the cell corresponding to the carrier 1 is the special cell, the LTE is to switch to 1P+0P in the case 3, instead of switching to 1P+0P in the case 1. In other words, when the carrier 1 is switched to, regardless of whether 1-port or 2-port uplink transmission is sent on the carrier 1, the two radio frequency chains are directly switched to the carrier 1, to ensure that the higher-priority carrier 1 has as many radio frequency chains as possible, so as to avoid subsequent radio frequency chain switching. Alternatively, when the cell corresponding to the carrier 1 is the special cell, the base station may determine that the UE is to switch from the case 2 to 1P+0P in the case 3.

Example 4: Priorities of the carrier 1 and the carrier 2 are the same. In other words, second information of the carrier 1 is the same as second information of the carrier 2. In other words, priorities of the carrier 1 and the carrier 2 are not distinguished.

As shown in FIG. 9, if the UE switches from 2P+0P or 1P+0P in the case 3 shown in Table 3 to 0P+1P, or if the UE in the 2T+0T state needs to perform 1-port first transmission on the carrier 2, when the priorities of the carrier 1 and the carrier 2 are the same, or the second information of the carrier 1 is the same as the second information of the carrier 2, or the priorities of the carrier 1 and the carrier 2 are not distinguished, the UE may switch to 0P+1P in the case 1, in other words, switch one radio frequency chain to the carrier 2, instead of switching to 0P+1P in the case 2, that is, switch all the two radio frequency chains to the carrier 2. The base station may also learn that the UE needs to switch from the case 3 to 0P+1P in the case 1.

Similarly, if the UE switches from 0P+2P or 0P+1P in the case 2 shown in Table 3 to 1P+0P, or if the UE in the 0T+2T state needs to perform 1-port first transmission on the carrier 1, when the priorities of the carrier 1 and the carrier 2 are the same, or the second information of the carrier 1 is the same as the second information of the carrier 2, or the priorities of the carrier 1 and the carrier 2 are not distinguished, the LTE may switch to 1P+0P in the case 1 instead of 1P+0P in the case 3. The base station may also learn that the LTE needs to switch from the case 2 to 1P+0P in the case 1.

Example 5: A quantity of carriers in the first uplink carrier set of the UE is 2 (for example, a carrier 1 and a carrier 2), and a quantity of radio frequency chains of each uplink carrier is greater than or equal to 3.

It is assumed that when a quantity of radio frequency chains of the UE on the carrier 1 is a maximum quantity of radio frequency chains supported on the carrier 1, a quantity of ports supported by the UE for uplink transmission on the carrier 1 is X1 (that is, the maximum quantity of radio frequency chains supported by the LTE on the carrier 1 is X1); and when a quantity of radio frequency chains of the UE on the carrier 2 is a maximum quantity of radio frequency chains supported by the LTE on the carrier 2, a quantity of ports supported by the LTE for uplink transmission on the carrier 2 is Y1 (that is, a maximum quantity of radio frequency chains supported by the LTE on carrier 2 is Y1); in addition, a total quantity of radio frequency chains of the LTE on the two carriers is Z, where 0<X1≤Z, and 0<X2≤Z. When the quantity of radio frequency chains of the UE on the carrier 1 is the maximum quantity of radio frequency chains supported by the UE on the carrier 1, a quantity of ports for uplink transmission of the UE on the carrier 1 may be X2, X3, X4, or X5. X3, X4, and X5 are not zero, X2<X3≤X1, and X2<X4≤X1. X2 may exist or may not exist (for example, X2 is 0). For example, if the UE supports uplink transmission using a maximum of one port on the carrier 1, X1 is equal to 1, and X2 does not exist. For another example, if the UE supports uplink transmission using a maximum of two ports on the carrier 1, X1 is equal to 2, and X2 exists and is equal to 1. Y2, Y3, Y4, and Y5 are quantities of ports allowed by the UE for transmission on the carrier 2 when the quantity of radio frequency chains of the UE on the carrier 2 is the maximum quantity of radio frequency chains supported by the LTE on the carrier 2, where Y3, Y4, and Y5 are all not zero, Y2<Y3≤Y1, and Y2<Y4≤Y1. Y2 may exist or may not exist (for example, Y2 is 0).

If a priority of the carrier 1 is high, a bandwidth of the carrier 1 is greater than a bandwidth of the carrier 2, a frequency of the carrier 1 is lower than a frequency of the carrier 2, a path loss of the carrier 1 is lower than a path loss of the carrier 2, a slot length of the carrier 1 is shorter than a slot length of the carrier 2, a number (or an identifier of a cell corresponding to an uplink carrier) is 1 (or a maximum, minimum, or specified value), a cell corresponding to the carrier 1 is a special cell and a cell corresponding to the carrier 2 is a secondary cell, or a cell corresponding to the carrier 1 is a PUCCH secondary cell and a cell corresponding to the carrier 2 is a secondary cell other than the PUCCH secondary cell:

If the UE is to perform X4-port first transmission on the carrier 1, that is, the first uplink carrier is the carrier 1, and the UE does not support X4-port uplink transmission on the carrier 1 at the second moment, the UE does not expect to perform transmission on either of the two carriers in the first duration, that is, the UE performs radio frequency chain switching in the first duration. If the LTE performs X4-port uplink transmission on the carrier 1, and the LTE does not perform uplink sending on the carrier 2 during the uplink transmission, a state of the UE includes: The UE supports X1-port uplink transmission on the carrier 1. In addition, the state of the UE further includes: The quantity of radio frequency chains of the UE on the carrier 2 is a maximum value that is in a set of quantities of radio frequency chains of the carrier 2 and that is less than or equal to (Z-X1). If the UE performs X4-port uplink transmission on the carrier 1, and the UE further performs Y5-port uplink transmission on the carrier 2 during the uplink transmission, where 0<Y5≤Z-X4 and Y5≤Y1, a state of the UE in the first uplink transmission includes: The quantity of radio frequency chains on the carrier 1 is a maximum value that is in a set of quantities of radio frequency chains of the carrier 1 and that is less than or equal to (Z-Y5). In addition, the state of the UE further includes: The quantity of radio frequency chains of the UE on the carrier 2 is a maximum value that is in a set of quantities of radio frequency chains of the carrier 2 and that is less than or equal to (Z-X5).

That the UE does not support X4-port uplink transmission on the carrier 1 at the second moment includes but is not limited to that any one of the following conditions is satisfied:

The UE performs Y2-port uplink transmission on the carrier 2 in the third transmission, and the state of the LTE at the second moment is that the LTE supports Y3-port uplink transmission on the carrier 2, where X4+Y3>Z; the UE sends Y3-port uplink transmission on the carrier 2 during the third transmission, where X4+Y3>Z; regardless of a quantity of ports for uplink transmission sent by the LTE on the carrier 2 during the third transmission, the state of the UE at the second moment is that the LTE supports Y3-port uplink transmission on the carrier 2, where X4+Y3>Z; or the UE performs any uplink transmission using ports whose quantity is less than X4 on the carrier 1 in the third transmission, and the state of the LTE at the second moment is that the LTE does not support X4-port uplink transmission on the carrier 1.

If the UE is to perform Y4-port first transmission on the carrier 2, that is, the first uplink carrier is the carrier 2, and the UE does not support Y4-port uplink transmission on the carrier 2 at the second moment, the UE does not expect to perform transmission on either of the two carriers in the first duration. If the UE sends the Y4-port uplink transmission on the carrier 2, in the Y4-port uplink transmission, the state of the LTE includes: The quantity of radio frequency chains of the LTE on the carrier 2 is Y4. In addition, the state of the LTE further includes: The quantity of radio frequency chains of the UE on the carrier 1 is a maximum value that is in the set of quantities of radio frequency chains of the carrier 1 and that is less than or equal to (Z-Y4).

That the UE does not support Y4-port uplink transmission on the carrier 2 at the second moment may be:

The UE sends X2-port uplink transmission on the carrier 1 in the third transmission, and the state of the LTE at the second moment is that the UE supports X3-port uplink transmission on the carrier 1, where Y4+X3>Z; the UE sends X3-port uplink transmission on the carrier 1 during the third transmission, where Y4+X3>Z; regardless of a quantity of ports for uplink transmission sent by the LTE on the carrier 1 during the third transmission, the state of the LTE at the second moment is that the UE supports X3-port uplink transmission on the carrier 1, where Y4+X3>Z; or the UE performs any uplink transmission using ports whose quantity is less than Y4 on the carrier 2 in the third transmission, and the state of the LTE at the second moment is that the LTE does not support Y4-port uplink transmission on the carrier 2.

In another possible example, in the communication method provided in embodiments of this application, S102 shown in FIG. 7 may be replaced with the following:

The UE performs first transmission on the first uplink carrier. When the UE performs first transmission, the quantity of ports supported by the UE for uplink transmission on the first uplink carrier is N; or the quantity of ports supported by the UE for uplink transmission on the first uplink carrier is the minimum quantity of ports required by the LTE for performing N-port uplink transmission on the first uplink carrier. In this example, at the second moment, the UE does not support N-port transmission on the first uplink carrier.

Correspondingly, the base station receives the first transmission.

Therefore, based on this example, when the UE performs radio frequency chain switching, the minimum quantity of radio frequency chains required for uplink transmission on the first uplink carrier is tend to be configured only for the first uplink carrier, so that the UE and the base station reach a consensus understanding of a radio frequency chain switching manner.

FIG. 10 is still used as an example. If the UE switches from 2P+0P or 1P+0P in the case 3 shown in Table 3 to 0P+1P, or if the UE in the 2T+0T state needs to perform 1-port transmission on the carrier 2, the LTE may switch to 0P+1P in the case 1, in other words, preferentially switch one radio frequency chain to the carrier 2, instead of switching to 0P+1P in the case 2, that is, switch all the two radio frequency chains to the carrier 2, to reduce a quantity of switching times. The base station may also learn that the LTE needs to switch from the case 3 to 0P+1P in the case 1.

In the communication method provided in embodiments of this application, if a quantity of carriers in the first uplink carrier set of the UE other than the first uplink carrier is greater than or equal to 2, when a radio frequency chain on another uplink carrier needs to be switched to the first uplink carrier, the LTE and the base station may determine, based on second information of the another uplink carrier, an uplink carrier from which a radio frequency chain is to be switched to the first uplink carrier, so that the LTE and the base station reach a consensus on the uplink carrier from which the radio frequency chain is to be switched, to improve uplink transmission performance. For the second information, refer to the foregoing descriptions.

Specifically, if the UE performs first transmission on the first uplink carrier, and determines that a third uplink carrier is an uplink carrier that is in the first uplink carrier set of the LTE and whose radio frequency chain is switchable, the LTE may switch a radio frequency chain on the third uplink carrier to the first uplink carrier. In other words, in the first duration, the UE does not expect at least (at least does not expect) to perform uplink transmission on either of the first uplink carrier and the third uplink carrier in the first uplink carrier set. Correspondingly, the base station may learn that the UE switches the radio frequency chain on the third uplink carrier to the first uplink carrier, that is, determine that the LTE does not expect at least to perform uplink transmission on either of the first uplink carrier and the third uplink carrier in the first uplink carrier set. The third uplink carrier may be understood as the same as the second uplink carrier.

Optionally, the third uplink carrier may be a lowest-priority uplink carrier in uplink carriers that are in the first uplink carrier set of the UE and whose radio frequency chains are switchable. It should be understood that, in this application, the lowest-priority uplink carrier may also be replaced with an uplink carrier with a smallest bandwidth, a highest frequency, a highest path loss, or a longest slot length, an uplink carrier with a number (or an identifier of a cell corresponding to the uplink carrier) being not 1 (or not a maximum, minimum, or specific value), an uplink carrier whose corresponding cell is a non-special cell, or an uplink carrier whose corresponding cell is a non-PUCCH secondary cell.

When the quantity of carriers in the first uplink carrier set of the LTE is greater than or equal to 3, the UE may further switch at least one radio frequency chain on the fourth uplink carrier to the first uplink carrier when a specific condition is satisfied. Specifically, when K+L<P is satisfied, the UE does not (or does not expect) perform uplink sending on the fourth uplink carrier in the first duration. P is a minimum quantity of radio frequency chains required by the UE for performing first transmission, K≥M, L is the quantity of radio frequency chains that are allowed to be switched on the third uplink carrier, K is a quantity of ports supported by the LTE for uplink transmission on the first uplink carrier at the second moment, and the second moment includes any moment between the first moment and the start moment of the first duration. In other words, K is a quantity of radio frequency chains of the UE on the first uplink carrier at the second moment. Therefore, when all radio frequency chains of the third uplink carrier are switched to the first uplink carrier, if the UE still does not support the first transmission on the first uplink carrier, at least one radio frequency chain on the fourth uplink carrier needs to be switched to the first uplink carri er.

Optionally, the fourth uplink carrier is a lowest-priority carrier that is in uplink carriers whose radio frequency chain is switchable in the first uplink carrier set of the UE and whose priority is higher than that of the third uplink carrier.

When the quantity of uplink carriers in the first uplink carrier set of the UE is greater than or equal to 3, the total quantity of radio frequency chains of the UE is 2, and the maximum quantity of radio frequency chains supported on each uplink carrier is equal to 2, a priority relationship between the plurality of uplink carriers may be classified into at least the following two cases: In a case 1, priorities of the plurality of carriers are different. In a case 2, priorities of at least two carriers are the same, but are different from a priority of at least one carrier.

The following provides descriptions with reference to Example 6 and Example 7.

Example 6: Uplink carriers in the first uplink carrier set are a carrier 1, a carrier 2, and a carrier 3, a priority of the carrier 1 is higher than a priority of the carrier 2, and a priority of the carrier 2 is higher than a priority of the carrier 3.

If the LTE is to perform first transmission on the carrier 1, and the first transmission is 1-port uplink transmission, that is, the first uplink carrier is the carrier 1, and the UE does not support sending 1-port uplink transmission on the carrier 1 at the second moment, the UE at least does not expect to perform transmission on the carrier 1 in the first duration. If the UE does not perform transmission on a carrier in the first uplink carrier set other than the first uplink carrier when performing first transmission, the UE supports 2-port uplink transmission on the carrier 1 during the first transmission.

That the UE does not support sending 1-port uplink transmission on the carrier 1 at the second moment includes but is not limited to any one of the following second conditions:

In the third transmission, the UE sends 1-port uplink transmission on any carrier in the first uplink carrier set other than the first uplink carrier, and supports 2-port uplink transmission on the carrier that sends the 1-port uplink transmission; in the third transmission, the UE sends 2-port uplink transmission on any carrier in the first uplink carrier set other than the first uplink carrier; in the third transmission, the UE sends uplink transmission using any quantity of ports on a carrier in the first uplink carrier set other than the first uplink carrier, and supports 2-port uplink transmission on the carrier that performs uplink sending; during the third transmission, the UE simultaneously performs 1-port transmission on two carriers in the first uplink carrier set other than the first uplink carrier; during the third transmission, the UE supports simultaneous sending of 1-port transmission on two carriers in the first uplink carrier set other than the first uplink carrier; or the last two times of transmission performed by the UE before the first transmission are respectively 1-port uplink transmission performed by the UE on two carriers in the first uplink carrier set other than the first uplink carrier, but radio frequency chain switching is not performed between the two times of 1-port uplink transmission.

If the LTE is to perform first transmission on the carrier 2, and the first transmission is 1-port uplink transmission, that is, the first uplink carrier is the carrier 2, and any one of the second conditions is satisfied, the UE at least does not expect to perform transmission on the carrier 2 in the first duration. If the third condition is satisfied, the LTE supports 2-port uplink transmission on the carrier 2 during the first transmission. The third condition includes: The UE sends 1-port uplink transmission on the carrier 3 and supports 2-port uplink transmission on the carrier 3 in the third transmission; the UE sends 2-port uplink transmission on the carrier 3 in the third transmission, or the UE performs uplink transmission using any quantity of ports on the carrier 3 in the third transmission, a state of the UE at the second moment is that a quantity of radio frequency chains on the carrier 3 is 2. If the fourth condition is satisfied, the UE supports 1-port uplink transmission on the carrier 2 during the first transmission. The fourth condition includes: The UE sends at least 1-port uplink transmission on the carrier 1 in the third transmission, or the state of the UE at the second moment is that the UE supports at least 1-port uplink transmission on the carrier 1.

In addition, if the UE is to send 1-port first transmission on the carrier 3, that is, the first uplink carrier is the carrier 3, and the first condition is satisfied, the UE at least does not expect to perform transmission on the carrier 3 in the first duration, and during the first transmission, the UE supports only 1-port uplink transmission on the carrier 3 (that is, the UE does not support 2-port uplink transmission on the carrier 3, or the quantity of radio frequency chains of the LTE on the carrier 3 is 1).

Example 7: Uplink carriers in the first uplink carrier set of the UE are a carrier 1, a carrier 2, and a carrier 3, a priority of the carrier 1 is higher than a priority of the carrier 2, and a priority of the carrier 2 is equal to a priority of the carrier 3.

If the UE is to send 1-port first transmission on the carrier 1, that is, the first uplink carrier is the carrier 1, and any one of the second conditions is satisfied, the LTE at least does not expect to perform transmission on the carrier 1 in the first duration. If the UE does not perform transmission on a carrier in the first uplink carrier set other than the first uplink carrier when performing first transmission, the UE supports 2-port uplink transmission on the carrier 1 during the first transmission.

If the UE is to send 1-port first transmission on the carrier 2 (carrier 3), that is, the first uplink carrier is the carrier 2 (carrier 3), and any one of the second conditions is satisfied, the UE at least does not expect to perform transmission on the carrier 2 (carrier 3) in the first duration. During the first transmission, the UE supports 1-port uplink transmission on the carrier 2 (carrier 3), and does not support 2-port uplink transmission.

Similarly, if the priority of the carrier 1 is equal to the priority of the carrier 2, and the priority of the carrier 1 and the priority of the carrier 2 are higher than the priority of the carrier 3, refer to Example 7 for implementation. For example, when 1-port first transmission needs to be performed on one carrier (the carrier is the first uplink carrier) of the carrier 1 or the carrier 2, and the UE does not support 1-port uplink transmission on the carrier at the second moment, if the UE does not perform transmission on a carrier in the first uplink carrier set other than the first uplink carrier when performing first transmission, after the first transmission is started, the LTE supports 2-port uplink transmission on the first uplink carrier. When the 1-port first transmission needs to be performed on the carrier 3, that is, the first uplink carrier is the carrier 3, and the UE does not support 1-port uplink transmission on the carrier 3 at the second moment, after the first transmission is started, the UE supports 1-port uplink transmission on the carrier 3.

In addition, when the priorities of the three carriers are the same, or there is no priority between the three carriers, if the UE is to send the 1-port first transmission on any carrier (the any carrier is the first uplink carrier), and the UE does not support 1-port uplink transmission on the carrier at the second moment, the UE at least does not expect to perform transmission on the carrier in the first duration. When the LTE sends the first transmission, the LTE supports 1-port uplink transmission on the carrier.

The following describes, with reference to examples, implementations of the communication method provided in embodiments of this application when the quantity of carriers in the first uplink carrier set of the LTE is greater than or equal to 2 and a maximum quantity of radio frequency chains supported on each carrier is greater than or equal to 2.

It should be noted that, although the priority of the carrier is used for defining the radio frequency chain switching behavior of the carrier in this application, the priority is only an auxiliary description manner. In a protocol, a priority may exist, or may not be directly reflected, but the radio frequency chain switching behavior is still defined according to a priority rule. For example, a radio frequency chain switching rule of carriers whose numbers are in descending order, whose numbers are in ascending order, whose corresponding cell identifiers are in descending order, whose corresponding cell identifiers are in ascending order, whose frequencies are in ascending order, whose path losses are in ascending order, whose bandwidths are in descending order, or whose slot lengths are in ascending order corresponds to a radio frequency chain switching rule of carriers whose priorities are in descending order. For another example, a radio frequency chain switching rule of a carrier of a special cell corresponds to a radio frequency chain switching rule of a high-priority carrier, and a radio frequency chain switching rule of a carrier of a secondary cell corresponds to a radio frequency chain switching rule of a low-priority carrier. In addition, priorities of secondary cells are the same, and radio frequency chain switching rules of secondary cells correspond to radio frequency chain switching rules of carriers with a same priority. For another example, a radio frequency chain switching rule of a carrier of a physical uplink control channel secondary cell corresponds to a radio frequency chain switching rule of a high-priority carrier, and a radio frequency chain switching rule of a carrier of a secondary cell other than the physical uplink control channel secondary cell corresponds to a radio frequency chain switching rule of a low-priority carrier. In addition, secondary cells of non-physical uplink control channel secondary cells have a same priority, and radio frequency chain switching rules of secondary cells of non-physical uplink control channel secondary cells correspond to radio frequency chain switching rules of carriers with a same priority.

In a possible case, any two carriers of the UE cannot share a radio frequency chain, that is, one radio frequency chain can be used by only one carrier simultaneously. Therefore, switching time is required for switching between any two carriers. The example in this application is for this case.

In another possible case, some carriers of the UE may share one radio frequency chain, that is, one radio frequency chain can be used by a plurality of carriers simultaneously. Therefore, behavior of dynamic radio frequency chain switching between the plurality of carriers that can share the radio frequency chain simultaneously and another carrier that cannot share the radio frequency chain simultaneously are consistent. For example, a set including a plurality of carriers that can share a radio frequency chain 1 simultaneously is a second uplink carrier set, where carriers A and B belong to the second uplink carrier set, a carrier C does not belong to the second uplink carrier set, and radio frequency chain switching does not need to be performed between the carrier A and the carrier B, or time for performing radio frequency chain switching between the carriers A and B is zero. If carriers on which uplink radio frequency chain switching can be performed and that are configured by the base station for the UE are the carriers A, B, and C, a rule for performing radio frequency chain switching between the three carriers may be equivalent to a switching rule when only the carriers A (or B) and C exist. To be specific, the switching rule between the carriers A and C or the carriers between B and C complies with a rule when the quantity of carriers in the first uplink carrier set is 2 in this application. A quantity of radio frequency chains of the carrier A is equivalent to a quantity of radio frequency chains of the carrier B, and radio frequency chain switching does not need to be performed between the carrier A and the carrier B, or time for performing radio frequency chain switching between the carriers A and B is zero. Similarly, if there is still a carrier D, and the carrier D does not share a radio frequency chain with the other three carriers, a switching rule of the carriers A (or B), C, and D complies with the rule when the quantity of carriers in the first uplink carrier set is 3 in this application. For example, when a band (band) has a plurality of carriers, the carriers may share one radio frequency chain.

In a possible implementation, the second uplink carrier set in this application includes a carrier for switching a radio frequency chain to a carrier on which the first transmission is located, and further includes the carrier on which the first transmission is located.

Example 8: Both a carrier 1 and a carrier 2 belong to the first uplink carrier set. It is assumed that the carrier 2 is a lowest-priority carrier in carriers that have switchable radio frequency chains in the first uplink carrier set other than the carrier 1 of the LTE, and the LTE is to send the first transmission on the carrier 1, that is, the first uplink carrier is the carrier 1. A case in which when a quantity of carriers in the first uplink carrier set of the UE is greater than or equal to 2 and a maximum quantity of radio frequency chains supported on each carrier is greater than or equal to 2, a principle for determining whether the first duration is required is described in this embodiment of this application.

A first value of a carrier is defined as a minimum quantity of radio frequency chains required for supporting the LTE in sending X-port uplink transmission on the carrier, and a second value of a carrier is defined as a maximum quantity of radio frequency chains required for supporting the UE in sending X-port uplink transmission on the carrier. The first value is less than or equal to the second value, and both the first value and the second value belong to a set of quantities of radio frequency chains.

The following describes, with reference to a priority of each carrier of the UE and a set of quantities of radio frequency chains of the carrier 1, a process in which the LTE switches a radio frequency chain to the carrier 1 in Example 8.

I. If all switchable radio frequency chains on the carrier 2 of the UE are switched to the carrier 1 but are still insufficient to support uplink transmission of the UE on the carrier 1, the UE may switch all the switchable radio frequency chains on the carrier 2 to the carrier 1, and then continue to search for another carrier having a switchable radio frequency chain in the first uplink carrier set in ascending order of priorities until a carrier 3 is found. In this example 8, the carrier 3 is still insufficient to support uplink transmission on the carrier 1 after radio frequency chains of all other carriers that have switchable radio frequency chains and whose priorities are lower than a priority of the carrier 3 are switched to the carrier 1, but after a switchable radio frequency chain on the carrier 3 is switched to the carrier 1, the carrier 3 is sufficient to support uplink transmission on the carrier 1.
(I) If the priority of the carrier 3 is lower than the priority of the carrier 1, the radio frequency chains of the carrier 3 and all the other carriers that have switchable radio frequency chains and whose priorities are lower than the priority of the carrier 3 are switched to the carrier 1.

(1) In this case, if a quantity of radio frequency chains of the LTE on the carrier 1 belongs to the set of quantities of radio frequency chains of the carrier 1, behavior of the LTE is first behavior, and the first behavior includes that the LTE needs the first duration (or the LTE performs radio frequency chain switching in the first duration); the LTE at least does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the UE does not expect to perform transmission on any carrier in the second uplink carrier set in the first duration; in other words, the first behavior includes that the UE switches all switchable radio frequency chains of carriers in the second uplink carrier set other than the carrier 1 to the carrier 1. The second uplink carrier set includes the carrier 1, the carrier 3, and all the other carriers that have switchable radio frequency chains and whose priorities are lower than the priority of the carrier 3, that is, also includes the carrier 2.

Possible behavior of the LTE further includes: The UE performs first transmission.

If the UE does not perform uplink sending on a carrier in the second uplink carrier set other than the carrier 1 during the first transmission, after the first duration or in the first transmission, a quantity of radio frequency chains of the UE on the carrier 1 is a sum of quantities of all switchable radio frequency chains of the UE on all carriers in the second uplink carrier set other than the carrier 1 at the second moment, and a sum of quantities of radio frequency chains on the carrier 1 at the second moment. In addition, during the first transmission, the LTE does not support uplink transmission on a carrier in the second uplink carrier set other than the carrier 1.

Alternatively, if the LTE also performs uplink transmission on a carrier in the second uplink carrier set other than the carrier 1 during the first transmission, it is assumed that a set including carriers, on which uplink transmission is performed during the first transmission, in the second uplink carrier set other than the carrier 1 is a third uplink carrier set, and the third uplink carrier set may include only one carrier. In this case, in the first transmission, the quantity of radio frequency chains of the UE on the carrier 1 is a sum of quantities of all switchable radio frequency chains of the LTE on all carriers in the second uplink carrier set other than the carrier 1 at the second moment, and a sum of quantities of radio frequency chains on the carrier 1 at the second moment. During the first transmission, the UE does not support uplink transmission on a carrier in the second uplink carrier set other than the carrier 1 and all the carriers in the third uplink carrier set. In addition, an operation state of the UE during the first transmission further includes: A quantity of radio frequency chains of the LTE on a carrier in the third uplink carrier set is a quantity of ports for uplink transmission performed by the LTE on the carrier during the first transmission.

(2) In this case, if a quantity of radio frequency chains (referred to as a third value) of the UE on the carrier 1 does not belong to the set of quantities of radio frequency chains of the carrier 1, the quantity of radio frequency chains of the LTE on the carrier 1 needs to be reduced to a maximum value (referred to as a fourth value) less than the third value in the set of quantities of radio frequency chains of the carrier 1, and a redundant radio frequency chain is switched back to the carrier 3, that is, only a particular quantity of radio frequency chains on the carrier 3 needs to switched to the carrier 1, so that the quantity of radio frequency chains of the carrier 1 reaches the fourth value. In this case, behavior of the UE is second behavior, and the second behavior includes that the UE needs the first duration (or the UE performs radio frequency chain switching in the first duration); the UE at least does not expect to perform transmission on at least one carrier that is in the first uplink carrier set and that includes the carrier 1 in the first duration; the LTE does not expect to perform transmission on at least one carrier that is in the second uplink carrier set and that includes the carrier 1 in the first duration; the LTE does not expect to perform transmission on any carrier in the first uplink carrier set in the first duration; or the LTE does not expect to perform transmission on any carrier in the second uplink carrier set in the first duration; in other words, the second behavior includes that the UE switches radio frequency chains of the carrier 2 and an uplink carrier whose priority is between a priority of the carrier 2 and the priority of the carrier 3 to the carrier 1, and switches a part of radio frequency chains of the carrier 3 to the carrier 1, so that the quantity of radio frequency chains of the carrier 1 is the fourth value. The second uplink carrier set includes the carrier 1, the carrier 3, and all the other carriers that have switchable radio frequency chains and whose priorities are lower than the priority of the carrier 3.

Possible behavior of the LTE further includes: The UE performs first transmission, where an operation state of the UE in the first transmission is that the quantity of radio frequency chains on the carrier 1 is the fourth value.

If the UE does not perform uplink sending on a carrier in the second uplink carrier set other than the carrier 1 in the first transmission, after the first duration or during the first transmission, a quantity of radio frequency chains of the LTE on the carrier 3 is a quantity of remaining radio frequency chains after the radio frequency chain is switched from the carrier 3 to the carrier 1. In addition, during the first transmission, the UE does not support uplink transmission on a carrier in the second uplink carrier set other than the carrier 1 and the carrier 3.

Alternatively, if the LTE also performs uplink transmission on a carrier in the second uplink carrier set other than the carrier 1 during the first transmission, it is assumed that carriers, on which uplink transmission is performed during the first transmission, in the second uplink carrier set other than the carrier 1 and the carrier 3 constitute a third uplink carrier set. The third uplink carrier set may include only one carrier. In this case, the quantity of radio frequency chains of the UE on the carrier 3 during the first transmission is a quantity of remaining radio frequency chains after the radio frequency chain is switched from the carrier 3 to the carrier 1. In addition, during the first transmission, the UE does not support uplink transmission on a carrier in the second uplink carrier set other than the carrier 1, the carrier 3, and all the carriers in the third uplink carrier set. In addition, an operation state of the UE during the first transmission further includes: A quantity of radio frequency chains of the UE on a carrier in the third uplink carrier set is a quantity of ports for uplink transmission performed by the LTE on the carrier during the first transmission.

(II) If a priority of the carrier 3 is greater than or equal to the priority of the carrier 1, all other carriers that have switchable radio frequency chains and whose priorities are lower than the priority of the carrier 3 are first switched to the carrier 1, and then a switchable radio frequency chain on the carrier 3 is switched to the carrier 1 until the quantity of radio frequency chains of the carrier 1 is equal to a minimum quantity of radio frequency chains required for supporting uplink transmission on the carrier 1, and then no radio frequency chain is switched from the carrier 3 to the carrier 1. In this case, behavior of the UE is third behavior, and the third behavior includes that the UE needs the first duration (or the UE performs radio frequency chain switching in the first duration); the UE at least does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the LTE does not expect to perform transmission on any carrier in the first uplink carrier set in the first duration; or the UE does not expect to perform transmission on any carrier in the second uplink carrier set in the first duration; in other words, the third behavior includes that the UE switches the radio frequency chains of all the uplink carriers whose priorities are lower than the priority of the carrier 3 to the carrier 1, and switches some radio frequency chains of the carrier 3 to the carrier 1, so that the quantity of radio frequency chains of the carrier 1 is the minimum quantity of radio frequency chains required for supporting uplink transmission on the carrier 1. The second uplink carrier set includes the carrier 1, the carrier 3, and all the other carriers that have switchable radio frequency chains and whose priorities are lower than the priority of the carrier 3.

Possible behavior of the LTE further includes: The UE performs first transmission, where an operation state of the UE in the first transmission is that the quantity of radio frequency chains on the carrier 1 is a quantity of ports for the first transmission.

Further, if no uplink sending is performed on a carrier in the second uplink carrier set other than the carrier 1 during the first transmission, after the first duration or in the first transmission, a quantity of radio frequency chains of the LTE on the carrier 3 is a quantity of remaining radio frequency chains after the radio frequency chain is switched from the carrier 3 to the carrier 1. If the UE has no radio frequency chain on the carrier 3 in the first transmission, the UE does not support uplink transmission on the carrier 3. During the first transmission, the UE does not support uplink transmission on a carrier in the second uplink carrier set other than the carrier 1 and the carrier 3.

Alternatively, further, if the UE also performs uplink transmission on a carrier in the second uplink carrier set other than the carrier 1 during the first transmission, it is assumed that a set including carriers, on which uplink transmission is performed during the first transmission, in the second uplink carrier set other than the carrier 1 and the carrier 3 is a third uplink carrier set. The third uplink carrier set may include only one carrier. In this case, the quantity of radio frequency chains of the UE on the carrier 3 during the first transmission is a quantity of remaining radio frequency chains after the radio frequency chain is switched from the carrier 3 to the carrier 1. If the UE has no radio frequency chain on the carrier 3 during the first transmission, the UE does not support uplink transmission on the carrier 3. During the first transmission, the UE does not support uplink transmission on a carrier in the second uplink carrier set other than the carrier 1, the carrier 3, and all the carriers in the third uplink carrier set. In addition, an operation state of the UE during the first transmission further includes: A quantity of radio frequency chains of the LTE on a carrier in the third uplink carrier set is a quantity of ports for uplink transmission performed by the UE on the carrier during the first transmission.

II. If all switchable radio frequency chains on the carrier 2 are switched to the carrier 1, it is sufficient to support the first transmission on the carrier 1:
(I) If the priority of the carrier 2 is lower than that of the carrier 1, all the switchable radio frequency chains on the carrier 2 are switched to the carrier 1.
   1. In this case, if a quantity of radio frequency chains of the LTE on the carrier 1 belongs to the set of quantities of radio frequency chains of the carrier 1, behavior of the LTE is fourth behavior, and the fourth behavior of the UE includes that the UE needs the first duration (or the UE performs radio frequency chain switching in the first duration); the UE at least does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the LTE does not expect to perform transmission on any carrier in the second uplink carrier set in the first duration; in other words, the fourth behavior includes that the UE switches all the switchable radio frequency chains of the carrier 2 to the first uplink carrier. The second uplink carrier set includes the carrier 1 and the carrier 2.

Possible behavior of the LTE further includes: The UE performs first transmission.

If the UE does not perform uplink transmission on the carrier 2 during the first transmission, an operation state of the UE in the first transmission is that the quantity of radio frequency chains on the carrier 1 is a sum of a quantity of switchable radio frequency chains of the LTE on the carrier 2 at the second moment and a quantity of radio frequency chains of the LTE on the carrier 1 at the second moment. In addition, during the first transmission, the LTE does not support uplink transmission on the carrier 2.

Alternatively, if the UE also performs uplink transmission on the carrier 2 during the first transmission, an operation state of the LTE in the first transmission is that the quantity of radio frequency chains on the carrier 1 is a sum of a quantity of switchable radio frequency chains of the LTE on the carrier 2 at the second moment and a quantity of radio frequency chains of the LTE on the carrier 1 at the second moment. In addition, during the first transmission, a quantity of radio frequency chains of the UE on the carrier 2 is a quantity of ports for uplink transmission performed by the LTE on the carrier 2 during the first transmission.

2. In this case, if a quantity of radio frequency chains (referred to as a fifth value) of the UE on the carrier 1 does not belong to the set of quantities of radio frequency chains of the carrier 1, the quantity of radio frequency chains of the LTE on the carrier 1 needs to be reduced to a maximum value (referred to as a sixth value) less than the fifth value in the set of quantities of radio frequency chains of the carrier 1, and a redundant radio frequency chain is switched back to the carrier 2, that is, only a particular quantity of radio frequency chains on the carrier 2 needs to switched to the carrier 1, so that the quantity of radio frequency chains of the carrier 1 reaches the sixth value. In this case, behavior of the UE is fifth behavior, and the fifth behavior includes that the UE needs the first duration (or the UE performs radio frequency chain switching in the first duration); the UE at least does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the LTE does not expect to perform transmission on any carrier in the first uplink carrier set in the first duration; or the UE does not expect to perform transmission on any carrier in the second uplink carrier set in the first duration; where the second uplink carrier set includes the carrier 1 and the carrier 2. Possible behavior of the UE further includes: The UE performs first transmission, where the quantity of radio frequency chains of the UE on the carrier 1 in the first transmission is the sixth value, and the quantity of radio frequency chains of the UE on the carrier 2 is a quantity of remaining radio frequency chains on the carrier 2 after the radio frequency chain is switched from the carrier 2 to the carrier 1 (for example, a difference between the fifth value and the sixth value).

(II) If the priority of the carrier 2 is greater than or equal to the priority of the carrier 1, a switchable radio frequency chain on the carrier 2 is switched to the carrier 1 until the quantity of radio frequency chains of the carrier 1 is equal to a minimum quantity of radio frequency chains required for supporting uplink transmission on the carrier 1, and then no radio frequency chain is switched from the carrier 2 to the carrier 1. In this case, behavior of the LTE is sixth behavior, and the sixth behavior at least includes that the LTE needs the first duration (or the LTE performs radio frequency chain switching in the first duration); the LTE at least does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the UE does not expect to perform transmission on any carrier in the second uplink carrier set in the first duration; in other words, the sixth behavior includes that the LTE switches some radio frequency chains of the carrier 2 to the carrier 1, so that the quantity of radio frequency chains of the carrier 1 is the minimum quantity of radio frequency chains required for supporting uplink transmission on the carrier 1. The second uplink carrier set includes the carrier 1 and the carrier 2.

Possible behavior of the LTE further includes: The UE performs first transmission. During the first transmission, a quantity of ports supported by the LTE for uplink transmission on the carrier 1 is a quantity of ports for the first transmission, and the quantity of radio frequency chains of the LTE on the carrier 2 is the quantity of remaining radio frequency chains of the LTE on the carrier 2 after the radio frequency chain is switched from the carrier 2 to the carrier 1. If the LTE has no radio frequency chain on the carrier 2 in the first transmission, the UE does not support uplink transmission on the carrier 2.

In a possible manner, if a maximum quantity of radio frequency chains supported by the UE on an uplink carrier is 2, a set of quantities of radio frequency chains of the UE on the carrier may be {0, 1, 2} or {0, 1}. If a maximum quantity of radio frequency chains supported by the UE on an uplink carrier is 1, a set of quantities of radio frequency chains of the UE on the carrier may be {0, 1}. In this application, each set of quantities of radio frequency chains of a carrier includes 0. Certainly, in a possible implementation, a set of quantities of radio frequency chains of a carrier does not include 0, that is, includes only a non-zero value other than zero.

Example 9: Uplink carriers in the first uplink carrier set of the UE are a carrier 1, a carrier 2, and a carrier 3, a set of quantities of radio frequency chains supported on each carrier is {0, 1, 2}, a total quantity of radio frequency chains of the LTE is 3, a maximum quantity of radio frequency chains supported on each carrier is 2, but at most two carriers have radio frequency chains simultaneously. Therefore, when there are two radio frequency chains on a carrier, 1-port or 2-port uplink transmission may be sent on the carrier; when there is one radio frequency chain on a carrier, 1-port uplink transmission may be sent on the carrier; or when there is no radio frequency chain on a carrier, uplink transmission cannot be sent on the carrier.

In the example 9, examples of a radio frequency chain switching manner of the UE are as follows:
I. If the UE is to perform 2-port first transmission on the carrier 1, that is, the first uplink carrier is the carrier 1, and a fifth condition is satisfied, behavior of the UE is seventh behavior.

In this application, in the fifth transmission (or during the fifth transmission), that the UE performs uplink transmission using a specific quantity of ports on an eighth uplink carrier may be understood as that the fifth transmission is the current transmission of the UE on the eighth uplink carrier, may be understood as that the fifth transmission is simultaneous transmission of a plurality of carriers and includes the current transmission of the UE on the eighth uplink carrier, may be understood as that the fifth transmission and the current transmission of the UE on the eighth uplink carrier overlap at a time domain position. In addition, in the fifth transmission (or during the fifth transmission), that the UE performs at least one uplink transmission on at least one carrier may be understood as that the fifth transmission is the at least one uplink transmission of the LTE on the at least one carrier, may be understood as that the fifth transmission is simultaneous transmission of a plurality of carriers and includes the at least one uplink transmission of the UE on the at least one carrier, or may be understood as that the fifth transmission and the at least one uplink transmission of the LTE on the at least one carrier overlaps at a time domain position.

The fifth condition includes at least one of the following: In the third transmission, the UE sends 1-port uplink transmission on a fifth uplink carrier, and a state of the LTE at the second moment is that the UE supports 2-port uplink transmission on the fifth uplink carrier; in the third transmission, the UE sends 2-port uplink transmission on a fifth uplink carrier; or the UE performs uplink transmission using any quantity of ports on a fifth uplink carrier in the third transmission, a state of the UE at the second moment is that a quantity of radio frequency chains on the fifth uplink carrier is 2. The fifth uplink carrier is any one of carriers in the first uplink carrier set other than the carrier 1, for example, the carrier 2 or the carrier 3. The fifth condition means that at the second moment, the state of the UE is that there are two radio frequency chains on the fifth uplink carri er.

The seventh behavior includes at least one of the following behavior: The UE needs the first duration (or the UE performs radio frequency chain switching in the first duration); the UE does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the LTE does not expect to perform transmission on any carrier in the second uplink carrier set in the first duration.

In the first transmission, if the UE does not perform transmission on a carrier in the first uplink carrier set other than the carrier 1 simultaneously, further, if the operation state of the UE at the second moment is that the quantity of radio frequency chains on the carrier 1 is 1, the second uplink carrier set includes the carrier 1 and the fifth uplink carrier. In this case, the behavior of the UE may further include: The UE sends the first transmission on the carrier 1, where the operation state of the LTE in the first transmission is that the quantity of radio frequency chains on the fifth uplink carrier is 1. In other words, the fifth uplink carrier does not support 2-port uplink transmission, and a carrier other than the carrier 1 and the fifth uplink carrier does not support uplink transmission. It is clear that the UE supports 2-port uplink transmission on the carrier 1. In this case, regardless of priorities of the carrier 1 and the fifth uplink carrier, maximum and minimum quantities of radio frequency chains that are switched from the fifth uplink carrier to the carrier 1 are both 1. Because the carrier 1 supports only a maximum of two radio frequency chains, the maximum quantity of radio frequency chains that can be switched is 1, and a minimum quantity of radio frequency chains supported for current sending on the carrier 1 is also 2. Therefore, at least one radio frequency chain needs to be switched.

Alternatively, in the first transmission, if the UE does not perform transmission on a carrier in the first uplink carrier set other than the carrier 1 simultaneously, further, if the operation state of the UE at the second moment is that the UE does not support any uplink sending on the carrier 1, or the operation state of the UE at the second moment is that a quantity of radio frequency chains on a carrier in the first uplink carrier set other than the carrier 1 and the fifth uplink carrier is 1, it is assumed that the fifth uplink carrier is the carrier 2. In this case, the carrier 3 is a carrier in the first uplink carrier set other than the carrier 1 and the fifth uplink carrier. If the priority of the carrier 2 is higher the priority of the carrier 3, the second uplink carrier set includes the carrier 1, the carrier 2, and the carrier 3, and the behavior of the UE may further include: The UE sends the first transmission on the carrier 1, where the operation state of the LTE in the first transmission is that the quantity of radio frequency chains on the carrier 2 is 1. In other words, the operation state of the UE in the first transmission is that the UE does not support uplink sending on the carrier 3. It is clear that the UE supports 2-port uplink transmission on the carrier 1. This has an advantage that more radio frequency chains are retained on a higher-priority carrier. If the priority of the carrier 3 is higher than the priority of the carrier 2, the second uplink carrier set includes the carrier 1 and the carrier 2, and the behavior of the UE may further include: The UE sends the first transmission on the carrier 1, where the operation state of the LTE in the first transmission is that the quantity of radio frequency chains on the carrier 3 is 1. In other words, the operation state of the UE in the first transmission is that the UE does not support uplink sending on the carrier 2. It is clear that the UE supports 2-port uplink transmission on the carrier 1. This has an advantage that more radio frequency chains are retained on a higher-priority carrier.

Alternatively, further, if the UE further performs 1-port uplink transmission on the carrier 2 (or the carrier 3) during the first transmission, the behavior of the UE may further include: The UE sends the first transmission on the carrier 1, where the operation state of the UE in the first transmission is that the quantity of radio frequency chains on the carrier 2 (or the carrier 3) is 1. If the fifth uplink carrier is the carrier 2 (or the carrier 3), the second uplink carrier set includes the carrier 1 and the carrier 2 (or the carrier 3). If the fifth uplink carrier is not the carrier 2 (or the carrier 3), the second uplink carrier set includes the carrier 1, the carrier 2, and the carrier 3.

II. If the UE is to perform 2-port first transmission on the carrier 1, that is, the first uplink carrier is the carrier 1, and a sixth condition is satisfied, behavior of the UE is eighth behavior.

The sixth condition includes at least one of the following: In the third transmission, the UE sends 1-port uplink transmission on the carrier 1, and an operation state of the LTE at the second moment is that the quantity of radio frequency chains on the carrier 1 is 1.

The eighth behavior includes at least one of the following behavior: The UE needs the first duration (or the UE performs radio frequency chain switching in the first duration); the UE at least does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the LTE does not expect to perform transmission on any carrier in the second uplink carrier set in the first duration.

Further, if the UE does not perform uplink transmission on the carrier 2 and the carrier 3 during the first transmission, and the operation state of the UE at the second moment is that the quantity of radio frequency chains on the carrier 2 is 2, the second uplink carrier set includes the carrier 1 and the carrier 2. In this case, the behavior of the UE may further include: The UE sends the first transmission on the carrier 1, where the operation state of the LTE in the first transmission is that the quantity of radio frequency chains on the carrier 2 is 1. That is, in the first transmission, the UE does not support 2-port uplink transmission on the carrier 2, and does not support uplink transmission on the carrier 3. It is clear that the UE supports 2-port uplink transmission on the carrier 1. In this case, regardless of priorities of the carrier 1 and the carrier 2, maximum and minimum quantities of radio frequency chains that are switched from the carrier 2 to the carrier 1 are both 1. Because the carrier 1 supports only a maximum of two radio frequency chains, the maximum quantity of radio frequency chains that can be switched is 1, and a minimum quantity of radio frequency chains supported for current sending on the carrier 1 is also 2. Therefore, at least one radio frequency chain needs to be switched.

Alternatively, further, if the LTE further performs 1-port uplink transmission (sixth transmission) on the carrier 2 (or the carrier 3) during the first transmission, the behavior of the LTE may further include: The UE sends the first transmission on the carrier 1, where the operation state of the UE in the first transmission is that the quantity of radio frequency chains on the carrier 2 (or the carrier 3) is 1. If the operation state of the LTE at the second moment is that a quantity of radio frequency chains on a carrier on which the sixth transmission is located is 2, the second uplink carrier set includes the carrier 1 and the carrier 2 (or the carrier 3). If the operation state of the UE at the second moment is that a quantity of radio frequency chains on a carrier other than the carrier 1 and the carrier on which the sixth transmission is located is 2, the second uplink carrier set includes the carrier 1, the carrier 2, and the carrier 3.

III. If the UE is to send 1-port first transmission on the carrier 1, that is, the first uplink carrier is the carrier 1, and a seventh condition is satisfied, behavior of the LTE is ninth behavior.

The seventh condition includes at least one of the following: During the third transmission, the LTE performs 2-port transmission on a sixth uplink carrier, and performs 1-port transmission on a seventh uplink carrier; during the third transmission, the UE sends one-port transmission on a sixth uplink carrier and sends one-port transmission on a seventh uplink carrier simultaneously, and an operation state of the LTE at the second moment is that quantities of radio frequency chains on the sixth uplink carrier and the seventh uplink carrier are respectively 2 and 1; the last two times of transmission before the first transmission are respectively 2-port uplink transmission performed by the LTE on a sixth uplink carrier and 1-port uplink transmission performed by the LTE on a seventh uplink carrier, but there is no switching time between the two times of transmission; an operation state of the LTE at the second moment is that a quantity of radio frequency chains on a sixth uplink carrier is 2 and a quantity of radio frequency chains on a seventh uplink carrier is 1; in the third transmission, the UE sends 2-port uplink transmission on a sixth uplink carrier, and an operation state of the LTE at the second moment is that a quantity of radio frequency chains on a seventh uplink carrier is 1; the UE sends 1-port uplink transmission on a sixth uplink carrier in the third transmission, and an operation state of the UE at the second moment is that a quantity of radio frequency chains on the sixth uplink carrier is 2, and a quantity of radio frequency chains on a seventh uplink carrier is 1; or the LTE sends 1-port uplink transmission on a seventh uplink carrier in the third transmission, and an operation state of the LTE at the second moment is that a quantity of radio frequency chains on a sixth uplink carrier is 2. Each of the sixth uplink carrier and the seventh uplink carrier is any one of carriers in the first carrier set other than the first carrier, and the sixth uplink carrier and the seventh uplink carrier are different carriers. The seventh condition means that the operation state of the UE at the second moment is that there are two radio frequency chains on the sixth uplink carrier and one radio frequency chain on the seventh uplink carrier. The following provides descriptions by using an example in which the sixth uplink carrier is the carrier 2 and the seventh uplink carrier is the carrier 3.

The ninth behavior includes at least one of the following behavior: The UE needs the first duration (or the UE performs radio frequency chain switching in the first duration); the UE does not expect to perform transmission on at least one carrier that is in the first uplink carrier set and that includes the carrier 1 in the first duration; the LTE does not expect to perform transmission on at least one carrier that is in the second uplink carrier set and that includes the carrier 1 in the first duration; the UE does not expect to perform transmission on any carrier in the first uplink carrier set in the first duration; or the UE does not expect to perform transmission on any carrier in the second uplink carrier set in the first duration.

Based on priorities of the carrier 1, the carrier 2, and the carrier 3, quantities of switched radio frequency chains of the UE may be different. The following cases may be included:
1. If the priority of the carrier 1 is higher than the priority of the carrier 1, and the priority of the carrier 2 is higher than the priority of the carrier 3, the second uplink carrier set includes the carrier 1 and the carrier 3. The behavior of the UE may further include: The UE sends the first transmission on the carrier 1, where the operation state of the UE during the first transmission is that the quantity of radio frequency chains on the carrier 1 is 1, and the quantity of radio frequency chains on the carrier 2 is 2. That is, the UE does not support 2-port uplink transmission on the carrier 1, and does not support uplink transmission on the carrier 3. This has an advantage that more radio frequency chains are switched to a highest-priority carrier.
2. If the priority of the carrier 1 is higher than the priority of the carrier 3, and the priority of the carrier 3 is higher than the priority of the carrier 2, the second uplink carrier set includes the carrier 1 and the carrier 2. The behavior of the UE may further include: The UE sends the first transmission on the carrier 1. During the first transmission, the operation state of the UE is that there are two radio frequency chains on the carrier 1, and there is one radio frequency chain on the carrier 3. That is, the UE does not support 2-port uplink transmission on the carrier 3, and does not support uplink transmission on the carrier 2. This has an advantage that more radio frequency chains are switched to a highest-priority carrier.
3. If the priority of the carrier 2 is the highest among the priorities of the carrier 1, the carrier 2, and the carrier 3, the second uplink carrier set includes the carrier 1 and the carrier 3. The behavior of the UE may further include: The UE sends the first transmission on the carrier 1, where the operation state of the LTE during the first transmission is that the quantity of radio frequency chains on the carrier 2 is 2, and the quantity of radio frequency chains on the carrier 1 is 1. That is, the UE does not support 2-port uplink transmission on the carrier 1, and the UE does not support uplink transmission on the carrier 3. This has an advantage that more radio frequency chains are switched to a highest-priority carrier.
4. If the priority of the carrier 3 is higher than the priority of the carrier 1, and the priority of the carrier 1 is higher than the priority of the carrier 2, the second uplink carrier set includes the carrier 1 and the carrier 2. The behavior of the UE may further include: The UE sends the first transmission on the carrier 1, where the operation state of the UE during the first transmission is that the quantity of radio frequency chains on the carrier 3 is 1, and the quantity of radio frequency chains on the carrier 1 is 2. That is, the UE does not support 2-port uplink transmission on the carrier 3, and the UE does not support uplink transmission on the carrier 2. An advantage is that a higher-priority carrier has more radio frequency chains.
5. If the UE further performs 1-port uplink transmission on the carrier 2 during the first transmission, the second uplink carrier set is the carrier 1, the carrier 2, and the carrier 3. In this case, in the first transmission, the operation state of the UE is that there is one radio frequency chain on the carrier 1, there are two radio frequency chains on the carrier 2, and there is no radio frequency chain on the carrier 3.
6. If the UE further performs 1-port uplink transmission on the carrier 3 during the first transmission, and the priority of the carrier 1 is higher than the priority of the carrier 3, the second uplink carrier set is the carrier 1, the carrier 2, and the carrier 3. In this case, in the first transmission, the operation state of the UE is that there are two radio frequency chains on the carrier 1, there is no radio frequency chain on the carrier 2, and there is one radio frequency chain on the carrier 3. If the LTE further performs 1-port uplink transmission on the carrier 3 during the first transmission, and the priority of the carrier 3 is higher than the priority of the carrier 1, the second uplink carrier set is the carrier 1, the carrier 2, and the carrier 3. In this case, in the first transmission, the UE has one radio frequency chain on the carrier 1, has no radio frequency chain on the carrier 2, and has two radio frequency chains on the carrier 3.

Example 10: Uplink carriers in the first uplink carrier set of the UE are a carrier 1, a carrier 2, and a carrier 3, a set of quantities of radio frequency chains supported on each carrier is {0, 2, 4}, a total quantity of radio frequency chains of the LTE is 4, a maximum quantity of radio frequency chains supported on each carrier is 4, but at most two carriers have radio frequency chains simultaneously. Therefore, when there are four radio frequency chains on a carrier, 1-port, 2-port, or 4-port uplink transmission may be sent on the carrier; when there are two radio frequency chains on a carrier, 1-port or 2-port uplink transmission may be sent on the carrier; when there is one radio frequency chain on a carrier, the UE may send 1-port uplink transmission on the carrier; or when there is no radio frequency chain on a carrier, the LTE cannot send uplink transmission on the carrier.

In the example 10, examples of a radio frequency chain switching manner of the UE are as follows:
I. If the UE is to send 4-port first transmission on the carrier 1, that is, the first uplink carrier is the carrier 1, and an eighth condition or a ninth condition is satisfied, behavior of the UE is tenth behavior. It is clear that in this sending, the UE supports 4-port uplink transmission on the carrier 1, and does not support uplink sending on the other two carriers.

The eighth condition is that the third transmission is any uplink transmission of the UE on a carrier in the first uplink carrier set other than the carrier 1. The eighth condition means that an operation state of the UE at the second moment is that there is at least one radio frequency chain on any carrier in the first uplink carrier set other than the carrier 1.

The ninth condition is as follows: The third transmission is that the UE sends 1-port or 2-port uplink transmission on the carrier 1, and an operation state of the UE at the second moment is that the quantity of radio frequency chains on the carrier 1 is 2.

The tenth behavior includes at least one of the following: The UE needs the first duration (or the UE performs radio frequency chain switching in the first duration); the UE does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the UE does not expect to perform transmission on any carrier in the second uplink carrier set in the first duration.

II. If the UE is to send 1-port or 2-port first transmission on the carrier 1, that is, the first uplink carrier is the carrier 1, and a tenth condition is satisfied, behavior of the UE is eleventh behavior.

The tenth condition includes any one of the following: during the third transmission, the UE sends 1-port transmission on a sixth uplink carrier and sends 2-port transmission on a seventh uplink carrier simultaneously; or an operation state of the UE at the second moment is that quantities of radio frequency chains on a sixth uplink carrier and a seventh uplink carrier are 2. Each of the sixth uplink carrier and the seventh uplink carrier is one of carriers in the first uplink carrier set other than the first uplink carrier (herein, the carrier 1), and the sixth uplink carrier and the seventh uplink carrier are different carriers. The tenth condition means that the operation state of the UE at the second moment is that there are two radio frequency chains on each of the sixth uplink carrier and the seventh uplink carrier.

The eleventh behavior includes at least one of the following: The UE needs the first duration (or the UE performs radio frequency chain switching in the first duration); the UE does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the UE does not expect to perform transmission on any carrier in the second uplink carrier set in the first duration. For the first uplink carrier set and the second uplink carrier set, refer to the foregoing descriptions.

Further, if a priority of the sixth uplink carrier is higher than that of the seventh uplink carrier, the second uplink carrier set includes the carrier 1 and the seventh uplink carrier. The behavior of the UE may further include: The UE sends the first transmission on the carrier 1, where the operation state of the UE during the first transmission is that the UE has two radio frequency chains and does not support 4-port uplink transmission on the carrier 1, and does not support uplink transmission on the seventh uplink carrier. That is, the operation state of the UE in the first transmission is that the quantity of radio frequency chains on the carrier 1 is 2, and the quantity of radio frequency chains on the sixth uplink carrier is 2.

Alternatively, further, if the priority of the seventh uplink carrier is higher than that of the sixth uplink carrier, the second uplink carrier set includes the carrier 1 and the sixth uplink carrier. The behavior of the UE may further include: The UE sends the first transmission on the carrier 1, where the operation state of the LTE in the first transmission is that the LTE has two radio frequency chains and does not support 4-port uplink transmission on the carrier 1, and does not support uplink transmission on the sixth uplink carrier. That is, the operation state of the UE in the first transmission is that the quantity of radio frequency chains on the carrier 1 is 2, and the quantity of radio frequency chains on the seventh uplink carrier is 2.

III. If the UE is to send 1-port or 2-port first transmission on the carrier 1, that is, the first uplink carrier is the carrier 1, and an eleventh condition is satisfied, behavior of the UE is twelfth behavior. In this case, the second uplink carrier set includes the carrier 1 and the fifth uplink carri er.

The eleventh condition includes at least one of the following: In the third transmission, the UE sends 1-port or 2-port uplink transmission on a fifth uplink carrier, and an operation state of the UE at the second moment is that a quantity of radio frequency chains on the fifth uplink carrier is 4; in the third transmission, the UE sends 4-port uplink transmission on a fifth uplink carrier; or the UE performs uplink transmission using any quantity of ports on a fifth uplink carrier in the third transmission, a state of the LTE at the second moment is that a quantity of radio frequency chains on the fifth uplink carrier is 4. The fifth uplink carrier is any one of carriers in the first uplink carrier set other than the first uplink carrier (herein, the carrier 1). The eleventh condition means that at the second moment, the operation state of the UE is that there are four radio frequency chains on the fifth uplink carrier.

The twelfth behavior includes at least one of the following: The UE needs the first duration (or the UE performs radio frequency chain switching in the first duration); the UE does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the UE does not expect to perform transmission on any carrier in the second uplink carrier set in the first duration. For the first uplink carrier set and the second uplink carrier set, refer to the foregoing descriptions.

If the priority of the carrier 1 is higher than a priority of the fifth uplink carrier, the behavior of the UE may further include: The UE sends the first transmission on the carrier 1, where the operation state of the LTE in sending the first transmission is that the LTE has four radio frequency chains on the carrier 1, and does not support uplink transmission on the fifth uplink carri er.

If the priority of the fifth uplink carrier is higher than the priority of the carrier 1, the behavior of the UE may further include: The UE sends the first transmission on the carrier 1, where the operation state of the UE in sending the first transmission is that the UE has two radio frequency chains and does not support 4-port uplink transmission on the carrier 1, and supports 2-port uplink transmission and does not support 4-port uplink transmission on the fifth uplink carrier. In other words, the operation state of the UE in the first transmission is that the LTE does not support uplink transmission on a carrier in the first uplink carrier set other than the first uplink carrier and the fifth uplink carrier, supports 2-port uplink transmission on the carrier 1, and supports 2-port uplink transmission on the fifth uplink carrier.

Example 11: If a quantity of uplink carriers in the first uplink carrier set of the UE is 4 (which are respectively a carrier 1, a carrier 2, a carrier 3, and a carrier 7), a set of quantities of radio frequency chains supported on each carrier is {0, 2, 4}, a total quantity of radio frequency chains of the UE is 4, a maximum quantity of radio frequency chains supported on each carrier is 4, but only two carriers have radio frequency chains simultaneously. When there are four radio frequency chains on a carrier, 1-port, 2-port, or 4-port uplink transmission may be sent on the carrier; when there are two radio frequency chains on a carrier, 1-port or 2-port uplink transmission may be sent on the carrier; when there is one radio frequency chain on a carrier, the UE may send 1-port uplink transmission on the carrier; or when there is no radio frequency chain on a carrier, the UE cannot send uplink transmission on the carrier.

In the example 11, examples of a radio frequency chain switching manner of the UE are as follows:
I. If the UE is to send 4-port first transmission on the carrier 1, that is, the first uplink carrier is the carrier 1, and a twelfth condition or a thirteenth condition is satisfied, behavior of the LTE is thirteenth behavior. It is clear that in this sending, the UE supports 4-port uplink transmission on the carrier 1, and does not support uplink sending on the other three carriers.

The twelfth condition includes: The UE performs uplink transmission using any quantity of ports on a carrier in the first carrier set other than the carrier 1 in the third transmission. The twelfth condition means that an operation state of the UE at the second moment is that there is at least one radio frequency chain on any carrier in the first carrier set other than the carrier 1.

The thirteenth condition includes at least one of the following: In the third transmission, the UE sends 1-port or 2-port uplink transmission on the carrier 1, and an operation state of the UE at the second moment is that the quantity of radio frequency chains on the carrier 1 is 2.

The thirteenth behavior includes at least one of the following: The UE needs the first duration (or the UE performs radio frequency chain switching in the first duration); the UE does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the UE does not expect to perform transmission on any carrier in the second uplink carrier set in the first duration. For the first uplink carrier set and the second uplink carrier set, refer to the foregoing descriptions.

II. If the UE is to send 1-port or 2-port first transmission on the carrier 1, that is, the first uplink carrier is the carrier 1, and a fourteenth condition is satisfied, behavior of the UE is fourteenth behavior.

The fourteenth condition includes at least one of the following: During the third transmission, the UE sends 1-port transmission on a sixth uplink carrier and sends 2-port transmission on a seventh uplink carrier simultaneously; or an operation state of the UE at the second moment is that quantities of radio frequency chains on a sixth uplink carrier and a seventh uplink carrier are 2. Each of the sixth uplink carrier and the seventh uplink carrier is one of carriers in the first uplink carrier set other than the first uplink carrier (herein, the carrier 1), and the sixth uplink carrier and the seventh uplink carrier are different carriers. The fourteenth condition means that the operation state of the UE at the second moment is that there are two radio frequency chains on each of the sixth uplink carrier and the seventh uplink carrier.

The fourteenth behavior includes at least one of the following: The UE needs the first duration (or the UE performs radio frequency chain switching in the first duration); the UE does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the UE does not expect to perform transmission on any carrier in the second uplink carrier set in the first duration. For the first uplink carrier set and the second uplink carrier set, refer to the foregoing descriptions.

Further, if a priority of the sixth uplink carrier is higher than that of the seventh uplink carrier, the second uplink carrier set includes the carrier 1 and the seventh uplink carrier. The behavior of the UE may further include: The UE sends the first transmission on the carrier 1, where the operation state of the UE in sending the first transmission is that the UE has two radio frequency chains and does not support 4-port uplink transmission on the carrier 1, and does not support uplink transmission on the seventh uplink carrier. That is, the operation state of the UE in the first transmission is that the quantity of radio frequency chains on the carrier 1 is 2, the quantity of radio frequency chains on the sixth uplink carrier is 2, and uplink transmission is not supported on the carrier 7.

Alternatively, further, if the priority of the seventh uplink carrier is higher than that of the sixth uplink carrier, the second uplink carrier set includes the carrier 1 and the sixth uplink carrier. The behavior of the UE may further include: The UE sends the first transmission on the carrier 1, where the operation state of the UE in sending the first transmission is that the UE has two radio frequency chains and does not support 4-port uplink transmission on the carrier 1, and does not support uplink transmission on the sixth uplink carrier. That is, the operation state of the UE is that there are two radio frequency chains on the carrier 1, there are two radio frequency chains on the seventh uplink carrier, and the UE does not support uplink transmission on the carrier 7.

III. If the UE is to send 1-port or 2-port first transmission on the carrier 1, that is, the first uplink carrier is the carrier 1, and a fifteenth condition is satisfied, behavior of the UE is fifteenth behavior. In this case, the second uplink carrier set includes the carrier 1 and the fifth uplink carrier.

The fifteenth condition includes at least one of the following: In the third transmission, the UE sends 1-port or 2-port uplink transmission on a fifth uplink carrier, and an operation state of the UE at the second moment is that a quantity of radio frequency chains on the fifth uplink carrier is 4; in the third transmission, the UE sends 4-port uplink transmission on the fifth uplink carrier; or regardless of whether the UE performs transmission using any quantity of ports on the fifth uplink carrier during the third transmission, the UE supports 4-port uplink transmission on the fifth uplink carrier at the second moment. The fifth uplink carrier is any one of carriers in the first uplink carrier set other than the first uplink carrier (herein, the carrier 1). The fifteenth condition means that at the second moment, the operation state of the UE is that there are four radio frequency chains on the fifth uplink carrier.

The fifteenth behavior includes at least one of the following: The UE needs the first duration (or the UE performs radio frequency chain switching in the first duration); the UE does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the UE does not expect to perform transmission on any carrier in the second uplink carrier set in the first duration. For the first uplink carrier set and the second uplink carrier set, refer to the foregoing descriptions.

If the priority of the carrier 1 is higher than the priority of the fifth uplink carrier, the behavior of the UE may further include: The UE sends the first transmission on the carrier 1, where the operation state of the UE in the first transmission is that the UE has four radio frequency chains on the carrier 1, and does not support uplink transmission on the fifth uplink carrier. That is, the operation state of the UE is that the UE does not support uplink transmission on the sixth uplink carrier, and does not support uplink transmission on the carrier 7.

If the priority of the fifth uplink carrier is higher than the priority of the carrier 1, the behavior of the UE may further include: The UE sends the first transmission on the carrier 1, where the operation state of the UE in the first transmission is that the UE has two radio frequency chains and does not support 4-port uplink transmission on the carrier 1, and supports 2-port uplink transmission and does not support 4-port uplink transmission on the fifth uplink carrier. That is, the operation state of the UE is that the UE does not support uplink transmission on the sixth uplink carrier, has two radio frequency chains on the carrier 1, has two radio frequency chains on the fifth uplink carrier, and does not support uplink transmission on the carrier 7.

Example 12: If uplink carriers in the first uplink carrier set of the UE are respectively a carrier 1, a carrier 2, and a carrier 3, a maximum of X radio frequency chains is supported on each carrier, X is greater than or equal to 2, and a total quantity of radio frequency chains of the LTE is X, examples of a radio frequency chain switching manner of the LTE are as follows:

I. If the UE is to perform X-port first transmission on the carrier 1, that is, the first uplink carrier is the carrier 1, and a sixteenth condition or a seventeenth condition is satisfied, behavior of the LTE is sixteenth behavior.

The sixteenth condition includes: The UE performs uplink transmission using any quantity of ports on a carrier in the first uplink carrier set other than the carrier 1 in the third transmission.

The seventeenth condition includes: The UE performs Y-port uplink transmission on the carrier 1 in the third transmission, and an operation state of the UE at the second moment is that the quantity of radio frequency chains on the carrier 1 is less than X, where 0<Y<X.

The sixteenth behavior includes at least one of the following: The UE needs the first duration (or the UE performs radio frequency chain switching in the first duration); the UE does not expect to perform transmission on at least one carrier that is in the first uplink carrier set and that includes the carrier 1; the UE does not expect to perform transmission on at least one carrier that is in the second uplink carrier set and that includes the carrier 1 in the first duration; the UE does not expect to perform transmission on any carrier in the first uplink carrier set in the first duration; or the LTE does not expect to perform transmission on any carrier in the second uplink carrier set in the first duration. For the first uplink carrier set and the second uplink carrier set, refer to the foregoing descriptions.

II. If the UE is to perform Y-port first transmission on the carrier 1, that is, the first uplink carrier is the carrier 1, 0<Y<X, and an eighteenth condition, a nineteenth condition, or a twentieth condition is satisfied, behavior of the UE is seventeenth behavior.

The eighteenth condition includes at least one of the following conditions: In the third transmission, the LTE sends Y2-port uplink transmission on a fifth uplink carrier, and an operation state of the UE at the second moment is that a quantity of radio frequency chains on the fifth uplink carrier is Y3; in the third transmission, the LTE sends Y3-port uplink transmission on a fifth uplink carrier; or the UE sends transmission using any quantity of ports on a fifth uplink carrier in the third transmission, an operation state of the LTE at the second moment is that a quantity of radio frequency chains on the fifth uplink carrier is Y3, where 0<Y<X, 0<Y2<Y3≤X, and Y3+Y>X. Y2 may exist or may not exist. For example, if X=1, Y2 does not exist. For another example, if X=2, Y2 exists and is equal to 1. The fifth uplink carrier is any one of carriers in the first carrier set other than the carrier 1.

In other words, the eighteenth condition means that there are too many radio frequency chains of one carrier in the carriers in the first uplink carrier set of the UE other than the carrier 1. As a result, Y-port uplink transmission on the carrier 1 cannot be completed without borrowing the radio frequency chain from the carrier.

The nineteenth condition includes at least one of the following conditions: During the third transmission, the UE performs Y4-port uplink transmission on a sixth uplink carrier, and performs Y5-port uplink transmission on a seventh uplink carrier; the LTE performs Y6-port uplink transmission on a sixth uplink carrier, and performs Y7-port uplink transmission on a seventh uplink carrier simultaneously during the third transmission, and an operation state of the UE at the second moment is that a quantity of radio frequency chains on the sixth uplink carrier is Y4, and a quantity of radio frequency chains on the seventh uplink carrier is Y5; during the third transmission, the UE separately performs sending with any quantity of ports on a sixth uplink carrier and a seventh uplink carrier simultaneously, and an operation state of the UE at the second moment is that quantities of radio frequency chains on the sixth uplink carrier and the seventh uplink carrier are respectively Y4 and Y5; the last two times of transmission performed the UE before the first transmission are respectively Y4-port uplink transmission performed by the LTE on a sixth uplink carrier and Y5-port uplink transmission performed by the UE on a seventh uplink carrier, but there is no switching time between the two times of sending; the operation state of the LTE at the second moment is that a quantity of radio frequency chains on a sixth uplink carrier is Y4 and a quantity of radio frequency chains on a seventh uplink carrier is Y5; the LTE sends Y6-port uplink transmission on the sixth uplink carrier in the third transmission, and an operation state of the UE at the second moment is that a quantity of radio frequency chains on the sixth uplink carrier is Y4, and a quantity of radio frequency chains on the seventh uplink carrier is Y5; the LTE sends Y4-port uplink transmission on a sixth uplink carrier in the third transmission, and an operation state of the UE at the second moment is that a quantity of radio frequency chains on a seventh uplink carrier is Y5; or the UE sends transmission using any quantity of ports on a sixth uplink carrier in the third transmission, and an operation state of the LTE at the second moment is that a quantity of radio frequency chains on the sixth uplink carrier is Y4, and a quantity of radio frequency chains on a seventh uplink carrier is Y5,
where 0<Y4<X, 0<Y5<X, Y4+Y≤X, Y5+Y≤X, Y4+Y5+Y>X, 0<Y6≤Y4, 0<Y7≤Y5, and Y6+Y7<Y4+Y5. Each of the sixth uplink carrier and the seventh uplink carrier is one of carriers in the first uplink carrier set other than the first uplink carrier (herein, the carrier 1), and the sixth uplink carrier and the seventh uplink carrier are different carriers.

In other words, the nineteenth condition means that there are too many radio frequency chains of two of the carriers in the first uplink carrier set of the UE other than the carrier 1. As a result, Y-port uplink transmission on the carrier 1 cannot be completed without borrowing the radio frequency chain from the two carriers.

The twentieth condition includes: The UE sends Y8-port uplink transmission on the carrier 1 at the second moment, and an operation state of the UE at the second moment is that the quantity of radio frequency chains on the carrier 1 is less than Y, where 0<Y8<Y<X.

In other words, the twentieth condition means that the quantity of radio frequency chains of the carrier 1 is insufficient to support the first transmission to be performed on the carrier 1.

The eighteenth condition, the nineteenth condition, and the twentieth condition are three possible cases in which a quantity of radio frequency chains of a carrier on which uplink transmission is to be sent is insufficient to support the uplink transmission.

The seventeenth behavior includes at least one of the following behavior: The UE needs the first duration (or the UE performs radio frequency chain switching in the first duration); the UE does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the LTE does not expect to perform transmission on any carrier in the second uplink carrier set in the first duration. For the first uplink carrier set and the second uplink carrier set, refer to the foregoing descriptions.

Example 13: If uplink carriers in the first uplink carrier set of the UE are respectively a carrier 1, a carrier 2, a carrier 3, and a carrier 4, a maximum of X radio frequency chains is supported on each carrier, X is greater than or equal to 2, and a total quantity of radio frequency chains of the UE is X, examples of a radio frequency chain switching manner of the UE are as follows:

If the UE is to send YY-port first transmission on the carrier 1, that is, the first uplink carrier is the carrier 1, and at least one of an eighteenth condition, a nineteenth condition, a twentieth condition, or a twenty-first condition is satisfied, behavior of the UE is eighteenth behavior.

For the eighteenth condition, the nineteenth condition, and the twentieth condition, refer to the foregoing descriptions.

The twenty-first condition includes at least one of the following:
During the third transmission, the UE performs Y9-port transmission on an eighth carrier, performs Y10-port transmission on a ninth carrier, and performs Y11-port transmission on a tenth carrier; during the third transmission, the UE performs Y12-port transmission on an eighth carrier, performs Y13-port transmission on a ninth carrier, and performs Y14-port transmission on a tenth carrier, and an operation state of the UE at the second moment is that quantities of radio frequency chains on the eighth carrier, the ninth carrier, and the tenth carrier are respectively Y9, Y10, and Y11; during the third transmission, the UE separately performs sending with any quantity of ports on three or two carriers of an eighth carrier, a ninth carrier, and a tenth carrier simultaneously, and an operation state of the LTE at the second moment is that quantities of radio frequency chains on the eighth carrier, the ninth carrier, and the tenth carrier are respectively Y9, Y10, and Y11; the last three times of transmission performed by the UE before the first transmission are respectively Y9-port uplink transmission performed by the UE on an eighth carrier, Y10-port uplink transmission performed by the LTE on a ninth carrier, and Y11-port uplink transmission performed by the UE on a tenth carrier, but there is no switching time between the three times of sending; an operation state of the LTE during the third transmission is that a quantity of radio frequency chains on an eighth carrier is Y9, a quantity of radio frequency chains on a ninth carrier simultaneously is Y10, and a quantity of radio frequency chains on a tenth carrier simultaneously is Y11; the UE sends Y12-port uplink transmission on an eighth carrier during the third transmission, and an operation state of the LTE at the second moment is that a quantity of radio frequency chains on an eighth carrier is Y9, a quantity of radio frequency chains on a ninth carrier is Y10, and a quantity of radio frequency chains on a tenth carrier is Y11; the UE sends Y9-port uplink transmission on an eighth carrier during the third transmission, and an operation state of the UE at the second moment is that a quantity of radio frequency chains on a ninth carrier is Y10, and a quantity of radio frequency chains on a tenth carrier is Y11; or the UE sends transmission using any quantity of ports on an eighth carrier during the third transmission, and an operation state of the LTE at the second moment is that a quantity of radio frequency chains on an eighth carrier is Y9, a quantity of radio frequency chains on a ninth carrier is Y10, and a quantity of radio frequency chains on a tenth carrier is Y11, where
0<Y9<X, 0<Y10<X, 0<Y11<X, a sum of Y and any one of Y9, Y10, and Y11 is less than X, a sum of Y and any two of Y9, Y10, and Y11 is less than or equal to X, and Y9+Y10+Y11+Y>X. 0<Y12≤Y9, 0<Y13≤Y10, 0<Y14≤Y11, and Y12+Y13+Y14<Y9+Y10+Y11.

Each of the eighth carrier, the ninth carrier, and the tenth carrier is any one of carriers in the first uplink carrier set other than the carrier 1, and the eighth carrier, the ninth carrier, and the tenth carrier are different carriers.

In other words, the twenty-first condition means that there are too many radio frequency chains of three of the carriers in the first uplink carrier set other than the first uplink carrier. As a result, Y-port uplink transmission on the carrier 1 cannot be completed without borrowing the radio frequency chain from the three carriers.

The eighteenth behavior includes at least one of the following: The UE needs the first duration (or the UE performs radio frequency chain switching in the first duration); the UE does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the UE does not expect to perform transmission on any carrier in the second uplink carrier set in the first duration. For the first uplink carrier set and the second uplink carrier set, refer to the foregoing descriptions.

If the LTE is to send X-port first transmission on the carrier 1, and a sixteenth condition or a seventeenth condition is satisfied, behavior of the UE is nineteenth behavior.

For the sixteenth condition and the seventeenth condition, refer to the foregoing descriptions.

The nineteenth behavior includes at least one of the following: The UE needs the first duration (or the UE performs radio frequency chain switching in the first duration); the UE does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the UE does not expect to perform transmission on any carrier in the second uplink carrier set in the first duration. For the first uplink carrier set and the second uplink carrier set, refer to the foregoing descriptions.

Example 14: Uplink carriers in the first uplink carrier set of the UE are a carrier 1, a carrier 2, a carrier 3, and a carrier 4, a set of quantities of radio frequency chains supported on each carrier is {0, 1, 2}, a total quantity of radio frequency chains of the UE is 3, a maximum quantity of radio frequency chains supported on each carrier is 2, but at most two carriers have radio frequency chains simultaneously. Therefore, when there are two radio frequency chains on a carrier, 1-port or 2-port uplink transmission may be sent on the carrier; when there is one radio frequency chain on a carrier, 1-port uplink transmission may be sent on the carrier; or when there is no radio frequency chain on a carrier, uplink transmission cannot be sent on the carrier.

In the example 14, examples of a radio frequency chain switching manner of the UE are as follows:
I. If the UE is to perform 2-port first transmission on the carrier 1, that is, the first uplink carrier is the carrier 1, and a fifth condition is satisfied, behavior of the UE is twentieth behavior.

For the fifth condition, refer to the descriptions of the fifth condition in the example 9.

The twentieth behavior includes at least one of the following behavior: The UE needs the first duration (or the UE performs radio frequency chain switching in the first duration); the UE does not expect to perform transmission on at least one carrier that is in the first uplink carrier set and that includes the carrier 1 in the first duration; the UE does not expect to perform transmission on at least one carrier that is in the second uplink carrier set and that includes the carrier 1 in the first duration; the UE does not expect to perform transmission on any carrier in the first uplink carrier set in the first duration; or the LTE does not expect to perform transmission on any carrier in the second uplink carrier set in the first duration.

In the first transmission, if the UE does not perform transmission on a carrier in the first uplink carrier set other than the carrier 1 simultaneously, further, if an operation state of the UE at the second moment is that the quantity of radio frequency chains on the carrier 1 is 1, the second uplink carrier set includes the carrier 1 and the fifth uplink carrier. In this case, the behavior of the UE may further include: The UE sends the first transmission on the carrier 1, where the operation state of the LTE in the first transmission is that the quantity of radio frequency chains on the fifth uplink carrier is 1. In other words, the fifth uplink carrier does not support 2-port uplink transmission, and a carrier other than the carrier 1 and the fifth uplink carrier does not support uplink transmission. It is clear that the UE supports 2-port uplink transmission on the carrier 1. In this case, regardless of priorities of the carrier 1 and the fifth uplink carrier, maximum and minimum quantities of radio frequency chains that are switched from the fifth uplink carrier to the carrier 1 are both 1. Because the carrier 1 supports only a maximum of two radio frequency chains, the maximum quantity of radio frequency chains that can be switched is 1, and a minimum quantity of radio frequency chains supported for current sending on the carrier 1 is also 2. Therefore, at least one radio frequency chain needs to be switched.

Alternatively, in the first transmission, if the LTE does not perform transmission on a carrier in the first uplink carrier set other than the carrier 1 simultaneously, further, if an operation state of the UE at the second moment is that the UE does not support any uplink sending on the carrier 1, or the operation state of the UE at the second moment is that a quantity of radio frequency chains on a carrier in the first uplink carrier set other than the carrier 1 and the fifth uplink carrier is 1, it is assumed that the fifth uplink carrier is the carrier 2. In this case, the carrier 3 or the carrier 4 is a carrier in the first uplink carrier set other than the carrier 1 and the fifth uplink carrier (it is assumed that the UE has one radio frequency chain on the carrier 3 at the second moment). If the priority of the carrier 2 is higher the priority of the carrier 3, the second uplink carrier set includes the carrier 1, the carrier 2, and the carrier 3, and the behavior of the UE may further include: The UE sends the first transmission on the carrier 1, where the operation state of the UE in the first transmission is that the quantity of radio frequency chains on the carrier 2 is 1. In other words, the operation state of the UE in the first transmission is that the UE does not support uplink sending on the carrier 3 and does not support uplink sending on the carrier 4. It is clear that the LTE supports 2-port uplink transmission on the carrier 1. This has an advantage that more radio frequency chains are retained on a higher-priority carrier. If the priority of the carrier 3 is higher than the priority of the carrier 2, the second uplink carrier set includes the carrier 1 and the carrier 2, and the behavior of the UE may further include: The UE sends the first transmission on the carrier 1, where the operation state of the LTE in the first transmission is that the quantity of radio frequency chains on the carrier 3 is 1. In other words, the operation state of the UE in the first transmission is that the UE does not support uplink sending on the carrier 2 and does not support uplink sending on the carrier 4. It is clear that the UE supports 2-port uplink transmission on the carrier 1. This has an advantage that more radio frequency chains are retained on a higher-priority carrier.

Alternatively, further, if the UE further performs 1-port uplink transmission on the carrier 2 (or the carrier 3 or the carrier 4) during the first transmission, the behavior of the UE may further include: The LTE sends the first transmission on the carrier 1, where the operation state of the LTE in the first transmission is that the quantity of radio frequency chains on the carrier 2 (or the carrier 3 or the carrier 4) is 1. If the fifth uplink carrier is the carrier 2 (or the carrier 3 or the carrier 4), the second uplink carrier set includes the carrier 1 and the carrier 2 (or the carrier 3 or the carrier 4). If the fifth uplink carrier is not the carrier 2 (or the carrier 3 or the carrier 4), the second uplink carrier set includes the carrier 1, the carrier 2 (or the carrier 3 or the carrier 4), and the fifth uplink carrier.

II. If the UE is to perform 2-port first transmission on the carrier 1, that is, the first uplink carrier is the carrier 1, and a sixth condition is satisfied, behavior of the UE is twenty-first behavior.

For the sixth condition, refer to the descriptions of the sixth condition in the example 9.

The twenty-first behavior includes at least one of the following behavior: The UE needs the first duration (or the UE performs radio frequency chain switching in the first duration); the UE at least does not expect to perform transmission on at least one carrier that is in the first uplink carrier set and that includes the carrier 1 in the first duration; the LTE does not expect to perform transmission on at least one carrier that is in the second uplink carrier set and that includes the carrier 1 in the first duration; the UE does not expect to perform transmission on any carrier in the first uplink carrier set in the first duration; or the LTE does not expect to perform transmission on any carrier in the second uplink carrier set in the first duration.

Further, if the UE does not perform uplink transmission on the carrier 2, the carrier 3, and the carrier 4 during the first transmission, and an operation state of the LTE at the second moment is that the quantity of radio frequency chains on the carrier 2 is 2, the second uplink carrier set includes the carrier 1 and the carrier 2. In this case, the behavior of the UE may further include: The UE sends the first transmission on the carrier 1, where the operation state of the UE in the first transmission is that the quantity of radio frequency chains on the carrier 2 is 1. That is, in the first transmission, the LTE does not support 2-port uplink transmission on the carrier 2, and does not support uplink transmission on the carrier 3 and the carrier 4. It is clear that the LTE supports 2-port uplink transmission on the carrier 1. In this case, regardless of priorities of the carrier 1 and the carrier 2, maximum and minimum quantities of radio frequency chains that are switched from the carrier 2 to the carrier 1 are both 1. Because the carrier 1 supports only a maximum of two radio frequency chains, the maximum quantity of radio frequency chains that can be switched is 1, and a minimum quantity of radio frequency chains supported for current sending on the carrier 1 is also 2. Therefore, at least one radio frequency chain needs to be switched.

Alternatively, further, during the first transmission, if the LTE further performs 1-port uplink transmission on a carrier (it is assumed that the carrier is the carrier 2) in the first carrier set other than the carrier 1, the behavior of the UE may further include: The UE sends the first transmission on the carrier 1, where the operation state of the LTE in the first transmission is that the quantity of radio frequency chains on the carrier 2 is 1. If the operation state of the UE at the second moment is that the quantity of radio frequency chains on the carrier 2 is 2, the second uplink carrier set includes the carrier 1 and the carrier 2. If the operation state of the UE at the second moment is that a quantity of radio frequency chains on a carrier (it assumed that the carrier is the carrier 3) in the first carrier set other than the carrier 1 and the carrier 2 is 2, the second uplink carrier set includes the carrier 1, the carrier 2, and the carrier 3.

III. The UE is to send 1-port first transmission on the carrier 1, that is, the first uplink carrier is the carrier 1, and a seventh condition is satisfied, behavior of the UE is twenty-second behavior.

For the seventh condition, refer to the descriptions of the seventh condition in the example 9.

The twenty-second behavior includes at least one of the following behavior: The UE needs the first duration (or the UE performs radio frequency chain switching in the first duration); the UE does not expect to perform transmission on at least one carrier that is in the first uplink carrier set and that includes the carrier 1 in the first duration; the LTE does not expect to perform transmission on at least one carrier that is in the second uplink carrier set and that includes the carrier 1 in the first duration; the UE does not expect to perform transmission on any carrier in the first uplink carrier set in the first duration; or the LTE does not expect to perform transmission on any carrier in the second uplink carrier set in the first duration. The first uplink carrier set includes the carrier 1, the carrier 2, the carrier 3, and the carrier 4.

The following provides descriptions by using an example in which in the seventh condition, the sixth uplink carrier is the carrier 2 and the seventh uplink carrier is the carrier 3.

Based on priorities of the carrier 1, the carrier 2, the carrier 3, and the carrier 4, quantities of switched radio frequency chains of the UE may be different. The following cases may be included:
1. If the priority of the carrier 1 is higher than the priority of the carrier 1, and the priority of the carrier 2 is higher than the priority of the carrier 3, the second uplink carrier set includes the carrier 1 and the carrier 3. The behavior of the UE may further include: The UE sends the first transmission on the carrier 1, where the operation state of the UE during the first transmission is that the quantity of radio frequency chains on the carrier 1 is 1, and the quantity of radio frequency chains on the carrier 2 is 2. That is, the UE does not support 2-port uplink transmission on the carrier 1, and does not support uplink transmission on the carrier 3 and the carrier 4. This has an advantage that more radio frequency chains are switched to a highest-priority carri er.
2. If the priority of the carrier 1 is higher than the priority of the carrier 3, and the priority of the carrier 3 is higher than the priority of the carrier 2, the second uplink carrier set includes the carrier 1 and the carrier 2. The behavior of the UE may further include: The UE sends the first transmission on the carrier 1. During the first transmission, the operation state of the UE is that there are two radio frequency chains on the carrier 1, and there is one radio frequency chain on the carrier 3. That is, the UE does not support 2-port uplink transmission on the carrier 3, and does not support uplink sending on the carrier 2 and the carrier 4. This has an advantage that more radio frequency chains are switched to a highest-priority carrier.
3. If the priority of the carrier 2 is the highest among the priorities of the carrier 1, the carrier 2, and the carrier 3, the second uplink carrier set includes the carrier 1 and the carrier 3. The behavior of the UE may further include: The UE sends the first transmission on the carrier 1, where the operation state of the UE in the first transmission is that the quantity of radio frequency chains on the carrier 2 is 2. That is, in the first transmission, the UE supports 2-port uplink transmission on the carrier 2, and supports 1-port uplink transmission on the carrier 1. That is, in the first transmission, the UE does not support 2-port uplink transmission on the carrier 1, and does not support uplink transmission on the carrier 3 and the carrier 4. This has an advantage that more radio frequency chains are retained on a higher-priority carrier.
4. If the priority of the carrier 3 is higher than the priority of the carrier 1, and the priority of the carrier 1 is higher than the priority of the carrier 2, the second uplink carrier set includes the carrier 1 and the carrier 2. The behavior of the UE may further include: The UE sends the first transmission on the carrier 1, where the operation state of the LTE in the first transmission is that the quantity of radio frequency chains on the carrier 3 is 1, and the quantity of radio frequency chains on the carrier 1 is 2. That is, in the first transmission, the UE does not support 2-port uplink transmission on the carrier 3, and does not support uplink transmission on the carrier 2 and the carrier 4. This has an advantage that more radio frequency chains are retained on a higher-priority carrier.
5. If the UE further performs 1-port uplink transmission on the carrier 2 during the first transmission, the second uplink carrier set is the carrier 1, the carrier 2, and the carrier 3. In this case, in the first transmission, the operation state of the UE is that there is one radio frequency chain on the carrier 1, there are two radio frequency chains on the carrier 2, and there is no radio frequency chain on the carrier 3 and the carrier 4.
6. If the UE further performs 1-port uplink transmission on the carrier 3 during the first transmission, and the priority of the carrier 1 is higher than the priority of the carrier 3, the second uplink carrier set is the carrier 1, the carrier 2, and the carrier 3. In this case, in the first transmission, the operation state of the UE is that there are two radio frequency chains on the carrier 1, there is no radio frequency chain on the carrier 2 and the carrier 4, and there is one radio frequency chain on the carrier 3. If the UE further performs 1-port uplink transmission on the carrier 3 during the first transmission, and the priority of the carrier 3 is higher than the priority of the carrier 1, the second uplink carrier set is the carrier 1, the carrier 2, and the carrier 3. In this case, in the first transmission, the UE has one radio frequency chain on the carrier 1, has no radio frequency chain on the carrier 2 and the carrier 4, and has two radio frequency chains on the carrier 3.
7. If the UE further performs 1-port uplink transmission on the carrier 4 during first transmission, the second uplink carrier set is the carrier 1, the carrier 2, the carrier 3, and the carrier 4. If the priority of the carrier 1 is higher than the priority of the carrier 4, in the first transmission, the operation state of the UE is that there are two radio frequency chains on the carrier 1, there is no radio frequency chain on the carrier 2 and the carrier 3, and there is one radio frequency chain on the carrier 4. If the priority of the carrier 4 is higher than the priority of the carrier 1, in the first transmission, the operation state of the UE is that there is one radio frequency chain on the carrier 1, there is no radio frequency chain on the carrier 2 and the carrier 3, and there are two radio frequency chains on the carrier 4.

It should be understood that, in the foregoing method embodiments, a process in which the UE determines an uplink carrier from which the radio frequency chain is to be switched and an operation state of the UE on the first uplink carrier in the first transmission is described, and the base station determines an uplink carrier from which the UE is to be switched and determines an operation state of the LTE on the first uplink carrier in the first transmission.

It should be understood that "previous uplink transmission/sending of the UE" in this application is uplink transmission performed by the LTE last time, or is the last uplink transmission before uplink transmission to be performed by the UE. In addition, a previous state of the UE and a previous uplink transmission state of the LTE may be replaced with a state of the LTE at the second moment.

It should be further understood that, unless otherwise specified, the "other carrier" in this application is a carrier in the first carrier set other than the first uplink carrier.

Based on a same technical concept, an embodiment of this application further provides a communication apparatus, configured to implement the foregoing functions implemented by the LTE and/or the base station. The apparatus may include the structure shown in FIG. 5 and/or FIG. 6. The transceiver module 520 shown in FIG. 5 and/or the transceiver unit 610 shown in FIG. 6 may perform the sending and/or receiving actions performed by the UE or the base station in the method embodiments of this application, for example, the sending action such as sending of the first information, and the receiving action such as receiving of the first information. The processing module 510 shown in FIG. 5 and/or the processing unit 620 shown in FIG. 6 may perform the processing actions performed by the UE or the base station in the method embodiments of this application. The processing actions are, for example, determining, by the UE or the base station, the quantity M of ports supported by the LTE for uplink transmission on the first uplink carrier, or determining the third uplink carrier and/or the fourth uplink carrier.

An embodiment of this application provides a communication system. The communication system may include the UE and the base station in the foregoing embodiments. Optionally, the communication system may include the architecture shown in FIG. 1. The communication system may be configured to implement the steps in the communication method shown in embodiments of this application.

An embodiment of this application further provides a computer-readable storage medium. The computer-readable storage medium is configured to store a computer program. When the computer program is executed by a computer, the computer may implement a procedure related to the network device and/or the terminal provided in the foregoing method embodiments.

An embodiment of this application further provides a computer program product. The computer program product is configured to store a computer program. When the computer program is executed by a computer, the computer may implement a procedure related to the network device and/or the terminal provided in the foregoing method embodiments.

An embodiment of this application further provides a chip or a chip system (or a circuit). The chip may include a processor, and the processor may be configured to invoke a program or instructions in a memory, to perform a procedure related to the network device and/or the terminal provided in the foregoing method embodiments. The chip system may include components such as the chip, the memory, or a transceiver.

It may be understood that the processor in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any conventional processor, or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device and/or a terminal. Certainly, the processor and the storage medium may exist in the network device or the terminal device as discrete components.

All or some of the foregoing embodiments may be implemented by using software, hardware, firmware, or any combination thereof. When software is used for implementing the embodiments, all or some of the embodiments may be implemented in a form of a computer program product. The computer program product includes one or more computer programs and instructions. When the computer programs or instructions are loaded and executed on a computer, all or some of the procedures or functions according to embodiments of this application are generated. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

A person skilled in the art may understand that various numbers such as "first" and "second" in this application are merely used for differentiation for ease of description, and are not used for limiting the scope of embodiments of this application. A specific value of a number or an index, a specific value of an amount, and a position in this application are merely used as examples, but are not unique representation forms, and are not used for limiting the scope of embodiments of this application. Various numbers such as "first" and "second" in this application are also merely used for differentiation for ease of description, and are not used for limiting the scope of embodiments of this application.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects. The term "at least one" in this application may represent "one" and "two or more". For example, at least one of A, B, and C may indicate the following seven cases: Only A exists, only B exists, only C exists, both A and B exist, both A and C exist, both C and B exist, and A, B, and C exist.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media that include computer-usable program code. The storage medium includes but is not limited to a disk memory, a CD-ROM, an optical memory, and the like.

This application is described with reference to the flowcharts and/or block diagrams of the method, the device, the system, and the computer program product according to this application. It should be understood that computer program instructions may be used for implementing each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can guide the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of the claims of this application and their equivalent technologies.

## Claims

1. A communication method, comprising:
obtaining first information, wherein the first information is used for scheduling a terminal apparatus for performing first transmission on a first uplink carrier, the first transmission is N-port transmission, and N is a positive integer; and
performing the first transmission on the first uplink carrier, wherein when the first transmission is performed, a quantity of ports supported by the UE for uplink transmission on the first uplink carrier is M, M is determined based on second information of at least one uplink carrier of the terminal apparatus, the at least one uplink carrier comprises the first uplink carrier, and M≥N, wherein
the second information comprises at least one of priority indication information, a bandwidth, a frequency, a path loss, a slot length, a number, an identifier of a cell corresponding to the uplink carrier, information indicating whether the cell corresponding to the uplink carrier is a special cell, information indicating that the cell corresponding to the uplink carrier is a physical uplink control channel secondary cell, information indicating that the cell corresponding to the uplink carrier is a secondary cell other than the physical uplink control channel secondary cell, information indicating whether the cell corresponding to the uplink carrier is a secondary cell, or information indicating whether a position of uplink radio frequency switching time is configured on the uplink carri er.

2. The method according to claim 1, wherein
M is further determined based on a quantity of ports through which the terminal apparatus performs second transmission, and the second transmission is transmission performed by the terminal apparatus on at least one uplink carrier other than the first uplink carrier.

3. The method according to claim 1, wherein
the second information comprises the number; and when a number of the first uplink carrier is 1 and a number of a second uplink carrier of the terminal apparatus is greater than 1, M is a maximum quantity of ports supported by the terminal apparatus for uplink transmission on the first uplink carrier;
the second information comprises the information indicating whether the cell corresponding to the uplink carrier is the special cell and the information indicating whether the cell corresponding to the uplink carrier is the secondary cell; and when a cell corresponding to the first uplink carrier is a special cell, and a cell corresponding to a second uplink carrier of the terminal apparatus is a secondary cell, M is a maximum quantity of ports supported by the terminal apparatus for uplink transmission on the first uplink carrier;
the second information comprises the information indicating that the cell corresponding to the uplink carrier is the physical uplink control channel secondary cell and the information indicating that the cell corresponding to the uplink carrier is the secondary cell other than the physical uplink control channel secondary cell; and when a cell corresponding to the first uplink carrier is a physical uplink control channel secondary cell, and a cell corresponding to a second uplink carrier of the terminal apparatus is a secondary cell other than the physical uplink control channel secondary cell, M is a maximum quantity of ports supported by the terminal apparatus for uplink transmission on the first uplink carrier;
the second information comprises the priority indication information; and when a priority indicated by priority indication information of the first uplink carrier is higher than a priority indicated by priority indication information of a second uplink carrier, M is a maximum quantity of ports supported by the terminal apparatus for uplink transmission on the first uplink carrier; or
the second information comprises the information indicating whether the position of the uplink radio frequency switching time is configured on the uplink carrier; and when the first uplink carrier is a carrier for which no position of uplink radio frequency switching time is configured, M is a maximum quantity of ports supported by the terminal apparatus for uplink transmission on the first uplink carrier, wherein
uplink carriers that are of the terminal apparatus and that support uplink radio frequency chain switching are the first uplink carrier and the second uplink carrier, the terminal apparatus does not perform transmission on the first uplink carrier and the second uplink carrier simultaneously, and the maximum quantity of ports supported by the terminal apparatus for uplink transmission on the first uplink carrier is the same as a maximum quantity of ports supported by the terminal apparatus for uplink transmission on the second uplink carrier.

4. The method according to claim 2, wherein the second information comprises the number; and when a number of the first uplink carrier is 1 and a number of a second uplink carrier of the terminal apparatus is greater than 1, M is further determined based on the quantity of ports for the second transmission;
the second information comprises the information indicating whether the cell corresponding to the uplink carrier is the special cell and the information indicating whether the cell corresponding to the uplink carrier is the secondary cell; and when a cell corresponding to the first uplink carrier is a special cell, and a cell corresponding to a second uplink carrier of the terminal apparatus is a secondary cell, M is further determined based on the quantity of ports for the second transmission;
the second information comprises the information indicating that the cell corresponding to the uplink carrier is the physical uplink control channel secondary cell and the information indicating that the cell corresponding to the uplink carrier is the secondary cell other than the physical uplink control channel secondary cell; and when a cell corresponding to the first uplink carrier is a physical uplink control channel secondary cell, and a cell corresponding to a second uplink carrier of the terminal apparatus is a secondary cell other than the physical uplink control channel secondary cell, M is a maximum quantity of ports supported by the terminal apparatus for uplink transmission on the first uplink carrier;
the second information comprises the priority indication information; and when a priority indicated by priority indication information of the first uplink carrier is higher than a priority indicated by priority indication information of a second uplink carrier, M is further determined based on the quantity of ports for the second transmission; or
the second information comprises the information indicating whether the position of the uplink radio frequency switching time is configured on the uplink carrier; and when the first uplink carrier is a carrier for which no position of uplink radio frequency switching time is configured, M is further determined based on the quantity of ports for the second transmission, wherein
uplink carriers that are of the terminal apparatus and that support uplink radio frequency chain switching are the first uplink carrier and the second uplink carrier, the second transmission is transmission performed by the terminal apparatus on the second uplink carrier, a time domain resource for the second transmission overlaps a time domain resource for the first transmission, and a maximum quantity of ports supported by the terminal apparatus for uplink transmission on the first uplink carrier is the same as a maximum quantity of ports supported by the terminal apparatus for uplink transmission on the second uplink carrier.

5. The method according to claim 1, wherein the second information comprises the number; and when a number of a second uplink carrier of the terminal apparatus is 1 and a number of the first uplink carrier is greater than 1, M is equal to N;
the second information comprises the information indicating whether the cell corresponding to the uplink carrier is the special cell and the information indicating whether the cell corresponding to the uplink carrier is the secondary cell; and when a cell corresponding to the first uplink carrier is a secondary cell, and a cell corresponding to a second uplink carrier of the terminal apparatus is a special cell, M is equal to N;
the second information comprises the information indicating that the cell corresponding to the uplink carrier is the physical uplink control channel secondary cell and the information indicating that the cell corresponding to the uplink carrier is the secondary cell other than the physical uplink control channel secondary cell; and when a cell corresponding to the first uplink carrier is a secondary cell other than a physical uplink control channel secondary cell, and a cell corresponding to a second uplink carrier of the terminal apparatus is the physical uplink control channel secondary cell, M is equal to N;
the second information comprises the priority indication information; and when a priority indicated by priority indication information of the first uplink carrier is not higher than a priority indicated by priority indication information of a second uplink carrier, M is equal to N; or
the second information comprises the information indicating whether the position of the uplink radio frequency switching time is configured on the uplink carrier; and when the first uplink carrier is a carrier for which a position of uplink radio frequency switching time is configured, M is equal to N, wherein
uplink carriers that are of the terminal apparatus and that support uplink radio frequency chain switching are the first uplink carrier and the second uplink carrier, and a maximum quantity of ports supported by the terminal apparatus for uplink transmission on the first uplink carrier is the same as a maximum quantity of ports supported by the terminal apparatus for uplink transmission on the second uplink carrier.

6. A communication method, comprising:
obtaining first information, wherein the first information is used for scheduling a terminal apparatus for performing first transmission on a first uplink carrier, the first transmission is N-port transmission, and N is a positive integer; and
performing the first transmission on the first uplink carrier, wherein when the first transmission is performed, a quantity of ports that are supported by the terminal apparatus for uplink transmission on the first uplink carrier is N, and the terminal apparatus does not support N-port transmission on the first uplink carrier before a start moment of first duration, wherein the first duration is an uplink switching gap, the start moment of the first duration is between a moment at which the terminal apparatus obtains the first information and a moment at which the first transmission is started, and is after a first moment, the first moment is an end moment of the last uplink transmission before the first transmission is performed, and an end moment of the first duration is before the moment at which the first transmission is started.

7. The method according to claim 1 or 6, wherein a quantity of uplink carriers that are of the terminal apparatus and that support uplink radio frequency chain switching is greater than 2, and the method further comprises:
determining a third uplink carrier of the terminal apparatus based on the second information, wherein a quantity of radio frequency chains that are allowed to be switched on the third uplink carrier is not zero; and
skipping performing uplink sending on the first uplink carrier and the third uplink carrier in the first duration, wherein the first duration is the uplink switching gap.

8. The method according to claim 7, wherein the uplink carriers that are of the terminal apparatus and that support uplink radio frequency chain switching further comprise a fourth uplink carrier; and
when K+L<P is satisfied, the method further comprises:
skipping, by the terminal apparatus, performing uplink sending on the fourth uplink carrier in the first duration, wherein
P is a minimum quantity of radio frequency chains required by the terminal apparatus for performing first transmission, K≥M, L is the quantity of radio frequency chains that are allowed to be switched on the third uplink carrier, K is a quantity of ports supported by the terminal apparatus for uplink transmission on the first uplink carrier at a second moment, and the second moment comprises any moment between the first moment and the start moment of the first duration.

9. The method according to claim 8, wherein
when a first condition is satisfied, and the first transmission is performed, the quantity of ports supported by the terminal apparatus for uplink transmission on the first uplink carrier is M; and
the first condition comprises:
M1+N>Z, wherein
M1 is a total quantity of radio frequency chains of uplink carriers of the terminal apparatus in a first uplink carrier set other than the first uplink carrier at the second moment, Z is a total quantity of radio frequency chains of the terminal apparatus, and the first uplink carrier set is a set of carriers supporting the uplink radio frequency chain switching.

10. The method according to claim 8, wherein when a first condition is satisfied, and the first transmission is performed, the quantity of ports supported by the terminal apparatus for uplink transmission on the first uplink carrier is M; and
the first condition comprises:
M2<N, wherein M2 is a quantity of ports supported by the terminal apparatus for uplink transmission on the first uplink carrier at the second moment, and M2 is a positive integer.

11. A communication method, comprising:
sending first information, wherein the first information is used for scheduling a terminal apparatus for performing first transmission on a first uplink carrier, the first transmission is N-port transmission, and N is a positive integer; and
determining M based on second information of at least one uplink carrier of the terminal apparatus, wherein M is a quantity of ports that are supported by the terminal apparatus for uplink transmission on the first uplink carrier when the first transmission is performed, and M≥N, wherein
the second information comprises at least one of priority indication information, a bandwidth, a frequency, a path loss, a slot length, an identifier of a cell corresponding to the uplink carrier, a number of the uplink carrier, information indicating whether the cell corresponding to the uplink carrier is a special cell, information indicating that the cell corresponding to the uplink carrier is a physical uplink control channel secondary cell, information indicating that the cell corresponding to the uplink carrier is a secondary cell other than the physical uplink control channel secondary cell, information indicating whether the cell corresponding to the uplink carrier is a secondary cell, or information indicating whether a position of uplink radio frequency switching time is configured on the uplink carrier.

12. The method according to claim 11, wherein
M is further determined based on a quantity of ports through which the terminal apparatus performs second transmission, and the second transmission is transmission performed by the terminal apparatus on at least one uplink carrier other than the first uplink carrier.

13. The method according to claim 11, wherein
the second information comprises the number; and when a number of the first uplink carrier is 1 and a number of a second uplink carrier of the terminal apparatus is greater than 1, M is a maximum quantity of ports supported by the terminal apparatus for uplink transmission on the first uplink carrier;
the second information comprises the information indicating whether the cell corresponding to the uplink carrier is the special cell and the information indicating whether the cell corresponding to the uplink carrier is the secondary cell; and when a cell corresponding to the first uplink carrier is a special cell, and a cell corresponding to a second uplink carrier of the terminal apparatus is a secondary cell, M is a maximum quantity of ports supported by the terminal apparatus for uplink transmission on the first uplink carrier;
the second information comprises the information indicating that the cell corresponding to the uplink carrier is the physical uplink control channel secondary cell and the information indicating that the cell corresponding to the uplink carrier is the secondary cell other than the physical uplink control channel secondary cell; and when a cell corresponding to the first uplink carrier is a physical uplink control channel secondary cell, and a cell corresponding to a second uplink carrier of the terminal apparatus is a secondary cell other than the physical uplink control channel secondary cell, M is a maximum quantity of ports supported by the terminal apparatus for uplink transmission on the first uplink carrier;
the second information comprises the priority indication information; and when a priority indicated by priority indication information of the first uplink carrier is higher than a priority indicated by priority indication information of a second uplink carrier, M is a maximum quantity of ports supported by the terminal apparatus for uplink transmission on the first uplink carrier; or
the second information comprises the information indicating whether the position of the uplink radio frequency switching time is configured on the uplink carrier; and when the first uplink carrier is a carrier for which no position of uplink radio frequency switching time is configured, M is a maximum quantity of ports supported by the terminal apparatus for uplink transmission on the first uplink carrier, wherein
uplink carriers that are of the terminal apparatus and that support uplink radio frequency chain switching are the first uplink carrier and the second uplink carrier, the terminal apparatus does not perform transmission on the first uplink carrier and the second uplink carrier simultaneously, and the maximum quantity of ports supported by the terminal apparatus for uplink transmission on the first uplink carrier is the same as a maximum quantity of ports supported by the terminal apparatus for uplink transmission on the second uplink carrier.

14. The method according to claim 12, wherein the second information comprises the number; and when a number of the first uplink carrier is 1 and a number of a second uplink carrier of the terminal apparatus is greater than 1, M is further determined based on the quantity of ports for the second transmission;
the second information comprises the information indicating whether the cell corresponding to the uplink carrier is the special cell and the information indicating whether the cell corresponding to the uplink carrier is the secondary cell; and when a cell corresponding to the first uplink carrier is a special cell, and a cell corresponding to a second uplink carrier of the terminal apparatus is a secondary cell, M is further determined based on the quantity of ports for the second transmission;
the second information comprises the information indicating that the cell corresponding to the uplink carrier is the physical uplink control channel secondary cell and the information indicating that the cell corresponding to the uplink carrier is the secondary cell other than the physical uplink control channel secondary cell; and when a cell corresponding to the first uplink carrier is a physical uplink control channel secondary cell, and a cell corresponding to a second uplink carrier of the terminal apparatus is a secondary cell other than the physical uplink control channel secondary cell, M is a maximum quantity of ports supported by the terminal apparatus for uplink transmission on the first uplink carrier;
the second information comprises the priority indication information; and when a priority indicated by priority indication information of the first uplink carrier is higher than a priority indicated by priority indication information of a second uplink carrier, M is further determined based on the quantity of ports for the second transmission; or
the second information comprises the information indicating whether the position of the uplink radio frequency switching time is configured on the uplink carrier; and when the first uplink carrier is a carrier for which no position of uplink radio frequency switching time is configured, M is further determined based on the quantity of ports for the second transmission, wherein
uplink carriers that are of the terminal apparatus and that support uplink radio frequency chain switching are the first uplink carrier and the second uplink carrier, the second transmission is transmission performed by the terminal apparatus on the second uplink carrier, a time domain resource for the second transmission overlaps a time domain resource for the first transmission, and a maximum quantity of ports supported by the terminal apparatus for uplink transmission on the first uplink carrier is the same as a maximum quantity of ports supported by the terminal apparatus for uplink transmission on the second uplink carrier.

15. The method according to claim 11, wherein the second information comprises the number; and when a number of a second uplink carrier of the terminal apparatus is 1 and a number of the first uplink carrier is greater than 1, M is equal to N;
the second information comprises the information indicating whether the cell corresponding to the uplink carrier is the special cell and the information indicating whether the cell corresponding to the uplink carrier is the secondary cell; and when a cell corresponding to the first uplink carrier is a secondary cell, and a cell corresponding to a second uplink carrier of the terminal apparatus is a special cell, M is equal to N;
the second information comprises the information indicating that the cell corresponding to the uplink carrier is the physical uplink control channel secondary cell and the information indicating that the cell corresponding to the uplink carrier is the secondary cell other than the physical uplink control channel secondary cell; and when a cell corresponding to the first uplink carrier is a secondary cell other than a physical uplink control channel secondary cell, and a cell corresponding to a second uplink carrier of the terminal apparatus is the physical uplink control channel secondary cell, M is equal to N;
the second information comprises the priority indication information; and when a priority indicated by priority indication information of the first uplink carrier is not higher than a priority indicated by priority indication information of a second uplink carrier, M is equal to N; or
the second information comprises the information indicating whether the position of the uplink radio frequency switching time is configured on the uplink carrier; and when the first uplink carrier is a carrier for which a position of uplink radio frequency switching time is configured, M is equal to N, wherein
uplink carriers that are of the terminal apparatus and that support uplink radio frequency chain switching are the first uplink carrier and the second uplink carrier, and a maximum quantity of ports supported by the terminal apparatus for uplink transmission on the first uplink carrier is the same as a maximum quantity of ports supported by the terminal apparatus for uplink transmission on the second uplink carrier.

16. A communication method, comprising:
sending first information, wherein the first information is used for scheduling a terminal apparatus for performing first transmission on a first uplink carrier, the first transmission is N-port transmission, and N is a positive integer, wherein
when the first transmission is performed, determining that a quantity of ports that are supported by the terminal apparatus for uplink transmission on the first uplink carrier is N, and the terminal apparatus does not support N-port transmission on the first uplink carrier before a start moment of first duration, wherein the first duration is an uplink switching gap, the start moment of the first duration is between a moment at which the terminal apparatus obtains the first information and a moment at which the first transmission is started, and is after a first moment, the first moment is an end moment of the last uplink transmission before the first transmission is performed, and an end moment of the first duration is before the moment at which the first transmission is started.

17. The method according to claim 11 or 16, wherein a quantity of uplink carriers that are of the terminal apparatus and that support uplink radio frequency chain switching is greater than 2, and the method further comprises:
determining a third uplink carrier of the terminal apparatus based on the second information, wherein a quantity of radio frequency chains that are allowed to be switched on the third uplink carrier is not zero; and
determining that the terminal apparatus does not perform uplink sending on the first uplink carrier and the third uplink carrier in the first duration, wherein the first duration is the uplink switching gap.

18. The method according to claim 17, wherein the uplink carriers that are of the terminal apparatus and that support uplink radio frequency chain switching further comprise a fourth uplink carrier; and
when K+L<P is satisfied, the method further comprises:
determining that the terminal apparatus does not perform uplink sending on the fourth uplink carrier in the first duration, wherein
P is a minimum quantity of radio frequency chains required by the terminal apparatus for performing first transmission, K≥M, L is the quantity of radio frequency chains that are allowed to be switched on the third uplink carrier, K is a quantity of ports supported by the terminal apparatus for uplink transmission on the first uplink carrier at a second moment, and the second moment comprises any moment between the first moment and the start moment of the first duration.

19. The method according to claim 18, wherein the method further comprises:
when a first condition is satisfied, determining, when the first transmission is performed, that the quantity of ports supported by the terminal apparatus for uplink transmission on the first uplink carrier is M; and
the first condition comprises:
M1+N>Z, wherein
M1 is a total quantity of radio frequency chains of uplink carriers of the terminal apparatus in a first uplink carrier set other than the first uplink carrier at the second moment, Z is a total quantity of radio frequency chains of the terminal apparatus, and the first uplink carrier set is a set of carriers supporting the uplink radio frequency chain switching.

20. The method according to claim 18, wherein the method further comprises:
when a first condition is satisfied, determining, when the first transmission is performed, that the quantity of ports supported by the terminal apparatus for uplink transmission on the first uplink carrier is M; and
the first condition comprises:
M2<N, wherein M2 is a quantity of ports supported by the terminal apparatus for uplink transmission on the first uplink carrier at the second moment, and M2 is a positive integer.

21. A communication apparatus, comprising a module configured to perform the method according to any one of claims 1 to 10.

22. A communication apparatus, comprising a module configured to perform the method according to any one of claims 11 to 20.

23. A communication apparatus, comprising a processor and an interface circuit, wherein the interface circuit is configured to: receive a signal from another communication apparatus different from the communication apparatus and transmit the signal to the processor; or send a signal from the processor to another communication apparatus different from the communication apparatus, and the processor is configured to implement, by using a logic circuit or executing code instructions, the method according to any one of claims 1 to 10.

24. A communication apparatus, comprising a processor and an interface circuit, wherein the interface circuit is configured to: receive a signal from another communication apparatus different from the communication apparatus and transmit the signal to the processor; or send a signal from the processor to another communication apparatus different from the communication apparatus, and the processor is configured to implement, by using a logic circuit or executing code instructions, the method according to any one of claims 11 to 20.

25. A computer-readable storage medium, storing a computer program, wherein when the computer program is run on a communication apparatus, the communication apparatus is enabled to perform the method according to any one of claims 1 to 10.

26. A computer-readable storage medium, storing a computer program, wherein when the computer program is run on a communication apparatus, the communication apparatus is enabled to perform the method according to any one of claims 11 to 20.

27. A communication system, comprising the communication apparatuses according to claims 21 and 22, or the communication apparatuses according to claims 23 and 24.
